# EUROPÄISCHE PATENTSCHRIFT

(11) **EP 0 917 555 B1**
(45) Veröffentlichungstag und Bekanntmachung des Hinweises auf die Patenterteilung: **21.11.2001**
(21) Anmeldenummer: 97935542.7
(22) Anmeldetag: 24.07.1997
(51) Int. Cl.: C09K 9/02, G02F 1/15

(54) **ELEKTROCHROMES SYSTEM**
ELECTROCHROME SYSTEM
SYSTEME ELECTROCHROME

(30) Priorität: 06.08.1996 DE 19631729
(43) Veröffentlichungstag der Anmeldung: 26.05.1999
(73) Patentinhaber: BAYER AG, 51368 Leverkusen (DE)
(72) Erfinder: BERNETH, Horst, D-51373 Leverkusen (DE); CLAUSSEN, Uwe, D-51379 Leverkusen (DE); HAARER, Dietrich, D-95448 Bayreuth (DE); SCHALLER, Jochen, D-93049 Regensburg (DE); SIMMERER, Jürgen, D-91056 Erlangen (DE)
(86) Internationale Anmeldenummer: EP9703999
(87) Internationale Veröffentlichungsnummer: WO9805737

(56) Entgegenhaltungen:
- EP-A- 0 240 226
- EP-A- 0 613 039
- WO-A-97/30134
- WO-A-97/30135
- GB-A- 2 021 277
- PATENT ABSTRACTS OF JAPAN vol. 013, no. 554 (P-973), 11.Dezember 1989 & JP 01 230026 A (AGENCY OF IND SCIENCE & TECHNOL), 13.September 1989,

## Beschreibung

Die vorliegende Erfindung betrifft ein elektrochromes System, eine elektrochrome Flüssigkeit enthaltend dieses elektrochrome System sowie eine elektrochrome Vorrichtung.

Elektrochrome Vorrichtungen, die ein elektrochromes System enthalten, sind bereits bekannt.

Solche Vorrichtungen enthalten als elektrochromes System üblicherweise Paare von Redoxsubstanzen, die in einem inerten Lösungsmittel gelöst sind. Zusätzlich können Leitsalze, Lichtstabilisatoren und Substanzen, die die Viskosität beeinflussen, enthalten sein.

Als Paar von Redoxsubstanzen wird je eine reduzierbare und eine oxidierbare Substanz verwendet. Beide sind farblos oder nur schwach gefärbt. Unter Einfluß einer elektrischen Spannung wird die eine Substanz reduziert, die andere oxidiert, wobei wenigstens eine farbig wird. Nach Abschalten der Spannung bilden sich die beiden ursprünglichen Redoxsubstanzen wieder zurück, wobei Entfärbung bzw. Farbaufhellung auftritt.

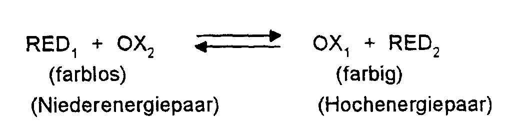

Aus US-4.902.108 ist bekannt, daß solche Paare von Redoxsubstanzen geeignet sind, bei denen die reduzierbare Substanz wenigstens zwei chemisch reversible Reduktionswellen im cyclischen Voltammogramm und die oxidierbare Substanz entsprechend wenigstens zwei chemisch reversible Oxidationswellen besitzt.

Elektrochrome Vorrichtungen können auf vielfältige Weise Anwendung finden. So können sie z.B. als Automobilrückspiegel ausgebildet sein, der bei Nachtfahrt durch Anlegen einer Spannung abgedunkelt werden kann und somit das Blenden durch Scheinwerfer fremder Fahrzeuge verhindert wird (vgl. z.B. US-3.280.701, US-4.902.108, EP-A-0.435.689). Weiterhin können solche Vorrichtungen auch in Fensterscheiben oder Autosonnendächern eingesetzt werden, wo sie nach Anlegen einer Spannung das Sonnenlicht abdunkeln. Letztlich kann mit solchen Vorrichtungen auch eine Matrixanzeige aufgebaut werden zur bildlichen Darstellung von Informationen wie Buchstaben, Zahlen und Zeichen.

Elektrochrome Vorrichtungen bestehen normalerweise aus einem Paar Glas- oder Kunststoffscheiben, von denen im Falle eines Autospiegels eine verspiegelt ist. Eine Seite dieser Scheiben ist mit einer lichtdurchlässigen, elektrisch leitfähigen Schicht, z.B. Indium-Zinn-Oxid (ITO), beschichtet. Aus diesen Scheiben wird nun eine Zelle aufgebaut, indem sie mit ihrer einander zugewandten elektrisch leitfähig beschichteten Seite mit einem ringförmigen oder rechteckigen Dichtungsring verbunden, vorzugsweise verklebt werden. Der Dichtungsring stellt einen gleichmäßigen Abstand zwischen den Scheiben her, beispielsweise 0,1 bis 0,5 mm. In diese Zelle wird nun über eine Öffnung eine elektrochrome Lösung eingefüllt und die Zelle dicht verschlossen. Über die ITO-Schicht lassen sich die beiden Scheiben getrennt kontaktieren.

Bei den aus dem Stand der Technik bekannten elektrochromen Systemen sind solche Paare von Redoxsubstanzen enthalten, die nach Reduktion bzw. Oxidation farbige Radikale, Kationradikale oder Anionradikale bilden, die chemisch reaktiv sind. Wie beispielsweise aus Topics in Current Chemistry, Vol. 92, S. 1-44 (1980) bekannt ist, können solche Radikal(ionen) empfindlich gegenüber Elektrophilen oder Nukleophilen oder auch Radikalen sein. Es muß deshalb zum Erreichen einer hohen Stabilität einer elektrochromen Vorrichtung, die ein solches elektrochromes System enthält, das mehrere tausend Schaltcyclen überstehen soll, dafür gesorgt werden, daß das verwendete Lösungsmittel absolut frei von Elektrophilen, z.B. Protonen, Nukleophilen und Sauerstoff ist. Weiterhin muß dafür gesorgt werden, daß sich solche reaktiven Spezies nicht durch elektrochemische Prozesse an den Elektroden während des Betriebs der elektrochromen Vorrichtung bilden.

Die gemäß obiger Reaktionsgleichung formulierte Rückreaktion zu RED₁ und OX₂ erfolgt auch während des Betriebs der elektrochromen Vorrichtung kontinuierlich abseits der Elektroden innerhalb des Lösungsvolumens. Wegen der beschriebenen Gefahren von Abbaureaktionen der Radikal-(ionen) durch Elektrophile, Nukleophile oder Radikale ist es für die Langzeitstabilität des Displays wichtig, daß die Rückreaktion gemäß obiger Reaktionsgleichung möglichst rasch und ohne Nebenreaktionen erfolgen kann.

Es wurde gefunden, daß in einem elektrochromen System, welches mindestens ein über eine Brücke kovalent miteinander verknüpftes Red-Ox-Paar enthält sowie weiterhin wenigstens eine elektrochrome Substanz enthält, die nach Reduktion oder Oxidation nicht in eine radikal(ion)ische Spezies übergeht, sondern in reduzierter oder oxidierter Form eine geschlossene Elektronenschale besitzt, die Elektronenübertragung erleichtert wird und Nebenreaktionen vermieden werden können.

Die vorliegende Erfindung betrifft demnach ein elektrochromes System, enthaltend oxidierbare Substanzen RED₁, die durch Elektronenabgabe an einer Anode und reduzierbare Substanzen OX₂, die durch Elektronenaufnahme an einer Kathode, jeweils unter Zunahme der Extinktion im sichtbaren Bereich des Spektrums von einer schwach gefärbten oder farblosen Form in eine gefärbte Form OX₁ bzw. RED₂ übergehen, wobei nach Ladungsausgleich jeweils die schwach gefärbte bzw. farblose Form zurückgebildet wird, dadurch gekennzeichnet, daß es sich bei den Substanzen RED₁ und OX₂ um eine Mischung handelt, enthaltend mindestens ein Paar RED₁' / OX₂', welches über eine Brücke kovalent miteinander verknüpft ist und mindestens eine Substanz RED₁" oder OX₂" bei der die wechselseitige Umwandlung von oxidierter und reduzierter Form durch Bruch bzw. Bildung einer σ-Bindung erfolgt.

Die Reduktions- und Oxidationsprozesse in dem erfindungsgemäßen elektrochromen System erfolgen im allgemeinen durch Elektronenaufnahme bzw. -abgabe an einer Kathode bzw. Anode, wobei zwischen den Elektroden vorzugsweise eine Potentialdifferenz von 0,3 bis 3 V herrscht. Nach Abschalten des elektrischen Potentials erfolgt im allgemeinen spontan ein Ladungsausgleich zwischen den Substanzen RED₂' und OX₁', RED₂" und OX₁' bzw. RED₂' und OX₁", wobei eine Entfärbung bzw. Farbaufhellung eintritt. Ein solcher Ladungsausgleich erfolgt auch bereits während des Stromflusses im Innern des Elektrolytvolumens.

Das erfindungsgemäße elektrochrome System enthält bevorzugt
a) als Paar RED₁' / OX₂' mindestens eine elektrochrome Substanz der Formel (I) 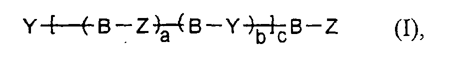 worin
   - Y und Z: unabhängig voneinander für einen Rest OX₂' oder RED₁' stehen, wobei aber mindestens ein Y für OX₂' und mindestens ein Z für RED₁' steht,
   wobei
   OX₂' für den Rest eines reversibel elektrochemisch reduzierbaren Redoxsystems steht, und
   RED₁' für den Rest eines reversibel elektrochemisch oxidierbaren Redoxsystems steht,
   - B: für ein Brückenglied steht,
   - c: für eine ganze Zahl von 0 bis 5 steht, und
   - a und b: unabhängig voneinander für eine ganze Zahl von 0 bis 5 stehen, vorzugsweise für eine ganze Zahl von 0 bis 3 stehen, und
b) mindestens eine reduzierbare Substanz OX₂", die eine cyclische organische Verbindung darstellt, die nach Aufnahme von 2 Elektronen unter Bruch einer der σ-Bindungen des Ringes in eine ringoffene Verbindung übergeht und die durch Abgabe von 2 Elektronen wieder in die cyclische Ausgangsverbindung übergeht.

Die Ringöffnung kann beispielsweise so erfolgen, daß direkt zwei Elektronen aufgenommen werden, was zum Bindungsbruch führt. Es ist aber auch möglich, daß zunächst ein Elektron aufgenommen wird, worauf Ringöffnung erfolgt, der sich dann weitere Reaktionen wie die Aufnahme eines weiteren Elektrons und/oder eines Protons und/oder die Abspaltung einer anionischen Abgangsgruppe anschließen können, wobei insgesamt aber genau 2 Elektronen aufgenommen werden. Diese Ringöffnung führt zu einem veränderten π-Elektronensystem, das eine entsprechende längerwellige und/oder extinktionsstärkere Lichtabsorption aufweist.

Der Ringschluß kann entsprechend durch gleichzeitige Abgabe von zwei Elektronen erfolgen, oder sukzessive durch Abgabe von zunächst einem Elektron und gegebenenfalls eines weiteren Elektrons und/oder das gegebenenfalls angelagerte Proton wird wieder abgespalten und/oder die abgespaltene anionische Abgangsgruppe wieder angelagert, wobei insgesamt aber genau 2 Elektronen abgegeben werden.

Bevorzugt enthält das elektrochrome System als Paar RED₁' / OX₂' mindestens eine elektrochrome Substanz der Formel (I), worin

Y für OX₂' und Z für RED₁' steht und Y und Z in ihrer Reihenfolge alternieren.

Insbesondere bevorzugt enthält das erfindungsgemäße elektrochrome System als Paar RED₁' / OX₂' mindestens eine elektrochrome Substanz der Formeln

OX₂'-B-RED₁' (Ia),

OX₂'-B-RED₁'-B-OX₂' (Ib),

RED₁'-B-OX₂'-B-RED₁' (Ic),

oder

OX₂'-(B-RED₁'-B-OX₂')_{d}-B-RED₁' (Id),

worin
- OX₂', RED₁' und B: die oben angegebene Bedeutung haben, und
- d: für eine ganze Zahl von 1 bis 5 steht.

Ganz besonders bevorzugt enthält das erfindungsgemäße elektrochrome System als Paar RED₂' / OX₁' mindestens eine elektrochrome Substanz der Formein (Ia)-(Id),
worin
- OX₂': für den Rest einer kathodisch reduzierbaren Substanz steht, die im cyclischen Voltammogramm, aufgenommen in einem inerten Lösungsmittel bei Raumtemperatur, wenigstens zwei chemisch reversible Reduktionswellen zeigt, wobei die erste dieser Reduktionswellen zu einer Zunahme der Extinktion bei wenigstens einer Wellenlänge im sichtbaren Bereich des elektromagnetischen Spektrums führt,
- RED₁': für den Rest der anodisch reversibel oxidierbaren Substanz steht, die im cyclischen Voltammogramm, aufgenommen in einem inerten Lösungsmittel bei Raumtemperatur, wenigstens zwei chemisch reversible Oxidationswellen zeigt, wobei die erste dieser Oxidationswellen zu einer Zunahme der Extinktion bei wenigstens einer Wellenlänge im sichtbaren Bereich des elektromagnetischen Spektrums führt, und
- B: für ein Brückenglied steht.

Bei der in dem erfindungsgemäßen elektrochromen System weiterhin enthaltenen reduzierbaren Substanz OX₂", die reversibel unter Bruch einer Ring-σ-Bindung in die entsprechende ringoffene Substanz RED₂" übergeht handelt es sich insbesondere um eine Verbindung aus der Reihe der Tetrazoliumsalze, Benzo- oder Naphthotriazoliumsalze, Cyclopropane und [1.1.0]Bicyclobutane. Durch Elektronenaufnahme und Bindungsbruch werden daraus dann die entsprechenden gefärbten Verbindungen aus der Reihe der Formazane, Amino-azo-benzole, Amino-azo-naphthaline, 1,3-Dimethylenpropane und 1,3-Dimethylencyclobutane gebildet.

Bei den Tetrazoliumsalzen, Naphthotriazoliumsalzen, Cyclopropanen und [1.1.0]-Bicyclobutanen handelt es sich bevorzugt um solche Verbindungen der Formeln (CI) bis (CIV) 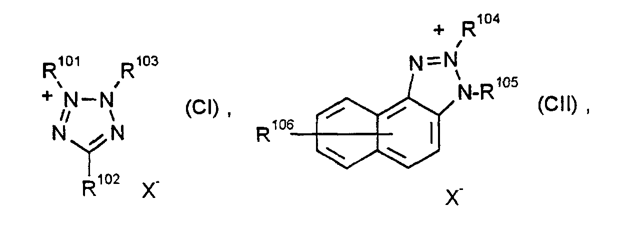 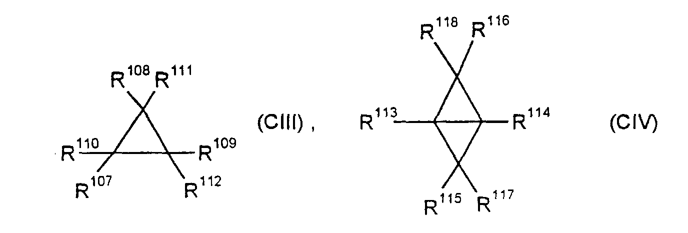 worin
- R¹⁰¹ bis R¹⁰⁵: unabhängig voneinander C₆- bis C₁₀-Aryl oder einen gegebenenfalls benzanellierten aromatischen oder quasiaromatischen fünf- oder sechsgliedrigen heterocyclischen Ring bedeuten,
- R¹⁰⁷, R¹⁰⁹, R¹¹³ und R¹¹⁴: unabhängig voneinander einen Rest der Formeln (CV) bis (CVII) 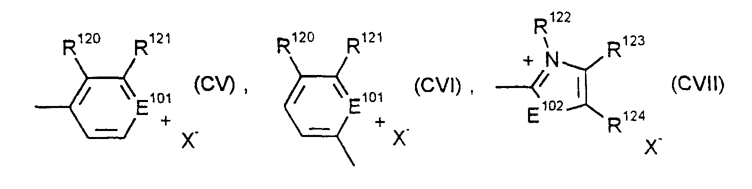 bedeuten,
- R¹⁰⁸, R¹¹⁵ und R¹¹⁶: unabhängig voneinander C₆- bis C₁₀-Aryl oder einen Rest der Formeln (CV) bis (CVII) bedeuten,
- R¹¹⁰ bis R¹¹², R¹¹⁷ und R¹¹⁸: unabhängig voneinander Wasserstoff, C₁- bis C₄-Alkyl, Halogen oder Cyano bedeuten,
- E¹⁰¹ und E¹⁰²: unabhängig voneinander O, S oder N-R¹¹⁹ bedeuten,
- R¹¹⁹ und R¹²²: unabhängig voneinander C₁- bis C₁₈-Alkyl, C₂- bis C₈-Alkenyl, C₄- bis C₇-Cycloalkyl, C₇- bis C₁₅-Aralkyl oder C6- bis C₁₀-Aryl bedeuten,
- R¹⁰⁶, R¹²⁰, R¹²¹, R¹²³ und R¹²⁴: unabhängig voneinander Wasserstoff, C₁- bis C₄-Alkyl, C₁- bis C₄-Alkoxy, Halogen, Cyano, Nitro oder C₁- bis C₄-Alkoxycarbonyl bedeuten oder
- R¹²⁰ und R¹²¹ bzw. R¹²³ und R¹²⁴: gemeinsam eine -CH=CH-CH=CH-Brücke bilden,
und
- X⁻: ein unter den Bedingungen redox-inertes, farbloses Anion bedeutet.

Besonders bevorzugt ist ein erfindungsgemäßes elektrochromes System, welches als Paar RED₁' / OX₂' mindestens eine Substanz der Formel (Ia)-(Id) enthält, worin
- OX₂': für einen Rest der Formeln 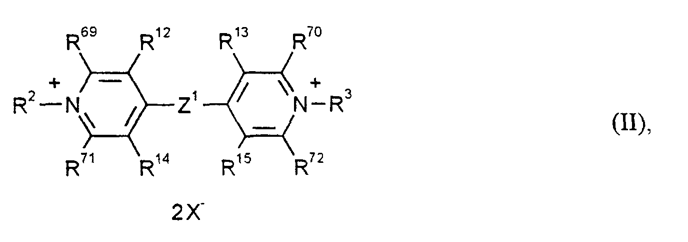 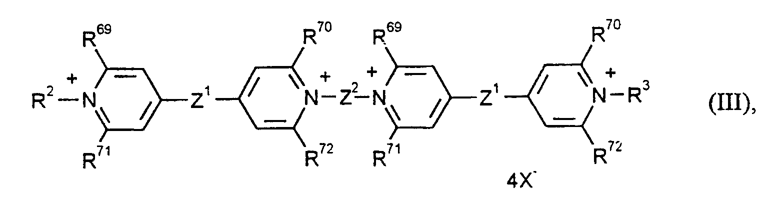 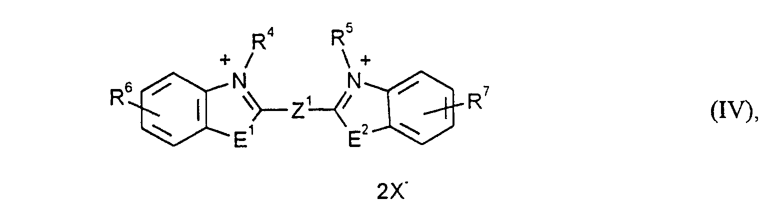 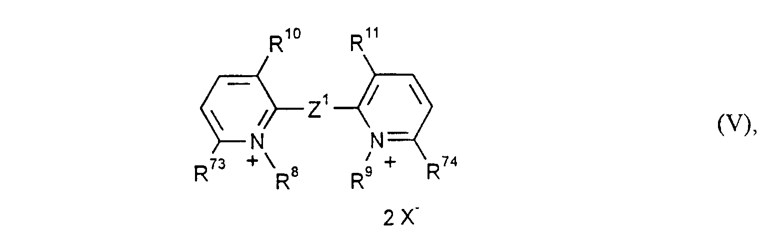 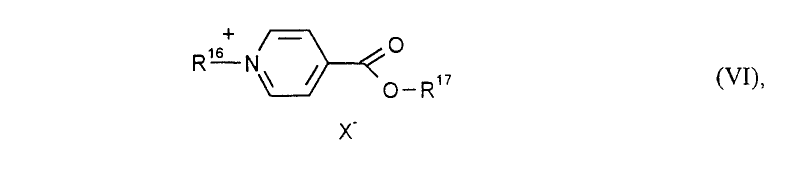 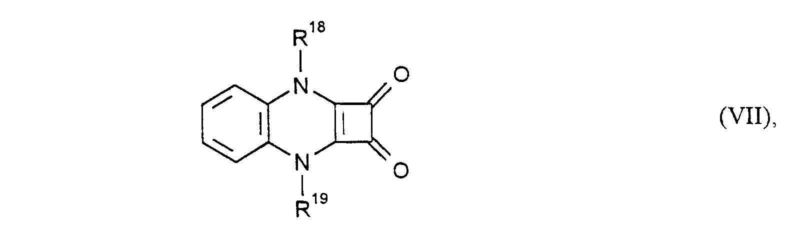 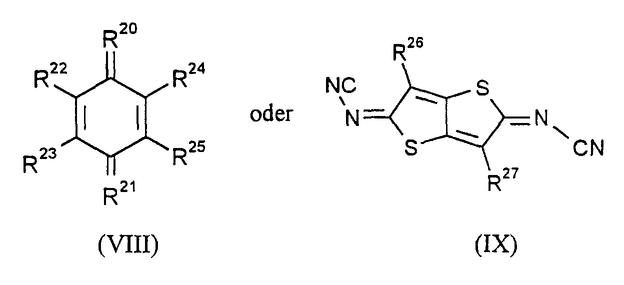
steht, wobei
- R² bis R⁵, R⁸, R⁹, R¹⁶ bis R¹⁹: unabhängig voneinander C₁- bis C₁₈-Alkyl, C₂- bis C₁₂-Alkenyl, C₃- bis C₇-Cycloalkyl, C₇- bis C₁₅-Aralkyl oder C₆- bis C₁₀-Aryl bedeuten oder
- R⁴ und R⁵ oder R⁸ und R⁹: gemeinsam eine -(CH₂)₂- oder -(CH)₃-Brücke bilden,
- R⁶, R⁷ und R²² bis R²⁵: unabhängig voneinander Wasserstoff, C₁- bis C₄-Alkyl, C₁- bis C₄-Alkoxy, Halogen, Cyano, Nitro oder C₁- bis C₄-Alkoxycarbonyl bedeuten oder
- R²² und R²³ und/oder R²⁴ und R²⁵: eine -CH=CH-CH=CH-Brucke bilden,
- R¹⁰ und R¹¹; R¹² und R¹³; R¹⁴ und R¹⁵: unabhängig voneinander Wasserstoff oder paarweise eine -(CH₂)₂-, -(CH₂)₃- oder -CH=CH-Brücke bedeuten,
- R²⁰ und R²¹: unabhängig voneinander O, N-CN, C(CN)₂ oder N-C₆- bis C₁₀-Aryl bedeuten,
- R²⁶: Wasserstoff, C₁- bis C₄-Alkyl, C₁- bis C₄-Alkoxy, Halogen, Cyano, Nitro, C₁- bis C₄-Alkoxycarbonyl oder C₆- bis C₁₀-Aryl bedeutet,
- R⁶⁹ bis R⁷⁴: unabhängig voneinander Wasserstoff oder C₁- bis C₆-Alkyl bedeuten, oder
- R⁶⁹; R¹² und/oder R⁷⁰; R¹³: jeweils gemeinsam eine -CH=CH-CH=CH-Brücke bilden,
- E¹ und E²: unabhängig voneinander O, S, NR¹ oder C(CH₃)₂ bedeuten oder
- E¹ und E²: gemeinsam eine -N-(CH₂)₂-N-Brücke bilden,
- R¹: C₁- bis C₁₈-Alkyl, C₂- bis C₁₂-Alkenyl, C₄- bis C₇-Cycloalkyl, C₇- bis C₁₅-Aralkyl, C₆- bis C₁₀-Aryl bedeutet,
- Z¹: eine direkte Bindung -CH=CH-, -C(CH₃)=CH-, -C(CN)=CH-, -CCl=CCl-, -C(OH)=CH-, -CCl=CH-, -C≡C-, -CH=N-N=CH-, -C(CH₃)=N-N=C(CH₃)- oder -CCl=N-N=CCl- bedeutet,
- Z²: -(CH₂)ᵣ- oder -CH₂-C₆H₄-CH₂- bedeutet,
- r: eine ganze Zahl von 1 bis 10 bedeutet,
- X⁻: ein unter den Bedingungen redox-inertes Anion bedeutet,
wobei die Bindung zum Brückenglied B über einen der Reste R²-R¹⁹, R²²-R²⁷ oder im Falle, daß E¹ oder E² für NR¹ stehen über R¹ erfolgt und die genannten Reste dann für eine direkte Bindung stehen,
- RED₁': für einen der folgenden Reste 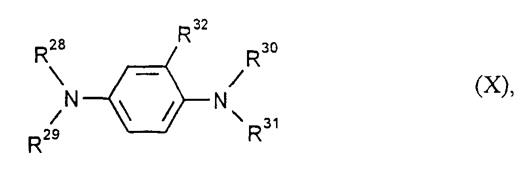 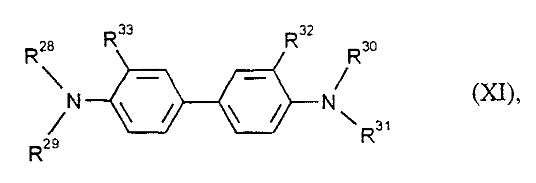 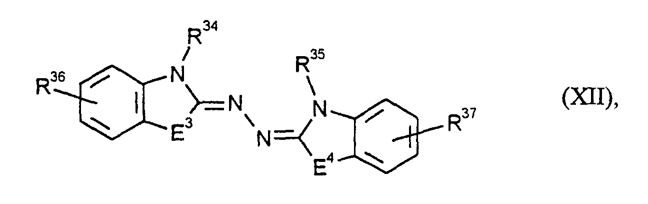 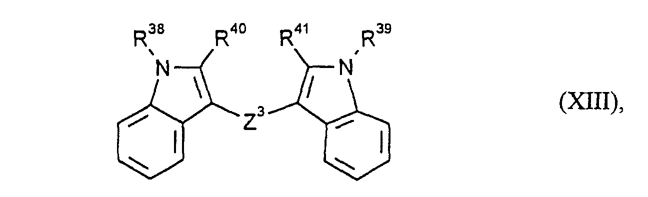 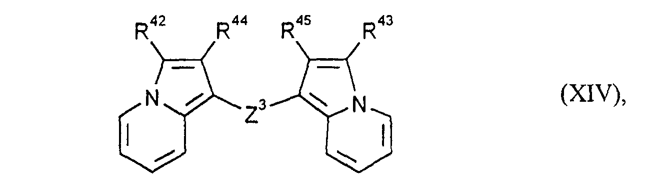 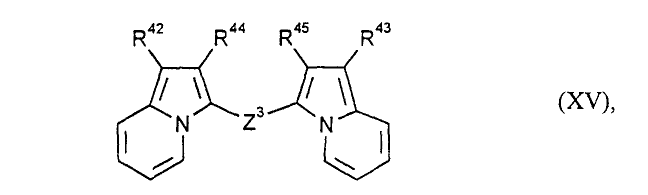 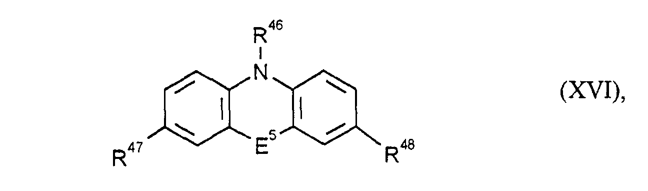 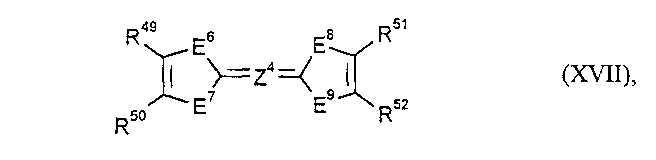 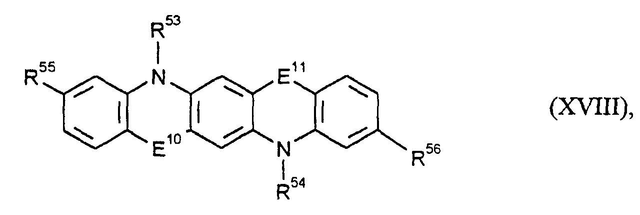 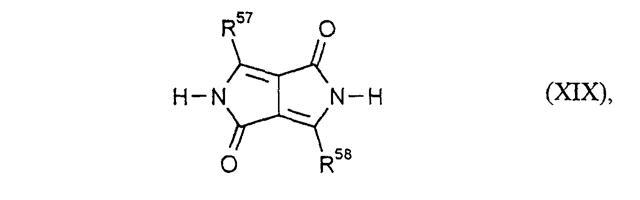 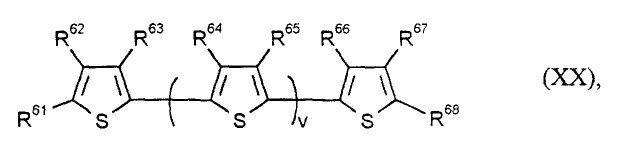
steht, worin
- R²⁸ bis R³¹, R³⁴, R³⁵, R³⁸, R³⁹, R⁴⁶, R⁵³ und R⁵⁴: unabhängig voneinander C₁- bis C₁₈-Alkyl, C₂- bis C₁₂-Alkenyl, C₃- bis C₇-Cycloalkyl, C₇- bis C₁₅-Aralkyl oder C₆- bis C₁₀-Aryl bedeuten,
- R³², R³³, R³⁶, R³⁷, R⁴⁰, R⁴¹, R⁴² bis R⁴⁵, R⁴⁷, R⁴⁸, R⁴⁹ bis R⁵² und R⁵⁵ bis R⁵⁷: unabhängig voneinander Wasserstoff, C₁- bis C₄-Alkyl, C₁- bis C₄-Alkoxy, Halogen, Cyano, Nitro, C₁- bis C₄-Alkoxycarbonyl oder C₆- bis C₁₀-Aryl bedeuten oder
- R⁴⁹ und R⁵⁰ und/oder R⁵¹ und R⁵²: eine -(CH₂)₃-, -(CH₂)₄-, -(CH₂)₅- oder -CH=CH-CH=CH-Brücke bilden,
- Z³: eine direkte Bindung, eine -CH=CH- oder -N=N-Brücke bedeutet,
- =Z⁴=: eine direkte Doppelbindung, eine =CH-CH= oder =N-N=-Brücke bedeutet,
- E³ bis E⁵, E¹⁰ und E¹¹: unabhängig voneinander O, S, NR⁵⁹ oder C(CH₃)₂ bedeuten, oder
- E³ und E⁴: unabhängig voneinander -CH=CH- bedeuten,
- E⁶ bis E⁹: unabhängig voneinander S, Se oder NR⁵⁹ bedeuten,
- R⁵⁹: C₁- bis C₁₂-Alkyl, C₂- bis C₈-Alkenyl, C₃- bis C₇-Cycloalkyl, C₇- bis C₁₅-Aralkyl oder C₆- bis C₁₀-Aryl bedeutet,
- R⁶¹ bis R⁶⁸: unabhängig voneinander Wasserstoff, C₁- bis C₆-Alkyl, C₁- bis C₄-Alkoxy, Cyano, C₁- bis C₄-Alkoxycarbonyl oder C₆- bis C₁₀-Aryl bedeuten, oder
- R⁶¹; R⁶² und R⁶⁷; R⁶⁸: unabhängig voneinander gemeinsam eine -(CH₂)₃-, -(CH₂)₄- oder -CH=CH-CH=CH-Brücke bilden,
- v: eine ganze Zahl zwischen 0 und 10 bedeutet,
wobei die Bindung zum Brückenglied B über einen der Reste R²⁸-R⁵⁸, R⁶¹, R⁶², R⁶⁷, R⁶⁸ oder im Falle, daß einer der Reste E³-E¹¹ für NR⁵⁹ steht über R⁵⁹ erfolgt und die genannten Reste dann für eine direkte Bindung stehen, und
- B: für ein Brückenglied der Formeln -(CH₂)ₙ- oder -[Y¹ₛ(CH₂)ₘ-Y²]ₒ-(CH₂)ₚ-Y³_{q}- steht, welche jeweils gegebenenfalls durch C₁- bis C₄-Alkoxy, Halogen oder Phenyl substituiert sind,
- Y¹ bis Y³: unabhängig voneinander für O, S, NR⁶⁰, COO, CONH, NHCONH, Cyclopentandiyl, Cyclohexandiyl, Phenylen oder Naphthylen stehen,
- R⁶⁰: C₁- bis C₆-Alkyl, C₂- bis C₆-Alkenyl, C₄- bis C₇-Cycloalkyl, C₇- bis C₁₅-Aralkyl oder C₆- bis C₁₀-Aryl bedeutet,
- n: eine ganze Zahl von 1 bis 12 bedeutet,
- m und p: unabhängig voneinander eine ganze Zahl von 0 bis 8 bedeuten,
- o: eine ganze Zahl von 0 bis 6 bedeutet und
- q und s: unabhängig voneinander 0 oder 1 bedeuten.

Bevorzugt sind solche Verbindungen OX₂" der Formeln (CI) bis (CIV), worin
- R¹⁰¹ bis R¹⁰⁵: unabhängig voneinander für einen Rest der Formeln 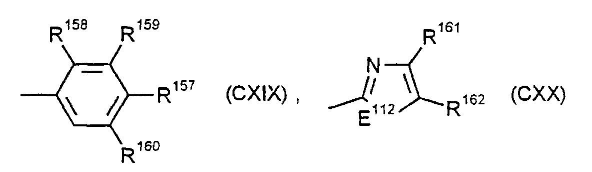 stehen, worin
R¹⁵⁷ bis R¹⁶² unabhängig voneinander Wasserstoff, C₁- bis C₆-Alkyl, C₁- bis C₆-Alkoxy, Halogen, Cyano, Nitro, Di-(C₁- bis C₄-alkyl)amino, Tri-(C₁- bis C₄-alkyl)ammonium, C₁- bis C₄-Alkoxycarbonyl oder COOH bedeuten oder
paarweise nebeneinander stehende Reste gemeinsam eine -O-(CH₂)₂₋₃-, -O-(CH₂)₁₋₂-O-, NR¹⁶³-(CH₂)₂₋₃- oder -NR¹⁶³-(CH₂)₁₋₂-O-Brücke bilden oder
R¹⁵⁸ und R¹⁵⁹ und/oder R¹⁶¹ und R¹⁶² eine -CH=CH-CH=CH-Brücke bilden, die durch Methyl, Methoxy oder Chlor substituiert sein kann,
R¹⁶³ Wasserstoff oder C₁- bis C₄-Alkyl bedeutet,
E¹¹² O, S oder NR⁶⁴ bedeutet,
R¹⁶⁴ Wasserstoff, C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeutet,
- R¹⁰⁷, R¹⁹⁰, R¹¹³ und R¹¹⁴: einen Rest der Formel (CV) bedeuten und paarweise gleich sind,
- R¹⁰⁸, R¹¹⁵ und R¹¹⁶: Phenyl oder einen Rest der Formel (CV) bedeuten und R¹¹⁵ und R¹¹⁶ gleich sind,
- R¹⁰⁶, R¹¹⁰ und R¹¹²: Wasserstoff bedeuten,
- R¹¹¹: Wasserstoff, Methyl, Cyano oder Chlor bedeutet,
- R¹¹⁷ und R¹¹⁸: Wasserstoff oder Methyl bedeuten und gleich sind,
- E¹⁰¹: O oder NR¹¹⁹ bedeutet,
- R¹¹⁹: C₁- bis C₁₂-Alkyl, C₂- bis C₄-Alkenyl, Cyclohexyl, Benzyl oder Phenyl bedeutet,
- R¹²⁰ und R¹²¹: für Wasserstoff stehen oder gemeinsam eine -CH=CH-CH=CH-Brücke bilden,
und
- X⁻: ein unter den Bedingungen redox-inertes, farbloses Anion bedeutet.

Ganz besonders bevorzugt ist ein erfindungsgemäßes elektrochromes System, welches
a) als Paar RED₁' / OX₂' mindestens eine Substanz der Formel (Ia)-(Id) enthält,
   worin
   - OX₂': für einen Rest der Formeln (II), (III), (IV) oder (V) steht,
   wobei
   - R², R³, R⁴, R⁵, R⁸ und R⁹: unabhängig voneinander für C₁- bis C₁₂-Alkyl, C₂- bis C₈-Alkenyl, C₅- bis C₇-Cycloalkyl, C₇- bis C₁₅-Aralkyl oder C₆- bis C₁₀-Aryl stehen,
   - R⁶ und R⁷: unabhängig voneinander für Wasserstoff, Methyl, Ethyl, Methoxy, Ethoxy, Fluor, Chlor, Brom, Cyano, Nitro, Methoxycarbonyl oder Ethoxycarbonyl stehen,
   - R¹⁰, R¹¹; R¹², R¹³ und R¹⁴, R¹⁵: unabhängig voneinander für Wasserstoff oder, falls Z¹ eine direkte Bindung bedeutet, jeweils gemeinsam für eine -(CH₂)₂-, -(CH₂)₃- oder -CH=CH-Brücke stehen,
   oder
   - R⁴, R⁵ und R⁸, R⁹: unabhängig voneinander paarweise gemeinsam für -(CH₂)₂- oder -(CH₃)₃-Brücke stehen, falls Z¹ eine direkte Bindung bedeutet,
   - R⁶⁹ bis R⁷⁴: unabhängig voneinander Wasserstoff oder C₁- bis C₄-Alkyl bedeuten,
   - E¹ und E²: gleich sind und für O, S, NR¹ oder C(CH₃)₂ stehen oder gemeinsam eine -N-(CH₂)₂-N-Brücke bilden,
   - R¹: für C₁- bis C₁₂-Alkyl, C₂- bis C₄-Alkenyl, C₅- bis C₇-Cycloalkyl, C₇- bis C₁₅-Aralkyl oder C₆- bis C₁₀-Aryl steht,
   - Z¹: für eine direkte Bindung, -CH=CH-, -C(CH₃)=CH-, -C(CN)=CH-, -C≡C- oder -CH=N-N=CH- steht,
   - Z²: für -(CH)ᵣ- oder -CH₂-C₆H₄-CH₂- steht,
   - r: für eine ganze Zahl zwischen 1 und 6 steht,
   - X⁻: für ein unter den Bedingungen redox-inertes, farbloses Anion steht,
   wobei die Bindung zum Brückenglied B über einen der Reste R²-R¹¹ oder im Falle, daß E¹ oder E² für NR¹ steht über R¹ erfolgt und die genannten Reste dann für eine direkte Bindung stehen,
   - RED₁': für einen Rest der Formeln (X), (XI), (XII), (XIII), (XVI), (XVII), (XVIII) oder (XX) steht,
   wobei
   - R²⁸, R²⁹ bis R³¹, R³⁴, R³⁵, R³⁸, R³⁹, R⁴⁶, R⁵³ und R⁵⁴: unabhängig voneinander C₁- bis C₁₂-Alkyl, C₂- bis C₈-Alkenyl, C₅- bis C₇-Cycloalkyl, C₇- bis C₁₅-Aralkyl oder C₆- bis C₁₀-Aryl bedeuten,
   - R³², R³³, R³⁶, R³⁷, R⁴⁰, R⁴¹, R⁴⁷, R⁴⁸, R⁴⁹, R⁵⁰ bis R⁵², R⁵⁵ und R⁵⁶: unabhängig voneinander Wasserstoff, Methyl, Ethyl, Methoxy, Ethoxy, Fluor, Chlor, Brom, Cyan, Nitro, Methoxycarbonyl, Ethoxycarbonyl oder Phenyl bedeuten,
   - Z³: eine direkte Bindung, eine -CH=CH- oder -N=N-Brücke bedeutet,
   - =Z⁴=: eine direkte Doppelbindung, eine =CH-CH= oder =N-N=-Brücke bedeutet,
   - E³ bis E⁵, E¹⁰ und E¹¹: unabhängig voneinander O, S, NR⁵⁹ oder C(CH₃)₂ bedeuten, E³ und E⁴ aber die gleiche Bedeutung haben,
   - E⁶ bis E⁹: untereinander gleich sind und S, Se oder NR⁵⁹ bedeuten oder
   - E⁶: für NR⁵⁹ steht, wobei R⁵⁹ eine direkte Bindung zur Brücke B bedeutet und
   - E⁷ bis E⁹: die oben angegebene Bedeutung besitzen, aber untereinander nicht gleich sein müssen,
   - R⁵⁹: C₁- bis C₁₂-Alkyl, C₂- bis C₈-Alkenyl, C₅- bis C₇-Cycloalkyl, C₇- bis C₁₅-Aralkyl oder C₆- bis C₁₀-Aryl bedeutet,
   - R⁶¹, R⁶² und R⁶⁷, R⁶⁸: unabhängig voneinander für Wasserstoff, C₁- bis C₄-Alkyl, Methoxycarbonyl, Ethoxycarbonyl oder Phenyl oder paarweise gemeinsam für eine -(CH₂)₃- oder -(CH₂)₄-Brücke stehen,
   - R⁶³ bis R⁶⁶: für Wasserstoff stehen und
   - v: für eine ganze Zahl von 1 bis 6 steht,
   wobei die Bindung zum Brückenglied B über einen der Reste R²⁸-R⁴¹, R⁴⁶-R⁵⁶, R⁶¹, R⁶², R⁶⁷, R⁶⁸ oder im Falle, daß einer der Reste E³-E¹¹ für NR⁵⁹ steht, über R⁵⁹ erfolgt und die genannten Reste dann für eine direkte Bindung stehen,
   - B: für ein Brückenglied der Formeln -(CH₂)ₙ-, -(CH₂)ₘ-O-(CH₂)ₚ-,
   -(CH)ₘ-NR⁶⁰-(CH₂)ₚ-, -(CH₂)ₘ-C₆H₄-(CH₂)ₚ-, -[O-(CH₂)ₚ]ₒ-O-,
   -[NR⁶⁰-(CH₂)ₚ]ₒ-NR⁶⁰-, -[C₆H₄-(CH₂)ₚ]ₒ-C₆H₄-,
   -(CH₂)ₘ-OCO-C₆H₄-COO-(CH₂)ₚ-,
   -(CH₂)ₘ-NHCO-C₆H₄-CONH-(CH₂)ₚ-,
   -(CH₂)ₘ-NHCONH-C₆H₄-NHCONH-(CH₂)ₚ-,
   -(CH₂)ₘ-OCO-(CH₂)ₜ-COO-(CH₂)-,
   -(CH₂)ₘ-NHCO-(CH₂)ₜ-CONH-(CH)ₚ-,
   -(CH₂)ₘ-NHCONH-(CH₂)ₜ-NHCONH-(CH₂)ₚ- steht,
   - R⁶⁰: für Methyl, Ethyl, Benzyl oder Phenyl steht,
   - n: für eine ganze Zahl von 1 bis 10 steht,
   - m und p: unabhängig voneinander für eine ganze Zahl von 0 bis 4 stehen,
   - o: für eine ganze Zahl von 0 bis 2 steht und
   - t: für eine ganze Zahl von 1 bis 6 steht und
b) als Substanz OX₂" mindestens ein Tetrazoliumsalz der Formel (CI) enthält,
   worin
   - R¹⁰¹ und R¹⁰²: einem Rest der Formel (CXIX) entsprechen,
   - R¹⁰³: einem Rest der Formel (CXX) entspricht,
   - R¹⁵⁷, R¹⁵⁹ und R¹⁶⁰: unabhängig voneinander Wasserstoff, Methyl, Ethyl, Methoxy, Ethoxy, Cyano, Nitro, -N⁺(CH₃)₃ oder COOH bedeuten oder
   - R¹⁵⁷ und R¹⁵⁹: gemeinsam eine -O-CH₂-O-Brücke bilden,
   - R¹⁵⁸: Wasserstoff, Methyl, Methoxy oder Chlor bedeutet,
   - R¹⁶¹: Methyl, Difluormethyl, Trifluormethyl, Methoxycarbonyl, Ethoxycarbonyl oder Phenyl bedeutet,
   - R¹⁶²: Wasserstoff, Methyl, Ethyl, Phenyl oder Chlor bedeutet oder
   - R¹⁶¹ und R¹⁶²: zusammen eine -CH=CH-CH=CH- oder -CH=CH-C(OCH₃)=CH-Brücke bilden,
   - E¹¹²: S bedeutet,
   und
   - X⁻: ein unter den Bedingungen redox-inertes, farbloses Anion bedeutet.

Insbesondere bevorzugt ist ein erfindungsgemäßes elektrochromes System, welches
a) als Paar RED₁' / OX₂' mindestens eine Substanz der Formel (Ia)-(Id) enthält,
   worin
   - OX₂': für einen Rest der Formeln (II), (IV) oder (V) steht,
   worin
   - R², R⁴ und R⁸: für eine direkte Bindung zum Brückenglied B stehen,
   - R³, R⁵ und R⁹: unabhängig voneinander für Methyl, Ethyl, Propyl, Butyl, Pentyl, Hexyl, Heptyl, Octyl, Benzyl oder Phenyl stehen, oder im Falle der Formeln Ic oder Id ebenfalls für eine direkte Bindung zum Brückenglied B stehen,
   - R⁶ und R⁷: gleich sind und für Wasserstoff, Methyl, Methoxy, Chlor, Cyano oder Methoxycarbonyl stehen,
   - R¹⁰, R¹¹; R¹², R¹³ und R¹⁴, R¹⁵: unabhängig voneinander für Wasserstoff oder, falls Z¹ eine direkte Bindung bedeutet, jeweils paarweise zusammen für eine -CH=CH-Brücke stehen,
   - R⁶⁹ bis R⁷²: gleich sind und Wasserstoff, Methyl oder Ethyl bedeuten,
   - R⁷³ und R⁷⁴: Wasserstoff bedeuten,
   - E¹ und E²: gleich sind und für O oder S stehen,
   - Z¹: für eine direkte Bindung oder -CH=CH- steht,
   - X⁻: für ein unter den Bedingungen redox-inertes, farbloses Anion steht,
   - RED₁': für einen Rest der Formeln (X), (XII), (XIII), (XVI) oder (XVII) steht,
   - R²⁸, R³⁴, R³⁸, R⁴⁶ und R⁴⁹: für eine direkte Bindung zum Brückenglied B stehen,
   - R²⁹ bis R³¹, R³⁵ und R³⁹: unabhängig voneinander für Methyl, Ethyl, Propyl, Butyl, Pentyl, Hexyl, Heptyl, Octyl, Benzyl oder Phenyl stehen, oder im Falle der Formeln Ib oder Id R³⁰, R³⁵ und R³⁹ ebenfalls für die direkte Bindung um Brückenglied B stehen,
   - R³², R⁴⁷ und R⁴⁸: für Wasserstoff stehen,
   - R³⁶, R³⁷, R⁴⁰, R⁴¹ und R⁵⁰ bis R⁵²: unabhängig voneinander für Wasserstoff, Methyl, Methoxy, Chlor, Cyan, Methoxycarbonyl oder Phenyl stehen, oder im Falle der Formeln Ib oder Id R⁵¹ ebenfalls für eine direkte Bindung zum Brückenglied B steht,
   - Z³: für eine direkte Bindung, eine -CH=CH- oder -N=N-Brücke steht,
   - =Z⁴=: für eine direkte Doppelbindung, eine =CH-CH= oder =N-N=-Brücke steht,
   - E³ bis E⁵: unabhängig voneinander für O, S oder NR⁵⁹ stehen, E³ und E⁴ aber die gleiche Bedeutung haben,
   - E⁶ bis E⁹: untereinander gleich sind und für S, Se oder NR⁵⁹ stehen,
   - R⁵⁹: für Methyl, Ethyl, Propyl, Butyl, Pentyl, Hexyl, Heptyl, Octyl, Benzyl oder Phenyl steht, oder im Falle der Formel XVI in Ib oder Id ebenfalls für eine direkte Bindung zum Brückenglied B steht,
   - B: für ein Brückenglied der Formeln -(CH₂)ₙ-, -(CH₂)ₘ-O-(CH₂)ₚ-,
   -(CH₂)ₘ-NR⁶⁰-(CH₂)ₚ-, -(CH₂)ₘ-C₆H₄-(CH₂)ₚ-,
   -O-(CH₂)ₚ-O-, -NR⁶⁰-(CH₂)ₚ-NR⁶⁰-
   -(CH₂)ₘ-OCO-C₆H₄-COO-(CH₂)ₚ-,
   -(CH₂)ₘ-NHCO-C₆H₄-CONH-(CH₂)ₚ-,
   -(CH₂)ₘ-NHCONH-C₆H₄-NHCONH-(CH₂)ₚ-,
   -(CH₂)ₘ-OCO-(CH₂)ₜ-COO-(CH₂)ₚ-,
   -(CH₂)ₘ-NHCO-(CH₂)ₜ-CONH-(CH₂)ₚ-,
   -(CH₂)ₘ-NHCONH-(CH₂)ₜ-NHCONH-(CH₂)ₚ-steht,
   - R⁶⁰: für Methyl steht,
   - n: für eine ganze Zahl von 1 bis 10 steht,
   - m und p: gleich sind und für eine ganze Zahl von 0 bis 2 stehen und
   - t: für eine ganze Zahl von 1 bis 6 steht und
b) als Substanz OX₂" mindestens eine Substanz der Formel (CI) enthält.

Ganz besonders bevorzugt ist ein erfindungsgemäßes elektrochromes System, welches
a) als Paar RED₁' / OX₂' mindestens eine Substanz der Formel (Ia) entsprechend einer der Formeln 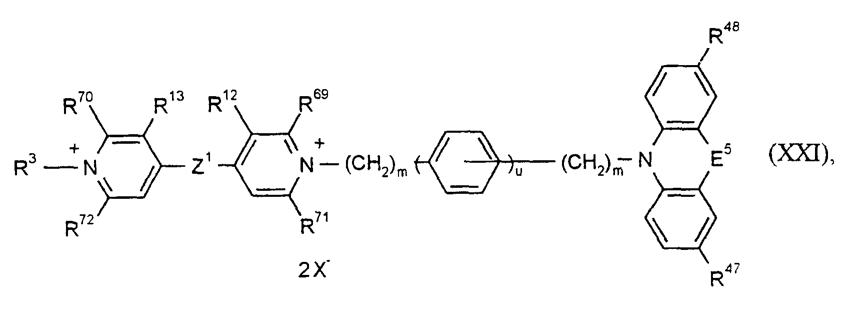 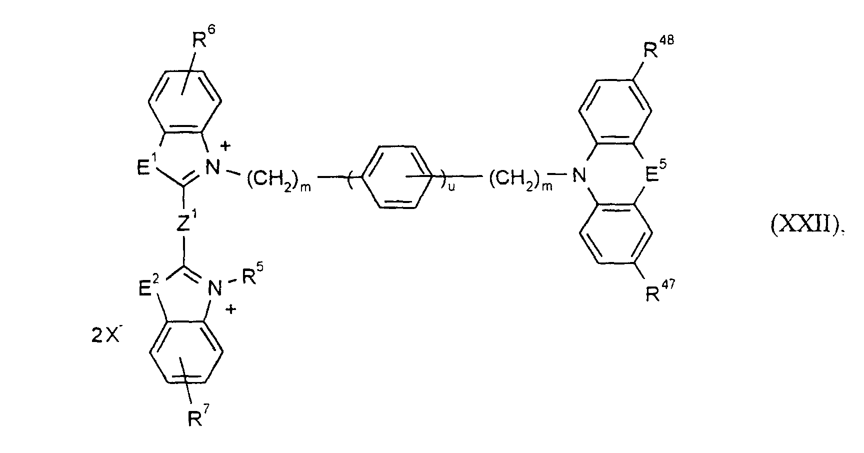 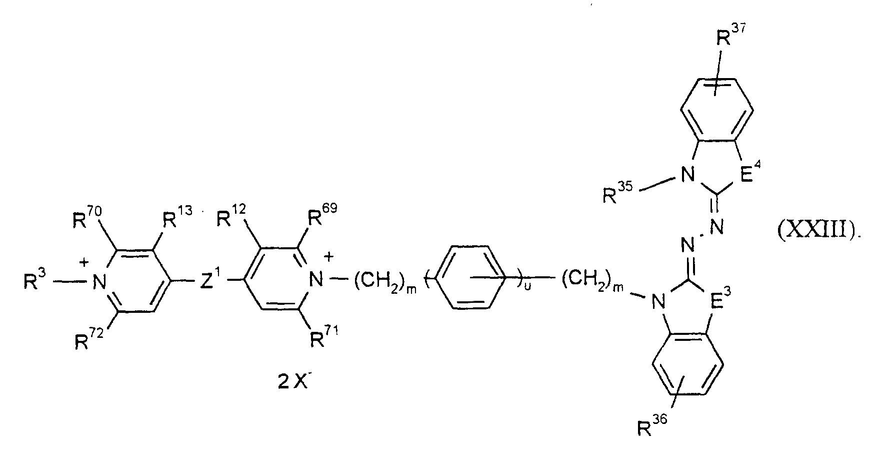 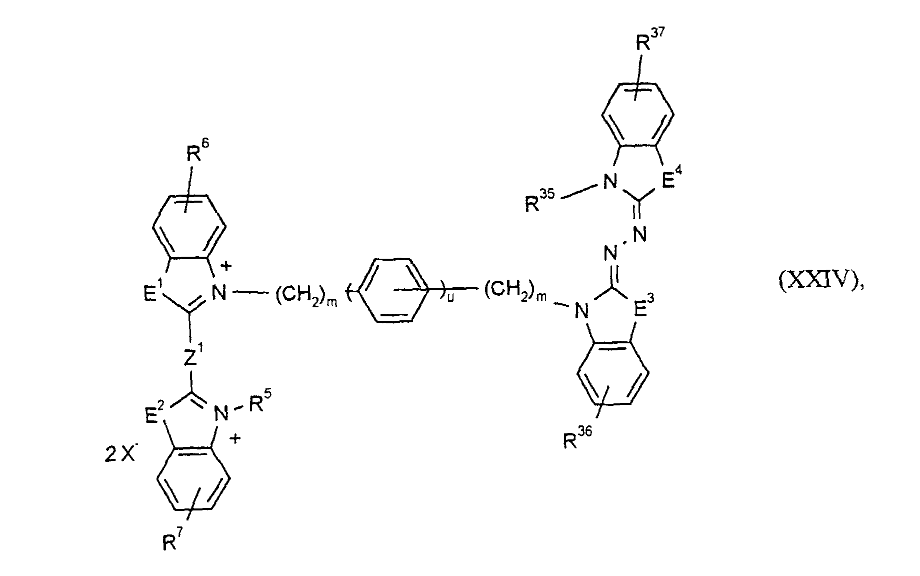 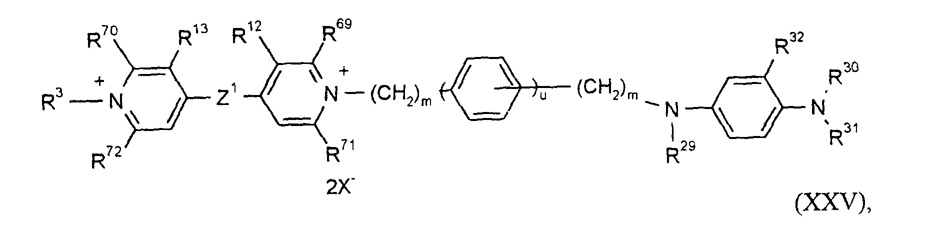 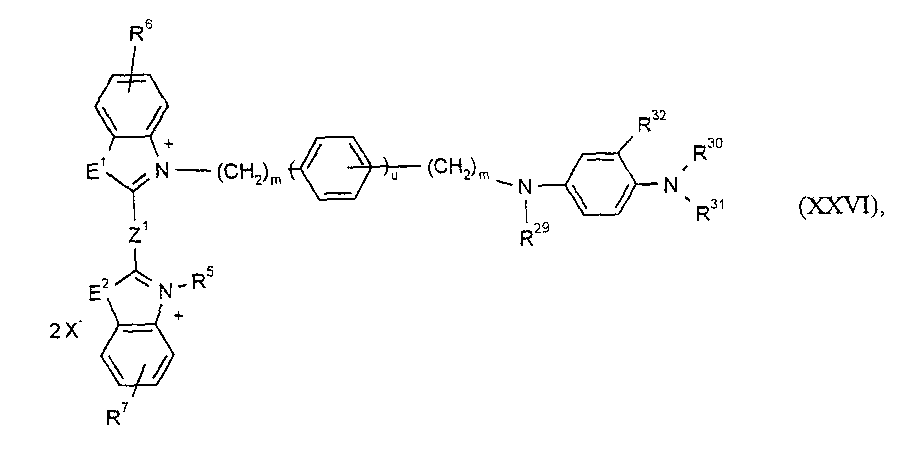 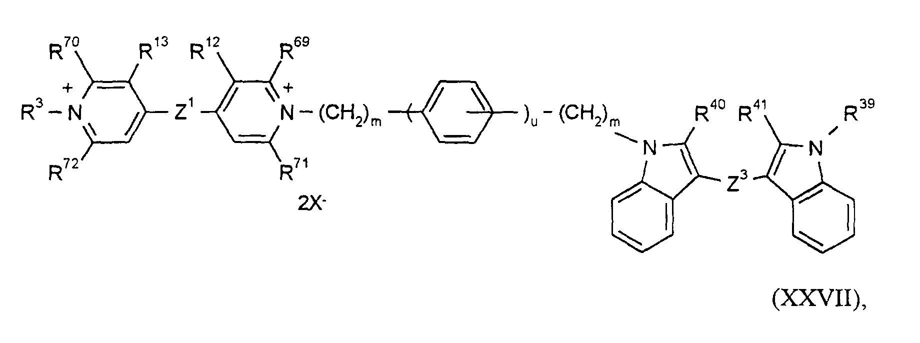 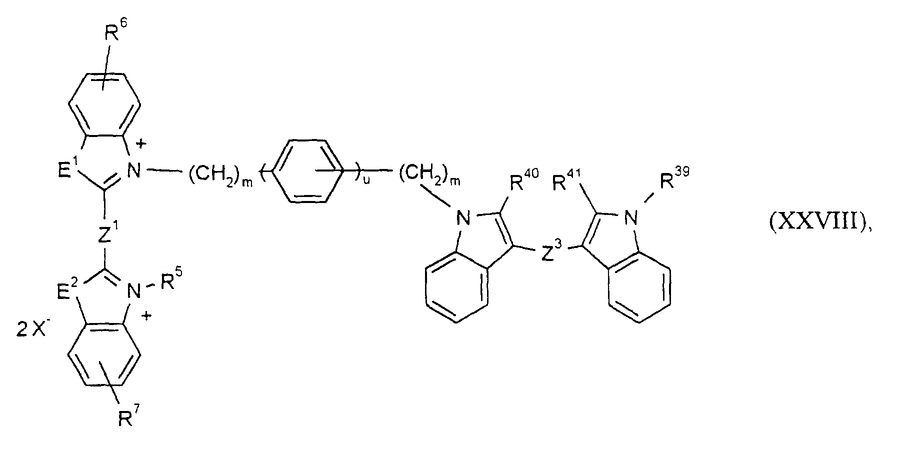 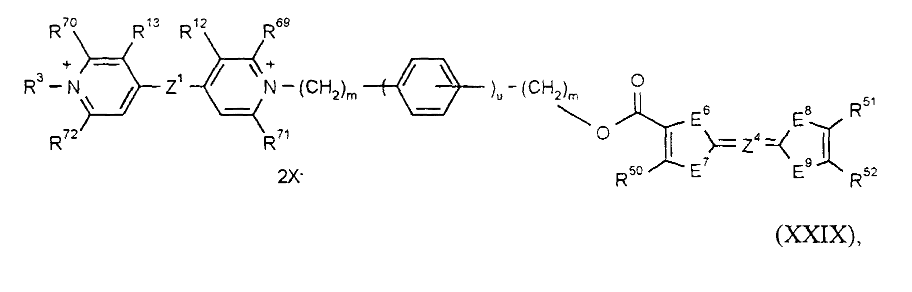 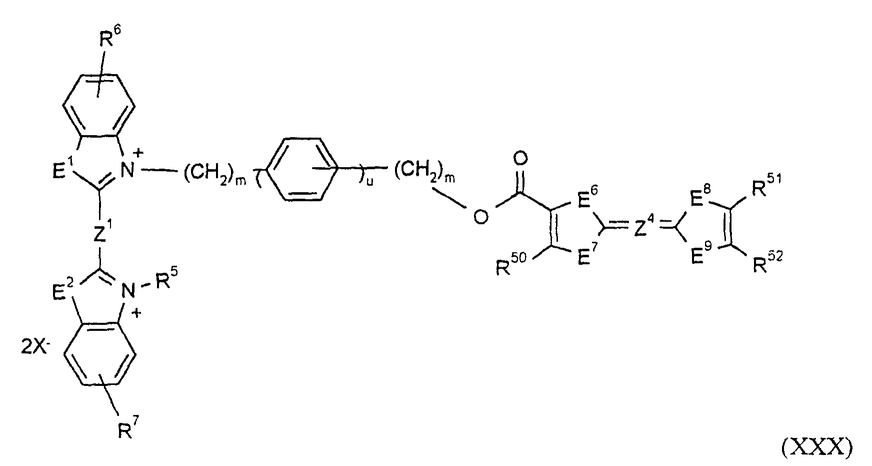 enthält, oder mindestens eine Substanz der Formel (Ib) entsprechend einer der Formeln 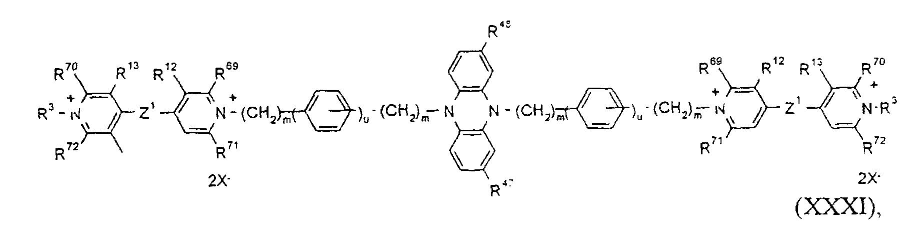 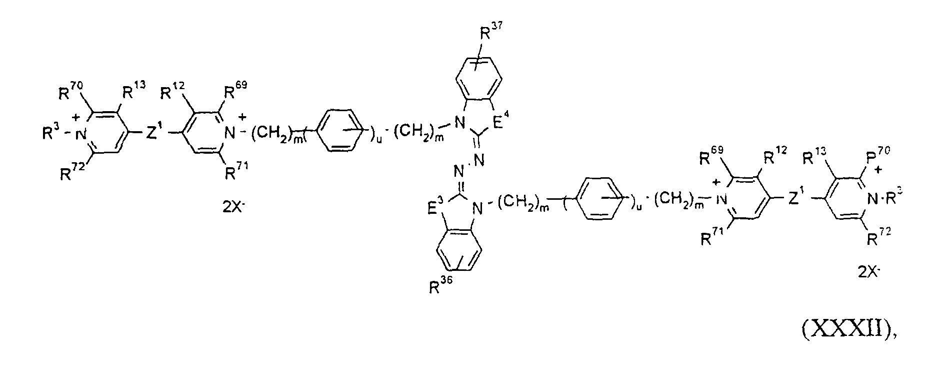 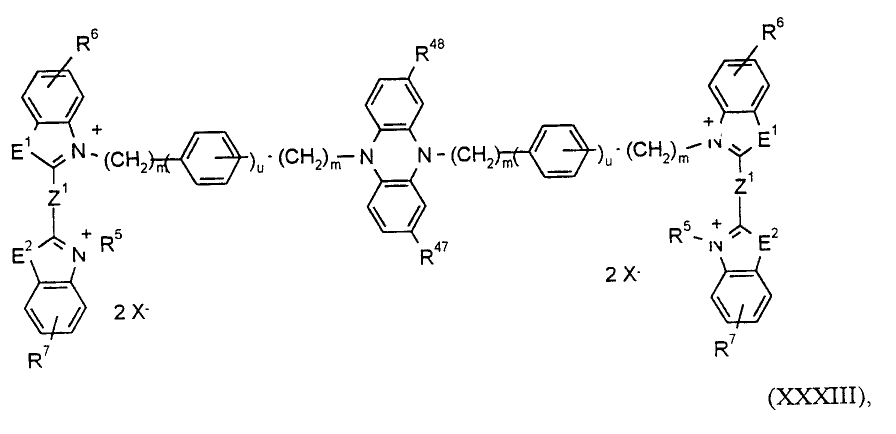 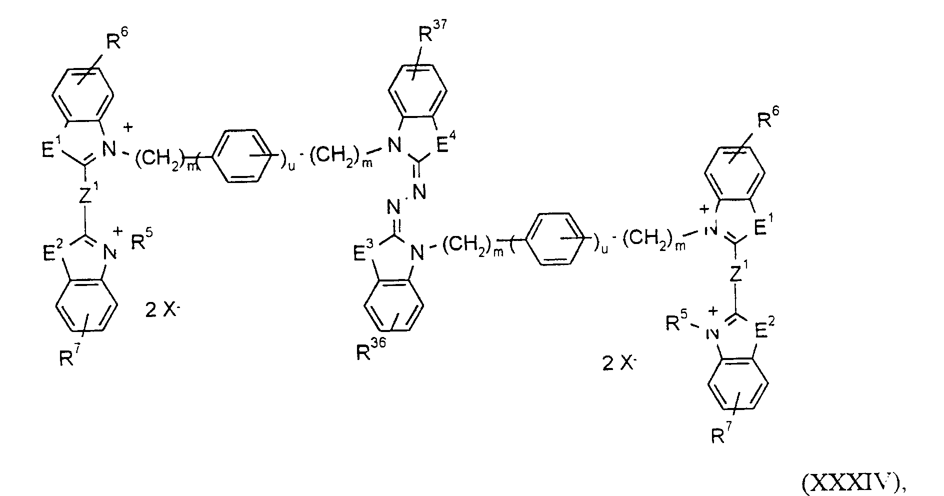 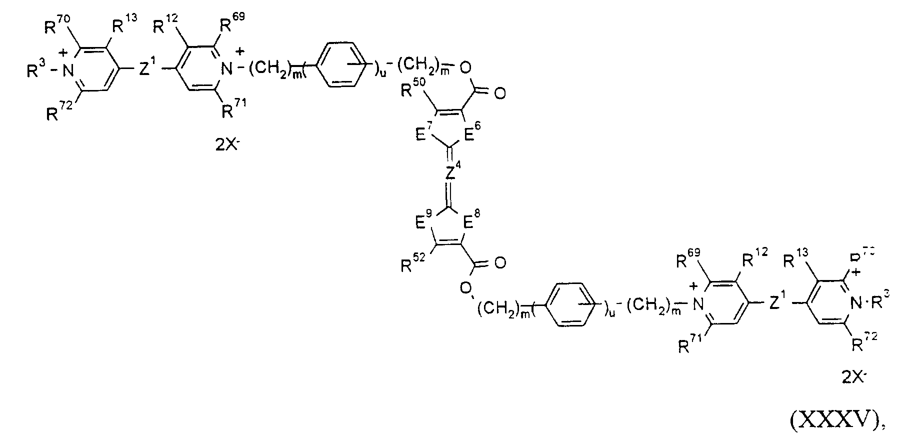 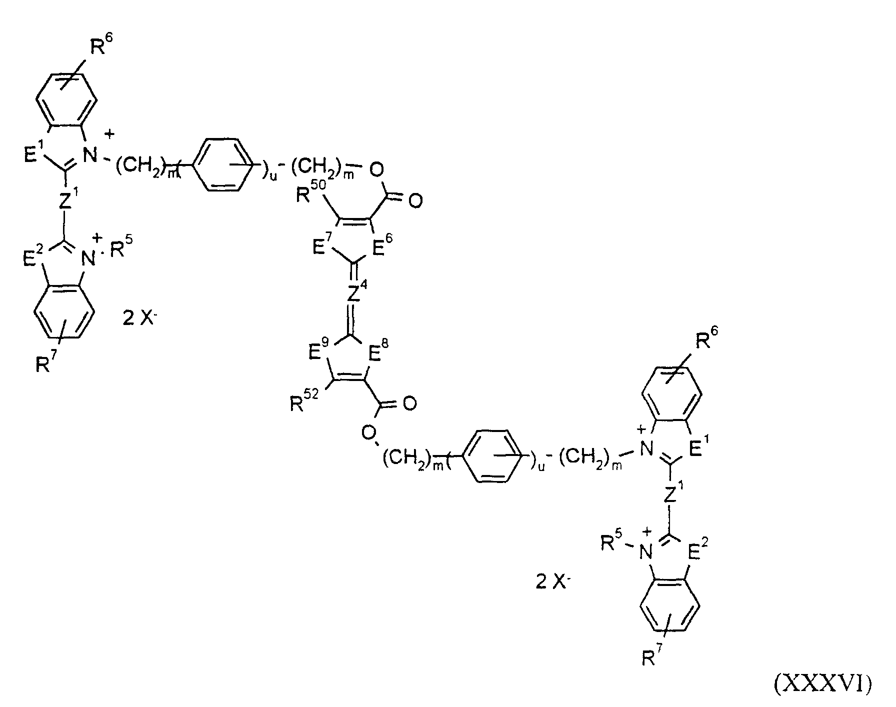 oder mindestens eine Substanz der Formel (Ic) entsprechend einer der Formeln 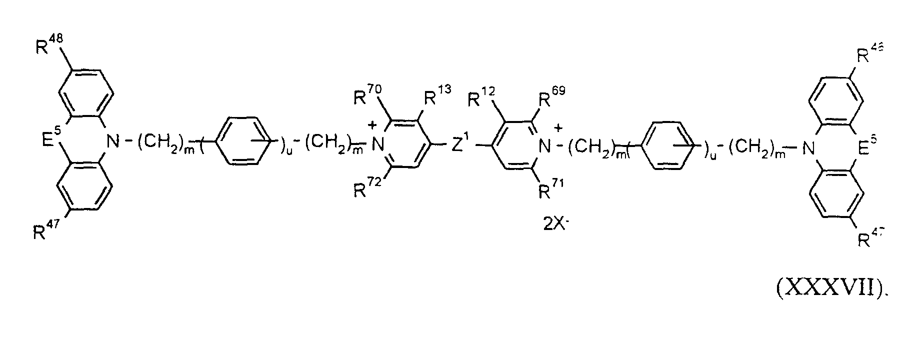 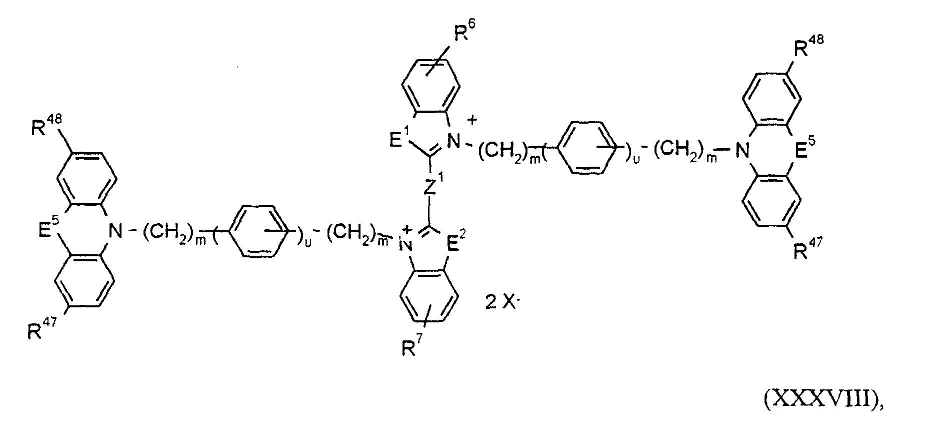 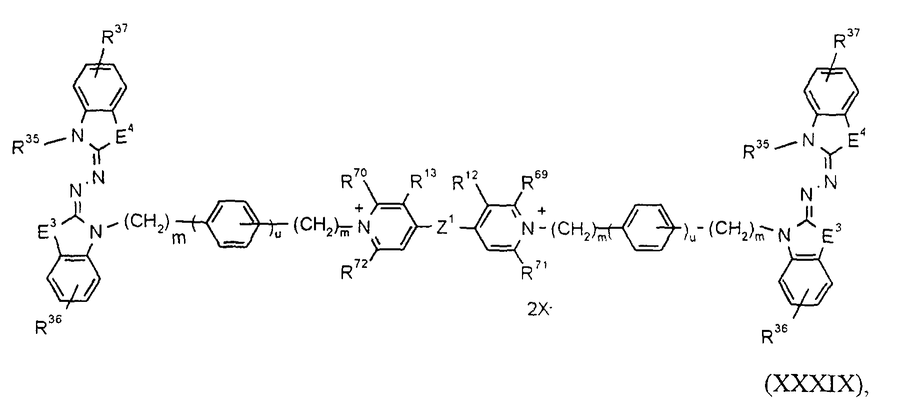 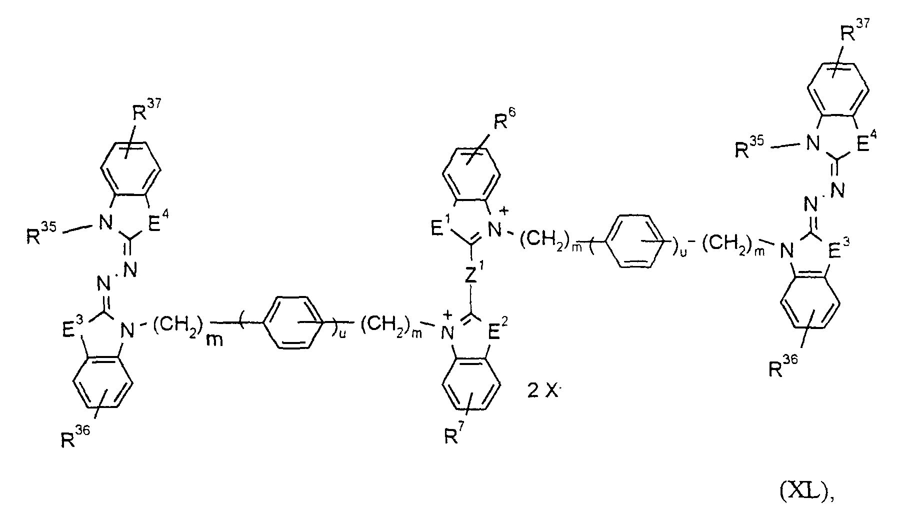 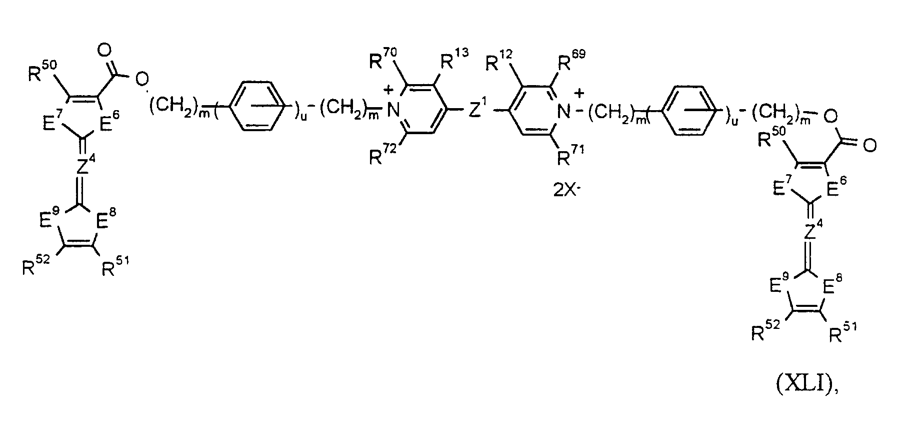 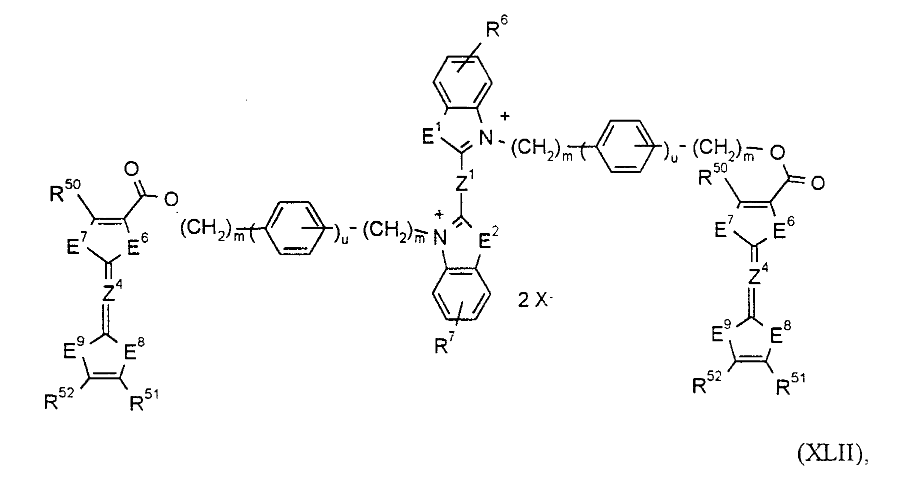 worin
   - R³, R⁵, R³⁵ und R³⁹: unabhängig voneinander für Methyl, Ethyl, Propyl, Butyl, Pentyl, Hexyl oder Benzyl stehen,
   - R⁶, R⁷ und R³⁶, R³⁷: paarweise gleich sind und für Wasserstoff, Methyl, Methoxy, Chlor, Cyano oder Methoxycarbonyl stehen,
   - R¹² und R¹³: für Wasserstoff oder, wenn Z¹ eine direkte Bindung bedeutet, gemeinsam für eine CH=CH-Brücke stehen,
   - R⁶⁹ bis R⁷²: gleich sind und für Wasserstoff oder Methyl stehen,
   - E¹ und E²: gleich sind und für O oder S stehen,
   - Z¹: für eine direkte Bindung oder -CH=CH- steht,
   - R³², R⁴⁷ und R⁴⁸: für Wasserstoff stehen,
   - E³ bis E⁵: unabhängig voneinander für O, S oder NR⁵⁹ stehen, wobei E³ und E⁴ aber gleich sind,
   - R²⁹ bis R³¹ und R⁵⁹: unabhängig voneinander für Methyl, Ethyl, Propyl, Butyl, Pentyl, Hexyl oder Benzyl stehen, wobei R²⁹ bis R³¹ vorzugsweise gleich sind,
   - R⁴⁰ und R⁴¹: gleich sind und für Wasserstoff, Methyl, Ethyl, Propyl, Butyl oder Phenyl stehen,
   - Z³: für eine direkte Bindung, -CH=CH- oder -N=N- steht,
   - R⁵⁰ bis R⁵²: unabhängig voneinander für Wasserstoff, Methyl, Methoxy, Chlor, Cyano, Methoxycarbonyl, Ethoxycarbonyl oder Phenyl stehen, vorzugsweise jedoch gleich sind,
   - E⁶ bis E⁹: untereinander gleich sind und für S, Se oder NR⁵⁹ stehen,
   - Z⁴: für eine direkte Doppelbindung, eine =CH-CH= oder =N-N=-Brücke steht,
   - m: für eine ganze Zahl von 1 bis 5 steht,
   - u: für 0 oder 1 steht und
   - X⁻: für ein unter den Bedingungen redox-inertes, farbloses Anion steht, wobei die Darstellung 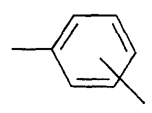 in den oben angegebenen Formeln eine Anknüpfung in o-, m- oder p-Stellung bedeutet und
b) als Substanz OX₂" mindestens eine Substanz der Formel (CI) enthält.

Paare elektrochromer Substanzen RED₁' /OX₂', welche über eine Brücke kovalent miteinander verknüpft sind, sind Gegenstand der nicht vorveröffentlichten deutschen Anmeldung Nr. 19 605 451 und können wie dort beschrieben hergestellt werden.

Die elektrochromen Substanzen RED₁" und OX₂" sind Gegenstand der nicht vorveröffentlichten deutschen Anmeldung Nr. 19 605 448 und können wie dort beschrieben hergestellt werden.

In den obengenannten Substituentenbedeutungen sind Alkylreste, auch abgewandelte, wie z.B. Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie z.B. C₁- bis C₄-Alkoxy, Fluor, Chlor, Hydroxy, Cyano, C₁- bis C₄-Alkoxycarbonyl oder COOH.

Unter Cycloalkylresten werden vorzugsweise solche mit 3 bis 7 C-Atomen, insbesondere 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind vorzugsweise Phenyl oder Naphthylreste, insbesondere Phenylreste. Sie können durch 1 bis 3 der folgenden Reste substituiert sein: C₁- bis C₆-Alkyl, C₁- bis C₆-Alkoxy, Fluor, Chlor, Brom, Cyano, Hydroxy, C₁- bis C₆-Alkoxycarbonyl oder Nitro. Zwei benachbarte Reste können auch einen Ring bilden.

Unter gegebenenfalls benzanellierten aromatischen oder quasiaromatischen fünf- oder sechsgliedrigen heterocyclischen Ringen werden insbesondere Imidazol, Benzimidazol, Oxazol, Benzoxazol, Thiazol, Benzthiazol, Indol, Pyrazol, Triazol, Thiophen, Isothiazol, Benzisothiazol, 1,3,4- oder 1,2,4-Thiadiazol, Pyridin, Chinolin, Pyrimidin und Pyrazin verstanden. Sie können durch 1 bis 3 der folgenden Reste substituiert sein: C₁- bis C₆-Alkyl, C₁- bis C₆-Alkoxy, Fluor, Chlor, Brom, Cyano, Nitro, Hydroxy, Mono- oder Di-C₁- bis C₆-alkylamino, C₁- bis C₆-Alkoxycarbonyl, C₁- bis C₆-Alkylsulfonyl, C₁- bis C₆-Alkanoylamino, Phenyl oder Naphthyl. Zwei benachbarte Reste können auch einen Ring bilden.

Das erfindungsgemäße elektrochrome System enthält vorzugsweise mindestens ein Lösungsmittel, wodurch eine elektrochrome Flüssigkeit entsteht, die ebenfalls Gegenstand der vorliegenden Erfindung ist.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Glutaronitril, Methylglutarnitril, 3,3'-Oxydipropionitril, Hydroxypropionitril, Dimethylformamid, N-Methylpyrrolidon, Sulfolan, 3-Methylsulfolan oder Mischungen davon. Bevorzugt sind Propylencarbonat und Mischungen davon mit Glutaronitril.

Die erfindungsgemäße elektrochrome Flüssigkeit enthält im allgemeinen mindestens ein inertes Leitsalz.

Als inerte Leitsalze sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen X⁻ in den Formeln (I), (II), (IV), (VI), (VII) kommen alle redox-inerten, farblosen Anionen in Frage. Beispiele sind Tetrafluoroborat, Perchlorat, Methansulfonat, Trifluormethansulfonat, Perfluorbutansulfonat, Benzolsulfonat, Hexafluorophosphat, Hexafluoroarsenat und Hexafluorosilikat. Im letzteren Falle steht X⁻ für 1/2 SiF₆²⁻.

Die Leitsalze werden vorzugsweise im Bereich 0,05 bis 0,5 molar eingesetzt.

Als weitere Zusätze zu der elektrochromen Flüssigkeit können Verdicker eingesetzt werden, um die Viskosität der Flüssigkeit zu steuern. Das kann Bedeutung haben zur Vermeidung von Segretation, d.h. der Bildung von streifiger oder fleckiger Farbbildung bei längerem Betrieb einer die erfindungsgemäße elektrochrome Flüssigkeit enthaltenden elektrochromen Vorrichtung im eingeschalteten Zustand, und zur Steuerung der Ausbleichgeschwindigkeit nach Abschalten des Stroms.

Die elektrochrome Flüssigkeit kann auch gelförmig verdickt sein.

Als Verdicker eignen sich alle für diesen Zweck üblichen Verbindungen wie z.B. Polyacrylat, Polymethacrylat (Luctite L®), Polycarbonat oder Polyurethan.

Als weitere Zusätze für die elektrochrome Flüssigkeit kommen UV-Absorber zur Verbesserung der Lichtechtheit in Frage. Beispiele sind UVINUL® 3000 (2,4-Dihydroxybenzophenon, BASF), SANDUVOR® 3035 (2-Hydroxy-4-n-octyl-oxybenzophenon, Clariant), TINUVIN® 571 (2-(2H-Benzotriazol-2-yl)-6-dodecyl-4-methylphenol, Ciba), CYASORB 24™ (2,2'-Dihydroxy-4-methoxybenzophenon, American Cyanamid Company), UVINUL® 3035 (Ethyl-2-cyano-3,3-diphenylacrylat, BASF), UVINUL® 3039 (2-Ethylhexyl-2-cyano-3,3-diphenylacrylat, BASF), UVINUL® 3088 (2-Ethylhexyl-p-methoxycinnamat, BASF).

Die UV-Absorber werden im Bereich 0,01 bis 2 mol/l, vorzugsweise 0,04 bis 1 mol/l eingesetzt. Sie können auch gemischt werden.

Die erfindungsgemäße elektrochrome Flüssigkeit enthält eine Mischung aus
a) mindestens einem Paar RED₁' /OX₂' entsprechend vorzugsweise der Formel (I), insbesondere der Formel (Ia), (Ib), (Ic), und/oder (Id) und
b) mindestens einer Substanz RED₁" oder OX₂", entsprechend vorzugsweise der Formel (CI), (CII), (CIII) und/oder (CIV), insbesondere der Formel (CI),
   in einer Gesamtkonzentration von mindestens 10⁻⁴mol/l, vorzugsweise 10⁻² bis 1 mol/l.

Das Verhältnis der Substanzen aus a) und b) liegt bei 95 : 1 bis 1 : 99, vorzugsweise 95 : 5 bis 40 : 60.

Die erfindungsgemäßen elektrochromen Flüssigkeiten sind bestens als Bestandteil einer elektrochromen Vorrichtung geeignet. Weiterer Gegenstand der vorliegenden Erfindung sind demnach elektrochrome Vorrichtungen enthaltend eine erfindungsgemäße elektrochrome Flüssigkeit. Der Aufbau einer elektrochromen Vorrichtung, die z.B. als Fensterscheibe, Autosonnendach, Automobil-Rückspiegel oder Display ausgebildet sein kann, ist im Prinzip bekannt. Die erfindungsgemäße elektrochrome Vorrichtung besteht aus zwei einander zugewandten, lichtdurchlässigen Glas- oder Kunststoffscheiben, von denen gegebenenfalls eine verspiegelt ist und deren einander zugewandten Seiten elektrisch leitfähig beschichtet sind, z.B. mit Indium-Zinn-Oxid (ITO) zwischen denen sich die erfindungsgemäße elektrochrome Flüssigkeit befindet. Im Falle, daß eine der Scheiben verspiegelt ist, kann auch diese als leitfähige Schicht genutzt werden. Der Abstand der beiden Scheiben beträgt im allgemeinen 0,05-1 mm, vorzugsweise 0,1-0,5 mm. Der gewünschte Abstand zwischen den Scheiben wird im allgemeinen durch einen Dichtungsring hergestellt.

Der Dichtungsring kann beispielsweise aus Kunststoff oder Dünnglas oder einem anderen, nichtleitenden und gegenüber der elektrochromen Flüssigkeit inertem Material bestehen. Beispielsweise kann es sich dabei um Klebstoffe, die thermisch oder photochemisch aushärten, handeln wie beispielsweise Epoxi-Harze oder Acrylate. Der Abstand zwischen den Platten kann mit Abstandshaltern hergstellt werden, beispielsweise kleiner Kunststoff- oder Glaskügelchen oder bestimmten Sandfraktionen.

Die erfindungsgemäße selbstlöschende einzellige elektrochrome Vorrichtung kann zusätzlich zu den oben beschriebenen erfindungsgemäßen elektrochromen Substanzen insbesondere der Formeln (I), insbesondere den Formeln (Ia) bis (Id) und (CI) bis (CIV) auch andere enthalten, wie sie beispielsweise in US-P 4,902,108, Topics in Current Chemistry, Vol. 92, S. 1-44 (1980) und Angew. Chem. 90, 927 (1978) beschrieben sind. Solche elektrochromen Substanzen entstammen beispielsweise den oben unter den Formeln (II) bis (XX) angegebenen Gruppen, wobei dann keiner der angeführten Reste die Bedeutung "direkte Bindung zur Brücke B" besitzen kann. Eine Zumischung solcher Redoxsysteme kann beispielsweise vorteilhaft sein, um bei der erfindungsgemäßen elektrochromen Vorrichtung den Farbton, z.B. des Displays, im eingeschalteten Zustand zu korrigieren oder zu intensivieren.

### Beispiele:

### Beispiel 1

a) 5.0 g 4,4'-Dipyridyl wurden in 30 ml wasserfreiem Acetonitril bei 50°C gelöst. Während 50 min tropften bei dieser Temperatur 2.7 g Benzylbromid dazu. Nach 3 h bei 50 °C wurde abgekühlt und der hellgelbe Niederschlag abgesaugt. Dieser wurde mit 60 ml Toluol gewaschen und im Vakuum getrocknet. Man erhielt 3.9 g (75 % d. Th.) des Produkts der Formel 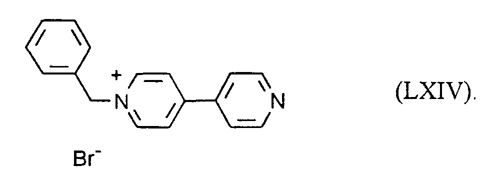
b) 10.1 g Phenothiazin wurden in 60 ml wasserfreiem N-Methylpyrrolidon unter N₂-Atmosphäre bei Raumtemperatur gelöst. 5.9 g Kalium-tert.-butylat wurden zugesetzt. Es entstand unter Erwärmung auf 30 °C eine oranee Suspension, die 30 min bei 30 °C gerührt wurde. Dann wurden 54 g 1.4-Dibrombutan auf einmal zugesetzt. Die Temperatur stieg dabei bis auf 53°C an. Während 45 min wurde auf 70 °C geheizt, 15 min bei dieser Temperatur gehalten und dann abgekühlt. Die hellbraune Suspension wurde in 1 l Wasser eingetragen. Mit 3x200 ml Toluol wurde extrahiert, der Extrakt wurde mit 5x200 ml Wasser gewaschen, über Natriumsulfat getrocknet und am Rotationsverdampfer eingeengt. Der ölige Rückstand wurde in 400 ml Hexan gelöst, vom Unlöslichen filtriert und erneut eingeengt. Anschließend wurde bei 0.1 bis 0.5 mbar der Überschuß an 1.4-Dibrombutan abdestilliert. Man erhielt 9.6 g (57 % d. Th.) eines rötlichgelben, zähen Öls der Formel 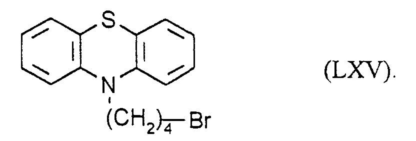
c) 3.7 g des Phenothiazins der Formel (LXV) wurden in 10 ml wasserfreiem N-Methylpyrrolidon bei Raumtemperatur unter N₂-Atmosphäre gelöst. 1.8 g des Dipyridiniumsalzes der Formel (LXIV) wurden zugesetzt. Die Suspension wurde während 1 h auf 80 °C geheizt und insgesamt 13 h bei dieser Temperatur gehalten. Dabei wurde die Suspension immer dicker. Nach Abkühlen auf Raumtemperatur wurde abgesaugt und mit 5 ml N-Methylpyrrolidon gewaschen. Das hygroskopische Rohprodukt der Formel 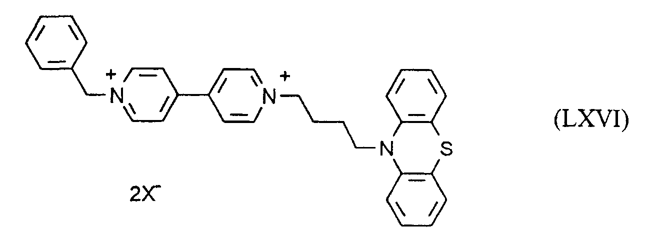 mit X⁻ = Br⁻ wurde in 7 ml Methanol aufgelöst und filtriert. In das Filtrat wurden während 2 h 3.0 g Tetrabutylammoniumtetrafluoroborat eingestreut. Langsam entstand eine Fällung, die während 18 h Rühren bei Raumtemperatur vervollständigt wurde. Schließlich wurde abgesaugt, mit Methanol bis zum farblosen Ablauf gewaschen und im. Vakuum getrocknet. Man erhielt 0.5 g (13 % d. Th.) blaß bläuliches Pulver der Formel (LXVI) mit X⁻ = BF₄⁻.

### Beispiel 2

a) Unter Stickstoffatmosphäre wurden 9,2 g Phenazin in 60 ml wasserfreiem Tetrahydrofuran suspendiert. Während 15 min tropften 30,8 ml 20 gew.-%ige Phenyllithiumlösung in Cyclohexan/Diethylether 7 : 3 dazu, wobei die Temperatur bei max. 35°C gehalten wurde. Die Lösung wurde 30 min bei Raumtemperatur nachgerührt.
   Bei 15°C wurden in einer Portion 30,2 ml 1,4-Dibrombutan dazugegeben. Die Temperatur stieg dabei bis 38°C an. Nach 6 h bei Raumtemperatur wurde mit 200 ml Wasser versetzt und der pH auf 7,0 gestellt. Die organische Phase wurde abgetrennt, dreimal mit je 100 ml Wasser gewaschen und im Vakuum eingeengt. Schließlich wurde überschüssiges 1,4-Dibrombutan bei einem Druck von 0,2 mbar abdestilliert. Der ölige Rückstand wurde in 400 ml Ethanol heiß gelöst. Das nach dem Erkalten ausgefallene Produkt wurde abgesaugt, mit Ethanol und Hexan gewaschen und getrocknet. Man erhielt 8,0 g (41 % d. Th.) blaßgelbes Pulver des 9,10-Dihydrophenazins der Formel 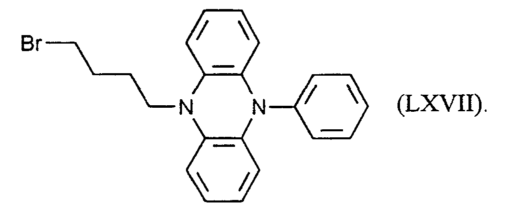
b) 7,5 g des 9,10-Dihydrophenazins der Formel (LXVII) aus a) und 6,1 g 4,4'-Dipyridyl wurden in 100 ml Acetonitril 24 h bei 70°C unter Stickstoffatmosphäre gerührt. Nach dem Abkühlen wurde abgesaugt und mit 50 ml Aceton gewaschen. Nach dem Trocknen erhielt man 6,3 g (60 % d. Th.) des Salzes der Formel 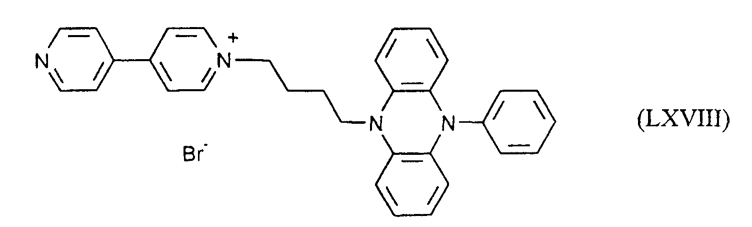
c) 6,1 bg des unter b) erhaltenen Salzes wurden in 70 ml N-Methyl-2-pyrrolidon zusammen mit 2,7 ml Benzylbromid 7 h bei 70°C unter Stickstoffatmosphäre gerührt. Nach dem Abkühlen wurde mit 150 ml Toluol verdünnt und das ausgefallene Produkt abgesaugt. Es wurde gründlich mit 150 ml Toluol und 500 ml Hexan gewaschen und getrocknet. Man erhielt 5,5 g (69 % d. Th.) des Dipyridiniumsalzes der Formel 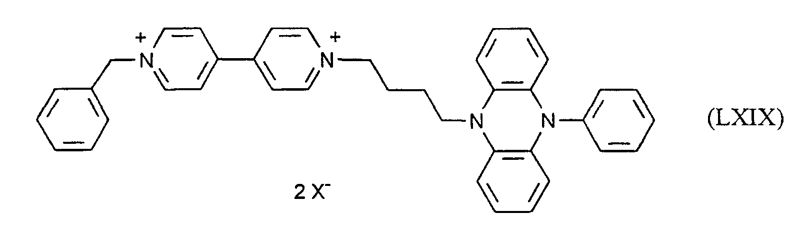 mit X⁻ = Br⁻.
d) 4,0 g dieses Produkts aus c) wurden unter Stickstoffatmosphäre in 100 ml Methanol bei 65°C gelöst. Während 5 min wurden 7,4 g Tetrabutylammoniumtetrafluoroborat eingestreut. Es trat eine Fällung auf. Nach 5 min bei 65°C wurde abgekühlt, abgesaugt, mit 200 ml Methanol und 50 ml Hexan gewaschen und im Vakuum getrocknet. Man erhielt 3,4 g (83 % d. Th.) blaß beiges Pulver der Formel (LXIX) mit X⁻ = BF₄⁻.

### Beispiel 3

a) 45,3 g 2-Methylthiobenzthiazol wurden in 75 ml Toluol gelöst. 151 ml 1,4-Dibrombutan und eine Spatelspitze Kaliumiodid wurden zugesetzt. 4 h wurde gekocht und dann abgekühlt. Es wurde filtriert und mit 50 ml Toluol gewaschen. Das Filtrat wurde auf 50°C geheizt und mit 35,9 ml Dimethylsulfat versetzt. 8 h wurde bei 50°C gerührt, abgekühlt, abgesaugt und mit 250 ml Toluol gewaschen. Das Produkt wurde in 100 ml Aceton aufgerührt, erneut abgesaugt und mit 300 ml Aceton gewaschen. Man erhielt nach dem Trocknen im Vakuum 53,1 g (50 % d. Th.) des Salzes der Formel 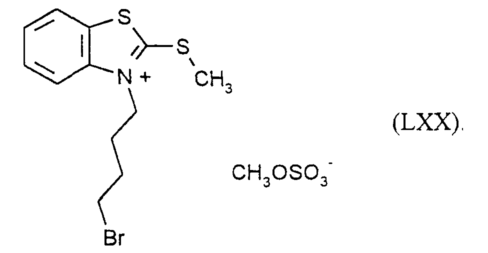
b) In 60 ml Acetonitril wurden unter Stickstoffatmosphäre 6,95 g des Benzthiazoliumsalzes der Formel (LXX) aus a) und 2,9 g des Hydrazons der Formel 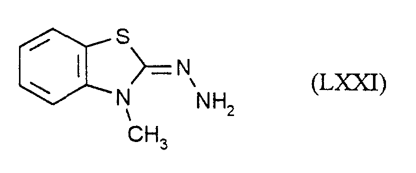 (von der Fa. Aldrich Chemical Company Ltd., England) suspendiert. Bei Raumtemperatur wurden 2,3 ml Triethylamin zugegeben. Es entstand kurzzeitig eine Lösung, dann bildete sich ein Niederschlag. Nach 5 h bei Raumtemperatur wurde schließlich abgesaugt, mit 50 ml Methanol, 100 ml Wasser und weiteren 50 ml Methanol bis zum farblosen Ablauf gewaschen und im Vakuum getrocknet. Man erhielt 6,0 g (83 % d. Th.) des Azins der Formel 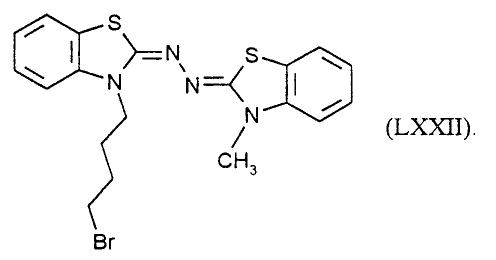
c) Wurde analog zu Beispiel 1 a) gearbeitet, aber statt Benzylbromid 6,8 ml Butylbromid eingesetzt, so erhielt man 5,2 g (57 % d. Th.) des Pyridiniumsalzes der Formel 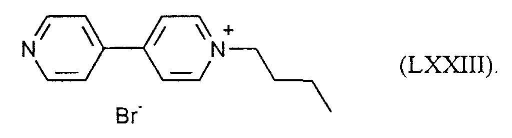
d) 2,0 g des Azins der Formel (LXXII) aus b) und 1,3 g des Pyridiniumsalzes der Formel (LXXIII) aus c) wurden in 20 ml N-Methyl-2-pyrrolidon unter Stickstoffatmosphäre 102 h bei 80°C gerührt. Nach dem Abkühlen wurde ein grünliches kristallines Produkt abgesaugt und mit 50 ml Aceton gewaschen. Nach dem Trocknen erhielt man 0,25 g (7,6 % d. Th.) des Dipyridiniumsalzes der Formel 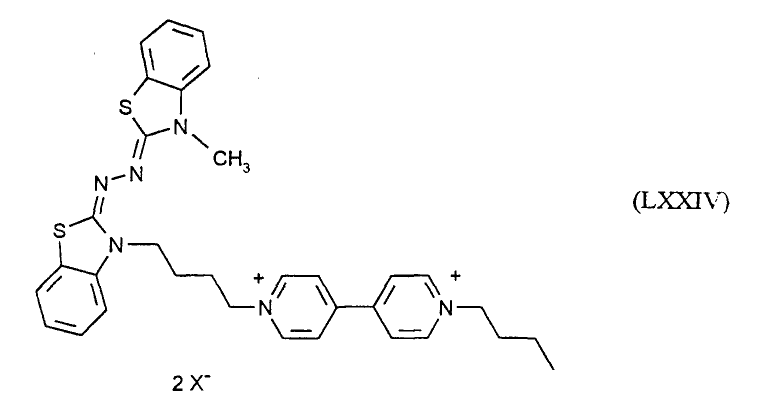 mit X⁻ = Br⁻.
e) 0,25 g des Produkts aus c) wurden in 5 ml Methanol fast vollständig gelöst. 0,45 g Tetrabutylammoniumtetrafluoroborat wurden zugesetzt. Es wurde 17 h bei Raumtemperatur gerührt, wobei das Produkt allmählich kristallin wurde. Es wurde abgesaugt, mit 25 ml Methanol, 25 ml Wasser und erneut mit 25 ml Methanol gewaschen. Nach dem Trocknen erhielt man 0,15 g (59 % d. Th.) hellgraues Pulver der Formel (LXXIV) mit X⁻ = BF₄⁻.

### Beispiel 4

a) 4,0 g des Phenothiazins der Formel (LXV) aus Beispiel 1b) und 0,95 g 4,4'-Dipyridyl wurden in 10 ml Acetonitril unter Stickstoffatmosphäre 9 h bei 70°C gerührt. Die Suspension wurde dann mit 10 ml N-Methyl-2-pyrrolidon verdünnt und 25 h bei 70°C und 7 h bei 80°C gerührt. Nach dem Abkühlen wurde abgesaugt, mit 50 ml Methanol gewaschen und im Vakuum getrocknet. Man erhielt 1,6 (32 % d. Th.) des Dipyridiniumsalzes der Formel 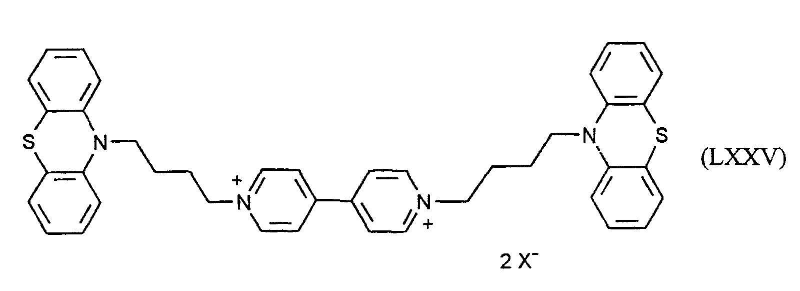 mit X⁻ = Br⁻.
b) 1,4 g des Salzes der Formel (LXXV) aus a) wurden in 20 ml Methanol bei Rückfluß teilweise gelöst. 2,3 g Tetrabutylammoniumtetrafluoroborat wurden zugesetzt. Es wurde noch 5 min gekocht und dann kaltgerührt. Das ausgefallene Produkt wurde abgesaugt, mit 50 ml Methanol, 50 ml Wasser und erneut mit 50 ml Methanol gewaschen und im Vakuum getrocknet. Man erhielt 1,1 g (77 % d. Th.) Dipyridiniumsalz der Formel (LXXV) mit mit X⁻ = BF₄⁻.

### Beispiel 5

Es wurde eine Zelle aus zwei Indium-Zinn-Oxid (ITO)-beschichteten Glasplatten und einem Dichtungsring gebaut, wie sie in US-P 4,902,108 beschrieben ist. Sie wurde unter Stickstoffatmosphäre über eine Öffnung in dem Dichtungsring befüllt mit einer Lösung, die 0,04 molar an der elektrochromen Substanz der Formel (LXXIV) mit X^{⊖} = BF₄^{⊖} gemäß Beispiel 3,
0,01 molar an dem Tetrazoliumsalz der Formel 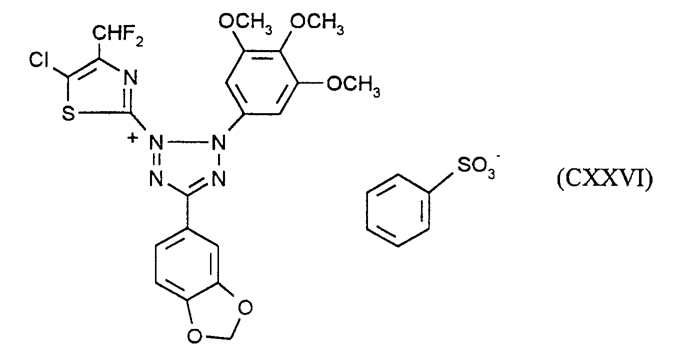 und 0,5 molar an Tetrabutylammoniumtetrafluoroborat in wasserfreiem Propylencarbonat war. Die Zelle wurde luftdicht verschlossen. Die Lösung in der Zelle war blaßgelb. Nach Anlegen einer Spannung von 1.5 V färbte sich die Lösung rasch intensiv violettbraun, nach Abschalten der Spannung entfärbte sich der Zellinhalt innerhalb von 1 min wieder vollständig. Durch Kurzschließen der Zelle erfolgte die Entfärbung rascher.

Nach 9 000 Färbe-/Entfärbe-Zyklen arbeitete die Zelle noch einwandfrei.

### Beispiel 6

Es wurde wie in Beispiel 4 eine Zelle gebaut. Eine der Glasplatten war jedoch auf der der ITO-Schicht abgewandten Seite verspiegelt.

Sie wurde unter N₂-Atmosphäre befüllt mit einer Lösung, die 0,04 molar an der elektrochromen Substanz der Formel (LXIX) mit X^{⊖} = BF₄^{⊖} gemäß Beispiel 2 und 0,01 molar an dem Tetrazoliumsalz der Formel 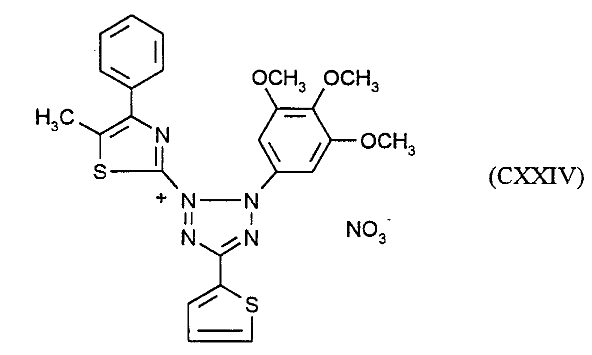 in wasserfreiem Propylencarbonat war. Die Farbe der Lösung in der Zelle war blaßgelb. Nach Anlegen einer Spannung von 0,9 V färbte sie sich die Lösung rasch tief schwarzbraun, nach Abschalten der Stromzufuhr und Kurzschließen entfärbte sich der Zellinhalt innerhalb von ca. 10 s wieder und resultierte in dem ursprünglichen Blaßgelb. Mehr als 5 000 solcher Schaltcyclen wurden ohne irgendwelche Veränderungen überstanden.

Ganz analog wurden zu den Beispielen 5 und 6 unter Verwendung der in der Tabelle aufgeführten folgenden elektrochromen Substanzen elektrochrome Zellen aufgebaut, wobei ähnlich gute Ergebnisse erzielt wurden.

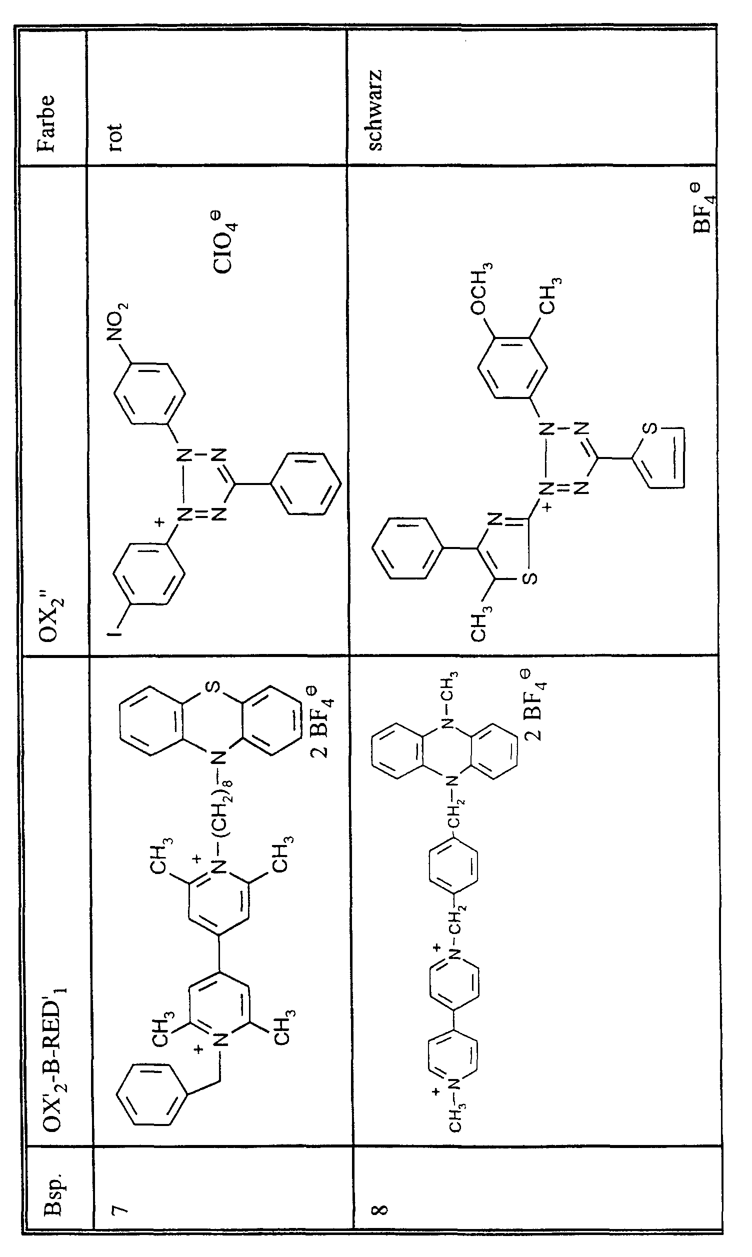

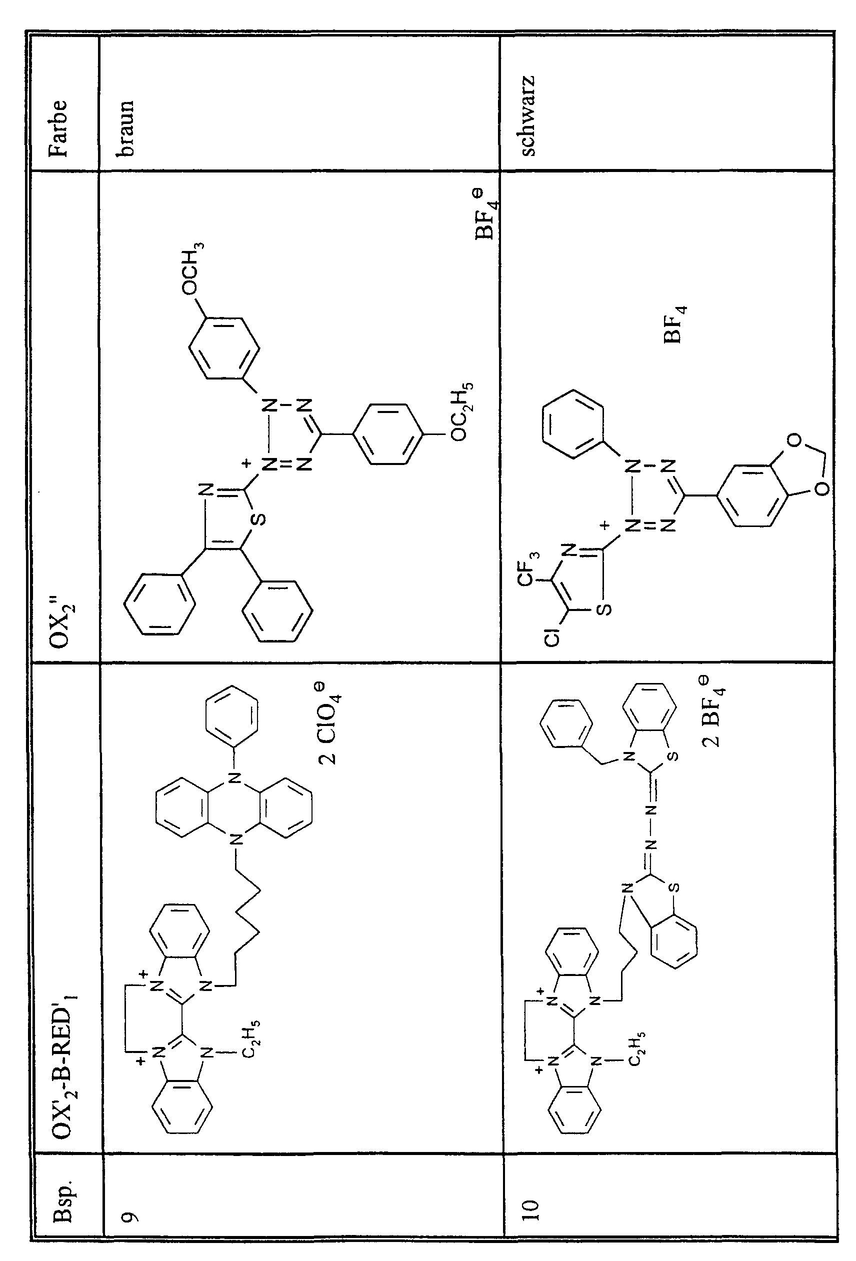

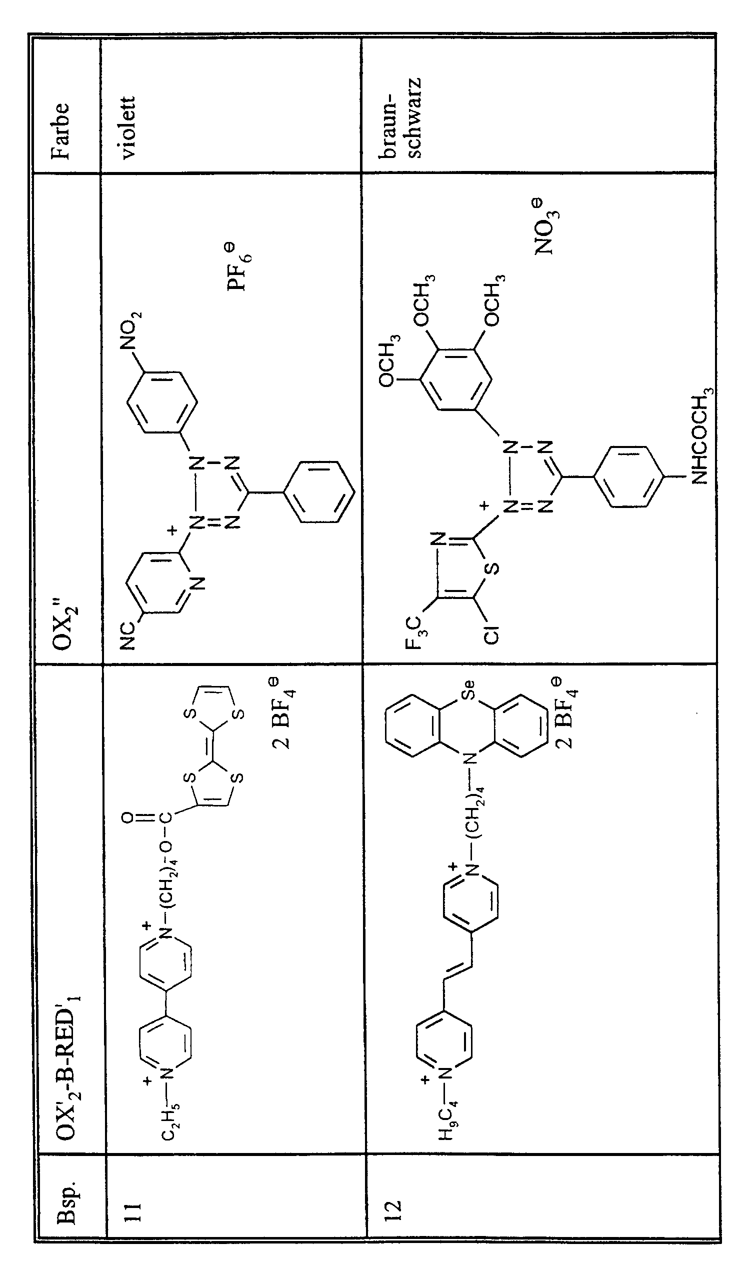

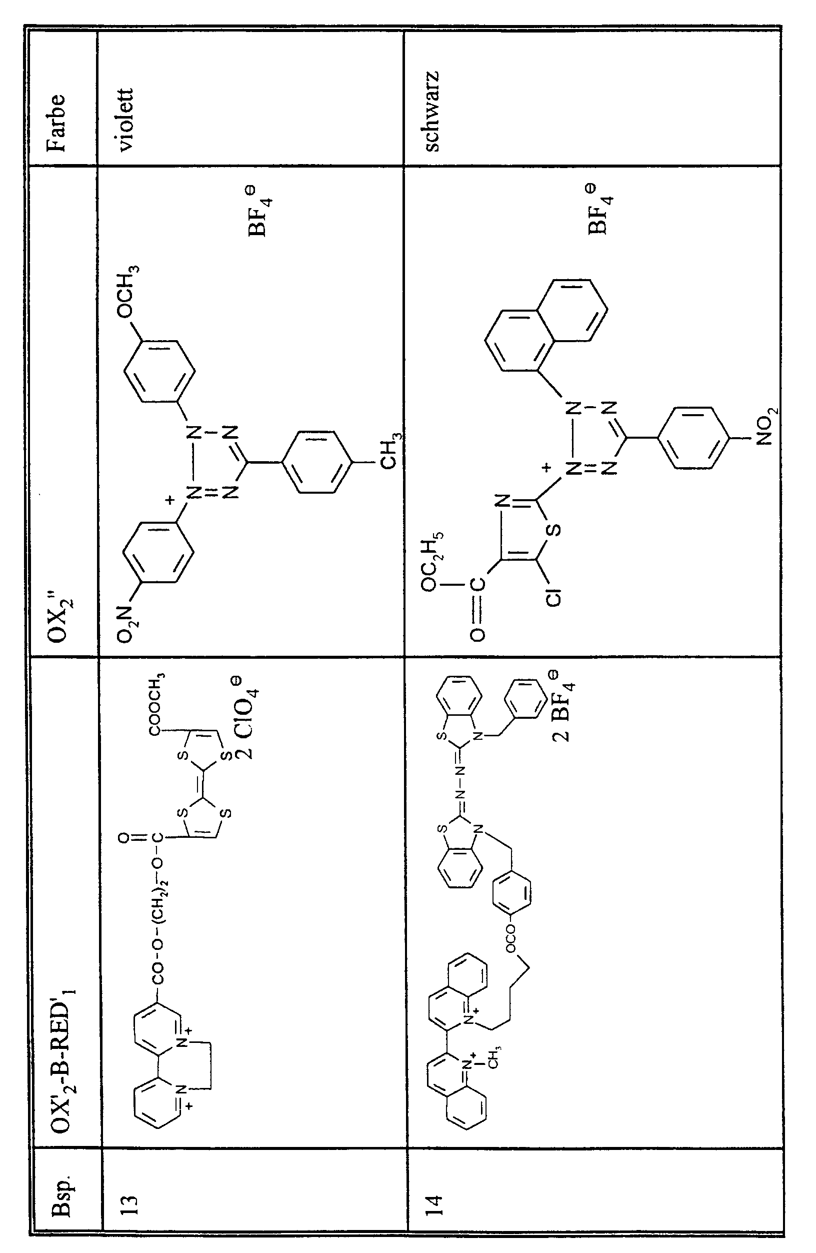

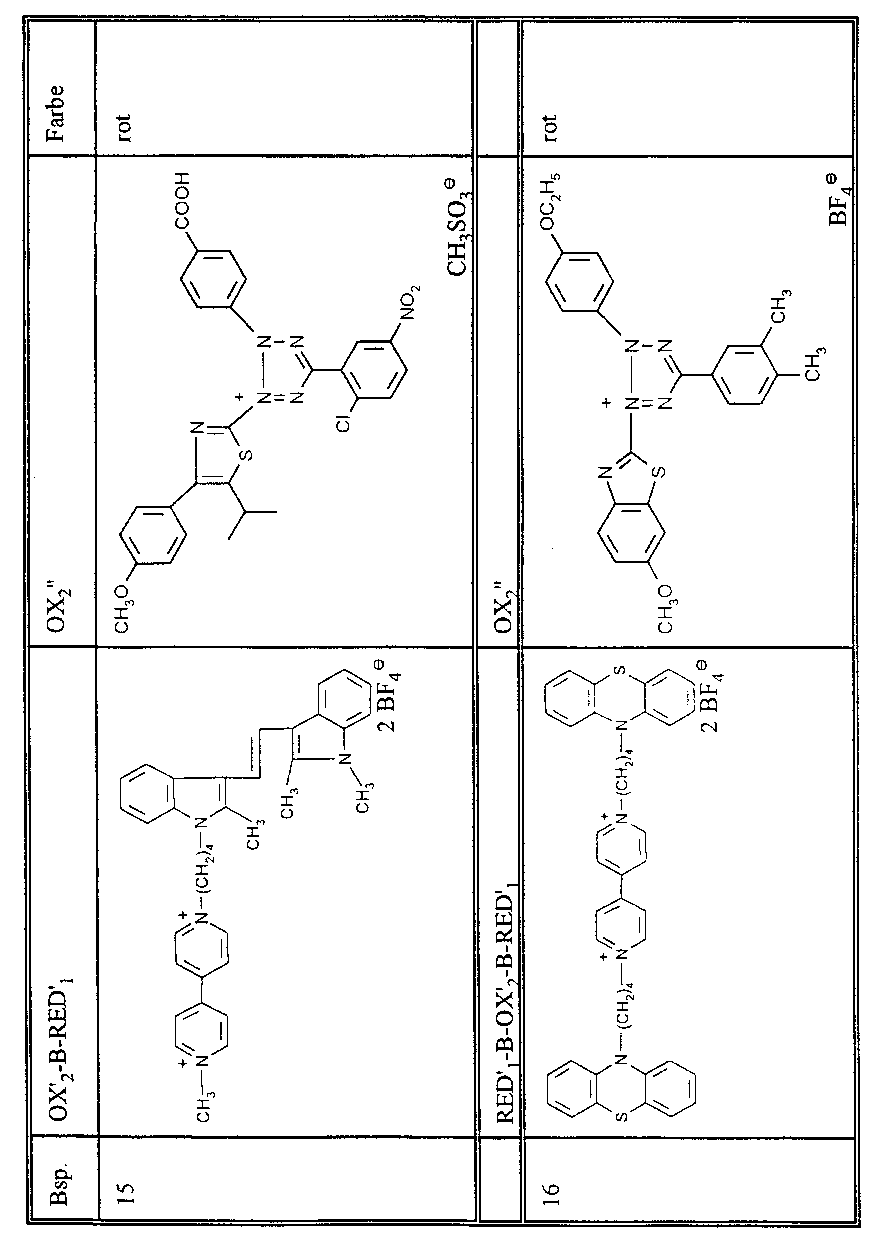

## Patentansprüche

1. Elektrochromes System, enthaltend oxidierbare Substanzen RED₁, die durch Elektronenabgabe an einer Anode und reduzierbare Substanzen OX₂, die durch Elektronenaufnahme an einer Kathode, jeweils unter Zunahme der Extinktion im sichtbaren Bereich des Spektrums von einer schwach gefärbten oder farblosen Form in eine gefärbte Form OX₁ bzw. RED₂ übergehen, wobei durch Ladungsausgleich jeweils die schwach gefärbte bzw. farblose Form zurückgebildet wird, **dadurch gekennzeichnet, daß** es sich bei den Substanzen RED₁ und OX₂ um eine Mischung handelt, enthaltend mindestens ein Paar RED₁' / OX₂', welches über eine Brücke kovalent miteinander verknüpft ist und mindestens eine Substanz RED₁'' oder OX₂", bei der die wechselseitige Umwandlung von oxidierter und reduzierter Form durch Bruch bzw. Bildung einer σ-Bindung erfolgt.

2. Elektrochromes System gemäß Anspruch 1, **dadurch gekennzeichnet, daß** es mindestens ein Paar RED₁' / OX₂' entsprechend der Formel (I) 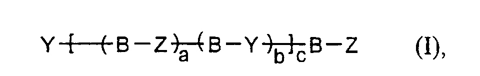 worin
Y und Z unabhängig voneinander für einen Rest OX₂' oder RED₁' stehen, wobei aber mindestens ein Y für OX₂' und mindestens ein Z für RED₁' steht,
wobei
OX₂' für den Rest eines reversibel elektrochemisch reduzierbaren Redoxsystems steht, und
RED₁' für den Rest eines reversibel elektrochemisch oxidierbaren Redoxsystems steht,
B für ein Brückenglied steht,
c für eine ganze Zahl von 0 bis 5 steht, und
a und b unabhängig voneinander für eine ganze Zahl von 0 bis 5 stehen, und
mindestens eine reduzierbare Substanz OX₂", die eine cyclische organische Verbindung darstellt, die nach Aufnahme von 2 Elektronen unter Bruch einer der σ-Bindungen des Ringes in eine ringoffene Verbindung übergeht und die durch Abgabe von 2 Elektronen wieder in die cyclische Ausgangsverbindung übergeht,
enthält.

3. Elektrochromes System gemäß Ansprüchen 1 und 2, **dadurch gekennzeichnet, daß** es sich bei dem Paar RED₁' / OX₂' um mindestens eine elektrochrome Substanz der Formeln
OX₂'-B-RED₁' (Ia),
OX₂'-B-RED₁'-B-OX₂' (Ib),
RED₁'-B-OX₂'-B-RED₁' (Ic),
oder
OX₂'-(B-RED₁'-B-OX₂')_{d}-B-RED₁' (Id),
worin
OX₂', RED₁' und B die oben angegebene Bedeutung haben, und
d für eine ganze Zahl von 1 bis 5 steht,
handelt.

4. Elektrochromes System gemäß Ansprüchen 1 bis 3, **dadurch gekennzeichnet, daß** es sich bei dem Paar RED₁' / OX₂' um eine Substanz der Formeln (Ia) bis (Id),
worin
OX₂' für den Rest einer kathodisch reduzierbaren Substanz steht, die im cyclischen Voltammogramm, aufgenommen in einem inerten Lösungsmittel bei Raumtemperatur, wenigstens zwei chemisch reversible Reduktionswellen zeigt, wobei die erste dieser Reduktionswellen zu einer Zunahme der Extinktion bei wenigstens einer Wellenlänge im sichtbaren Bereich des elektromagnetischen Spektrums führt,
RED₁' für den Rest der anodisch reversibel oxidierbaren Substanz steht, die im cyclischen Voltammogramm, aufgenommen in einem inerten Lösungsmittel bei Raumtemperatur, wenigstens zwei chemisch reversible Oxidationswellen zeigt, wobei die erste dieser Oxidationswellen zu einer Zunahme der Extinktion bei wenigstens einer Wellenlänge im sichtbaren Bereich des elektromagnetischen Spektrums führt, und
B für ein Brückenglied steht,
handelt.

5. Elektrochromes System gemäß Ansprüchen 1 bis 4, **dadurch gekennzeichnet, daß** es sich bei der Substanz OX₂" um eine Verbindung aus der Reihe der Tetrazoliumsalze, Benzo- oder Naphthotriazoliumsalze, Cyclopropane und [1.1.0]Bicyclobutane handelt.

6. Elektrochromes System gemäß Ansprüchen 1 bis 5, **dadurch gekennzeichnet, daß** es sich bei der Substanz OX₂" um ein Tetrazoliumsalz, Naphtholtriazoliumsalz, Cyclopropan und/oder [1.1.0]Bicyclobutan der Formeln 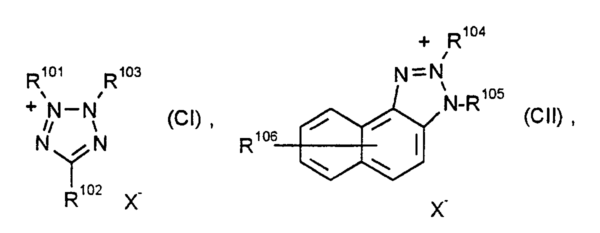 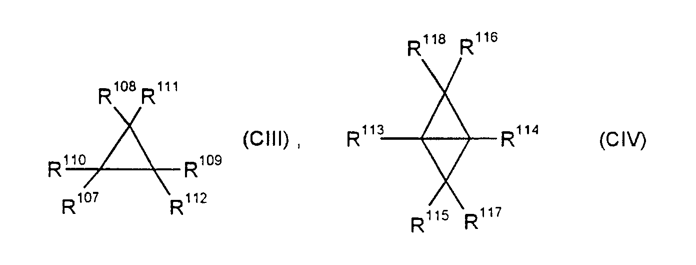 worin
R¹⁰¹ bis R¹⁰⁵ unabhängig voneinander C₆- bis C₁₀-Aryl oder einen gegebenenfalls benzanellierten aromatischen oder quasiaromatischen fünf- oder sechsgliedrigen heterocyclischen Ring bedeuten,
R¹⁰⁷, R¹⁰⁹, R¹¹³ und R¹¹⁴ unabhängig voneinander einen Rest der Formeln (CV) bis (CVII) 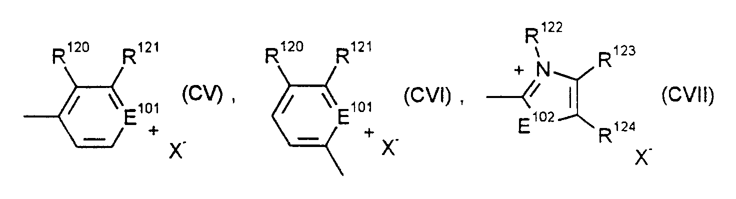
bedeuten,
R¹⁰⁸, R¹¹⁵ und R¹¹⁶ unabhängig voneinander C₆- bis C₁₀-Aryl oder einen Rest der Formeln (CV) bis (CVII) bedeuten,
R¹¹⁰ bis R¹¹², R¹¹⁷ und R¹¹⁸ unabhängig voneinander Wasserstoff, C₁- bis C₄-Alkyl, Halogen oder Cyano bedeuten,
E¹⁰¹ und E¹⁰² unabhängig voneinander O, S oder N-R¹¹⁹ bedeuten,
R¹¹⁹ und R¹²² unabhängig voneinander C₁- bis C₁₈-Alkyl, C₂- bis C₈-Alkenyl, C₄- bis C₇-Cycloalkyl, C₇- bis C₁₅-Aralkyl oder C₆- bis C₁₀-Aryl bedeuten,
R¹⁰⁶, R¹²⁰, R¹²¹, R¹²³ und R¹²⁴ unabhängig voneinander Wasserstoff, C₁- bis C₄-Alkyl, C₁- bis C₄-Alkoxy, Halogen, Cyano, Nitro oder C₁- bis C₄-Alkoxycarbonyl bedeuten oder
R¹²⁰ und R¹²¹ bzw. R¹²³ und R¹²⁴ gemeinsam eine -CH=CH-CH=CH-Brücke bilden,
und
X⁻ ein unter den Bedingungen redox-inertes, farbloses Anion bedeutet,
handelt.

7. Elektrochromes System gemäß Ansprüchen 1 bis 6, **dadurch gekennzeichnet, daß**
als Paar RED₁' / OX₂' mindestens eine Substanz der Formel (Ia)-(Id) enthält,
worin
OX₂' für einen Rest der Formeln (II), (III), (IV) oder (V) steht, 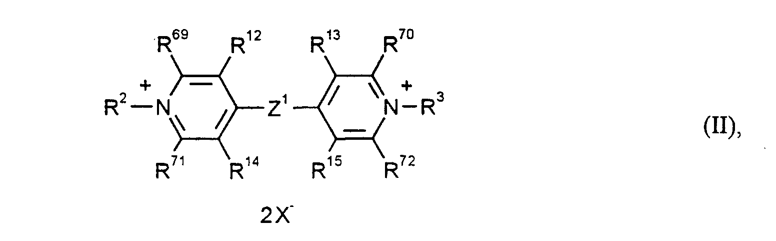 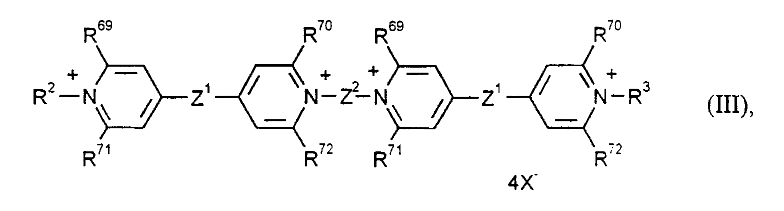 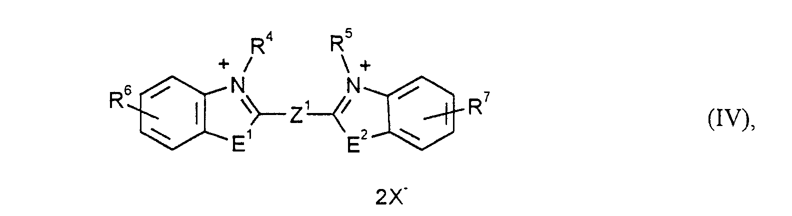 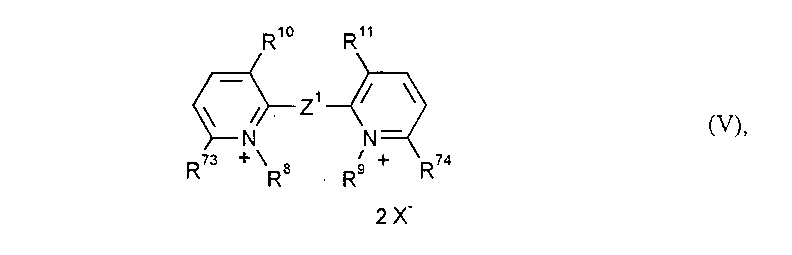
wobei
R², R³, R⁴, R⁵, R⁸ und R⁹ unabhängig voneinander für C₁- bis C₁₂-Alkyl, C₂- bis C₈-Alkenyl, C₅- bis C₇-Cycloalkyl, C₇- bis C₁₅-Aralkyl oder C₆- bis C₁₀-Aryl stehen,
R⁶ und R⁷ unabhängig voneinander für Wasserstoff, Methyl, Ethyl, Methoxy, Ethoxy, Fluor, Chlor, Brom, Cyano, Nitro, Methoxycarbonyl oder Ethoxycarbonyl stehen,
R¹⁰, R¹¹; R¹², R¹³ und R¹⁴, R¹⁵ unabhängig voneinander für Wasserstoff oder, falls Z¹ eine direkte Bindung bedeutet, jeweils gemeinsam für eine -(CH₂)₂-, -(CH₂)₃- oder -CH=CH-Brücke stehen,
oder
R⁴, R⁵ und R⁸, R⁹ unabhängig voneinander paarweise gemeinsam für -(CH₂)₂- oder -(CH₃)₃-Brücke stehen, falls Z¹ eine direkte Bindung bedeutet,
R⁶⁹ bis R⁷⁴ unabhängig voneinander Wasserstoff oder C₁- bis C₄-Alkyl bedeuten,
E¹ und E² gleich sind und für O, S, NR¹ oder C(CH₃)₂ stehen oder gemeinsam eine -N-(CH₂)₂-N-Brücke bilden,
R¹ für C₁- bis C₁₂-Alkyl, C₂- bis C₄-Alkenyl, C₅- bis C₇-Cycloalkyl, C₇- bis C₁₅-Aralkyl oder C₆- bis C₁₀-Aryl steht,
Z¹ für eine direkte Bindung, -CH=CH-, -C(CH₃)=CH-, -C(CN)=CH-, -C≡C- oder -CH=N-N=CH- steht,
Z² für -(CH)ᵣ- oder -CH₂-C₆H₄-CH₂- steht,
r für eine ganze Zahl zwischen 1 und 6 steht,
X⁻ für ein unter den Bedingungen redox-inertes, farbloses Anion steht,
wobei die Bindung zum Brückenglied B über einen der Reste R²-R¹¹ oder im Falle, daß E¹ oder E² für NR¹ steht über R¹ erfolgt und die genannten Reste dann für eine direkte Bindung stehen,
RED₁' für einen Rest der Formeln (X), (XI), (XII), (XIII), (XVI), (XVII), (XVIII) oder (XX) steht, 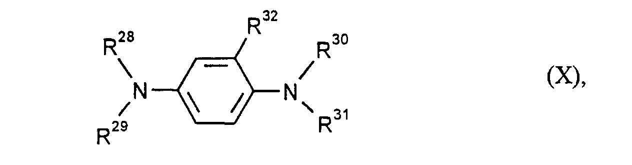 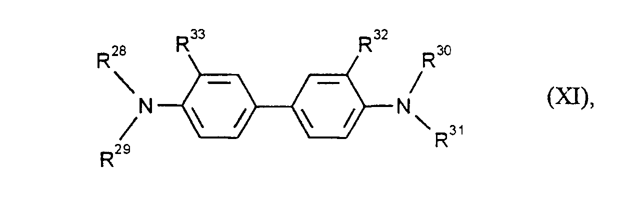 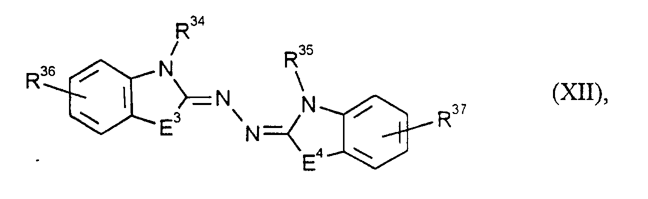 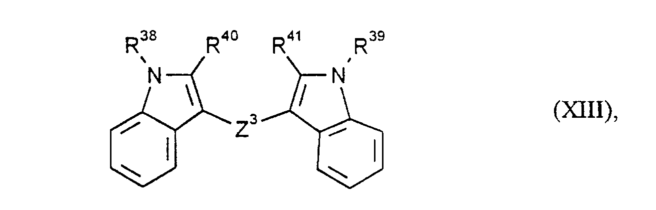 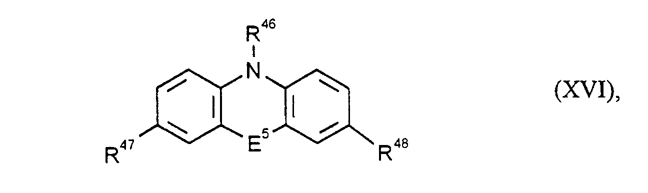 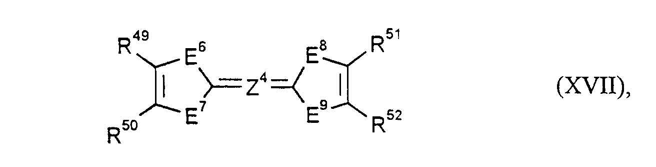 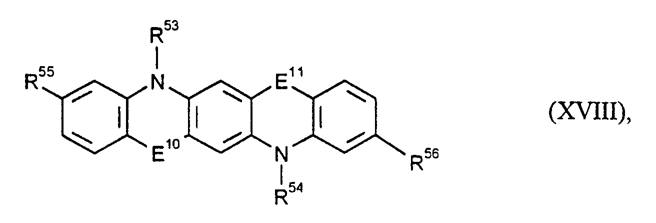 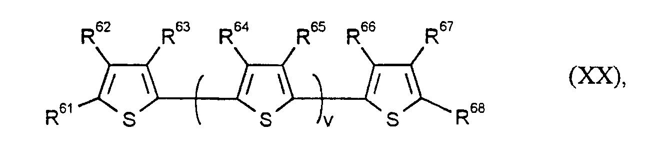
wobei
R²⁸, R²⁹ bis R³¹, R³⁴, R³⁵, R³⁸, R³⁹, R⁴⁶, R⁵³ und R⁵⁴ unabhängig voneinander C₁- bis C₁₂-Alkyl, C₂- bis C₈-Alkenyl, C₅- bis C₇-Cycloalkyl, C₇- bis C₁₅-Aralkyl oder C6- bis C₁₀-Aryl bedeuten,
R³², R³³, R³⁶, R³⁷, R⁴⁰, R⁴¹, R⁴⁷, R⁴⁸, R⁴⁹, R⁵⁰ bis R⁵², R⁵⁵ und R⁵⁶ unabhängig voneinander Wasserstoff, Methyl, Ethyl, Methoxy, Ethoxy, Fluor, Chlor, Brom, Cyan, Nitro, Methoxycarbonyl, Ethoxycarbonyl oder Phenyl bedeuten,
Z³ eine direkte Bindung, eine -CH=CH- oder -N=N-Brücke bedeutet,
=Z⁴= eine direkte Doppelbindung, eine =CH-CH= oder =N-N=-Brücke bedeutet,
E³ bis E⁵, E¹⁰ und E¹¹ unabhängig voneinander O, S, NR⁵⁹ oder C(CH₃)₂ bedeuten, E³ und E⁴ aber die gleiche Bedeutung haben,
E⁶ bis E⁹ untereinander gleich sind und S, Se oder NR⁵⁹ bedeuten oder
E⁶ für NR⁵⁹ steht, wobei R⁵⁹ eine direkte Bindung zur Brücke B bedeutet und
E⁷ bis E⁹ die oben angegebene Bedeutung besitzen, aber untereinander nicht gleich sein müssen,
R⁵⁹ C₁- bis C₁₂-Alkyl, C₂- bis C₈-Alkenyl, C₅- bis C₇-Cycloalkyl, C₇- bis C₁₅-Aralkyl oder C₆- bis C₁₀-Aryl bedeutet,
R⁶¹, R⁶² und R⁶⁷, R⁶⁸ unabhängig voneinander für Wasserstoff, C₁- bis C₄-Alkyl, Methoxycarbonyl, Ethoxycarbonyl oder Phenyl oder paarweise gemeinsam für eine -(CH₂)₃- oder -(CH₂)₄-Brücke stehen,
R⁶³ bis R⁶⁶ für Wasserstoff stehen und
v für eine ganze Zahl von 1 bis 6 steht,
wobei die Bindung zum Brückenglied B über einen der Reste R²⁸-R⁴¹, R⁴⁶-R⁵⁶, R⁶¹, R⁶², R⁶⁷, R⁶⁸ oder im Falle, daß einer der Reste E³-E¹¹ für NR⁵⁹ steht, über R⁵⁹ erfolgt und die genannten Reste dann für eine direkte Bindung stehen,
B für ein Brückenglied der Formeln -(CH₂)ₙ-, -(CH₂)ₘ-O-(CH₂)ₚ-,
-(CH)ₘ-NR⁶⁰-(CH₂)ₚ-, -(CH₂)ₘ-C₆H₄-(CH₂)ₚ-, -[O-(CH₂)ₚ]ₒ-O-,
-[NR⁶⁰-(CH₂)ₚ]ₒ-NR⁶⁰-, -[C₆H₄-(CH₂)ₚ]ₒ-C₆H₄-,
-(CH₂)ₘ-OCO-C₆H₄-COO-(CH₂)ₚ-,
-(CH₂)ₘ-NHCO-C₆H₄-CONH-(CH₂)ₚ-,
-(CH₂)ₘ-NHCONH-C₆H₄-NHCONH-(CH₂)ₚ-,
-(CH₂)ₘ-OCO-(CH₂)ₜ-COO-(CH₂)-,
-(CH₂)ₘ-NHCO-(CH₂)ₜ-CONH-(CH)ₚ-,
-(CH₂)ₘ-NHCONH-(CH₂)ₜ-NHCONH-(CH₂)ₚ-steht,
R⁶⁰ für Methyl, Ethyl, Benzyl oder Phenyl steht,
n für eine ganze Zahl von 1 bis 10 steht,
m und p unabhängig voneinander für eine ganze Zahl von 0 bis 4 stehen,
o für eine ganze Zahl von 0 bis 2 steht und
t für eine ganze Zahl von 1 bis 6 steht und
als Substanz OX₂" mindestens ein Tetrazoliumsalz der Formel (CI) enthält,
worin
R¹⁰¹ und R¹⁰² einem Rest der Formel (CXIX) entsprechen,
R¹⁰³ einem Rest der Formel (CXX) entspricht,
R¹⁵⁷, R¹⁵⁹ und R¹⁶⁰ unabhängig voneinander Wasserstoff, Methyl, Ethyl, Methoxy, Ethoxy, Cyano, Nitro, -N⁺(CH₃)₃ oder COOH bedeuten oder
R¹⁵⁷ und R¹⁵⁹ gemeinsam eine -O-CH₂-O-Brücke bilden,
R¹⁵⁸ Wasserstoff, Methyl, Methoxy oder Chlor bedeutet,
R¹⁶¹ Methyl, Difluormethyl, Trifluormethyl, Methoxycarbonyl, Ethoxycarbonyl oder Phenyl bedeutet,
R¹⁶² Wasserstoff, Methyl, Ethyl, Phenyl oder Chlor bedeutet oder
R¹⁶¹ und R¹⁶² zusammen eine -CH=CH-CH=CH- oder -CH=CH-C(OCH₃)=CH-Brücke bilden,
E¹¹² S bedeutet,
X⁻ ein unter den Bedingungen redox-inertes, farbloses Anion bedeutet.

8. Elektrochromes System gemäß den Ansprüchen 1 bis 7, **dadurch gekennzeichnet, daß**
als Paar RED₁' / OX₂' mindestens eine Substanz der Formel (Ia)-(Id) enthält,
worin
OX₂' für einen Rest der Formeln (II), (IV) oder (V) gemäß Anspruch 7 steht,
worin
R², R⁴ und R⁸ für eine direkte Bindung zum Brückenglied B stehen,
R³, R⁵ und R⁹ unabhängig voneinander für Methyl, Ethyl, Propyl, Butyl, Pentyl, Hexyl, Heptyl, Octyl, Benzyl oder Phenyl stehen, oder im Falle der Formeln Ic oder Id ebenfalls für eine direkte Bindung zum Brückenglied B stehen,
R⁶ und R⁷ gleich sind und für Wasserstoff, Methyl, Methoxy, Chlor, Cyano oder Methoxycarbonyl stehen,
R¹⁰, R¹¹; R¹², R¹³ und R¹⁴, R¹⁵ unabhängig voneinander für Wasserstoff oder, falls Z¹ eine direkte Bindung bedeutet, jeweils paarweise zusammen für eine -CH=CH-Brücke stehen,
R⁶⁹ bis R⁷² gleich sind und Wasserstoff, Methyl oder Ethyl bedeuten,
R⁷³ und R⁷⁴ Wasserstoff bedeuten,
E¹ und E² gleich sind und für O oder S stehen,
Z¹ für eine direkte Bindung oder -CH=CH- steht,
X⁻ für ein unter den Bedingungen redox-inertes, farbloses Anion steht,
RED₁' für einen Rest der Formeln (X), (XII), (XIII), (XVI) oder (XVII) gemäß Anspruch 7 steht,
worin
R²⁸, R³⁴, R³⁸, R⁴⁶ und R⁴⁹ für eine direkte Bindung zum Brückenglied B stehen,
R²⁹ bis R³¹, R³⁵ und R³⁹ unabhängig voneinander für Methyl, Ethyl, Propyl, Butyl, Pentyl, Hexyl, Heptyl, Octyl, Benzyl oder Phenyl stehen, oder im Falle der Formeln Ib oder Id R³⁰, R³⁵ und R³⁹ ebenfalls für die direkte Bindung um Brückenglied B stehen,
R³², R⁴⁷ und R⁴⁸ für Wasserstoff stehen,
R³⁶, R³⁷, R⁴⁰, R⁴¹ und R⁵⁰ bis R⁵² unabhängig voneinander für Wasserstoff, Methyl, Methoxy, Chlor, Cyan, Methoxycarbonyl oder Phenyl stehen, oder im Falle der Formeln Ib oder Id R⁵¹ ebenfalls für eine direkte Bindung zum Brückenglied B steht,
Z³ für eine direkte Bindung, eine -CH=CH- oder -N=N-Brücke steht,
=Z⁴= für eine direkte Doppelbindung, eine =CH-CH= oder =N-N=-Brücke steht,
R³ bis E⁵ unabhängig voneinander für O, S oder NR⁵⁹ stehen, E³ und E⁴ aber die gleiche Bedeutung haben,
E⁶ bis E⁹ untereinander gleich sind und für S, Se oder NR⁵⁹ stehen,
R⁵⁹ für Methyl, Ethyl, Propyl, Butyl, Pentyl, Hexyl, Heptyl, Octyl, Benzyl oder Phenyl steht, oder im Falle der Formel XVI in Ib oder Id ebenfalls für eine direkte Bindung zum Brückenglied B steht,
B für ein Brückenglied der Formeln -(CH₂)ₙ-, -(CH₂)ₘ-O-(CH₂)ₚ-,
-(CH₂)ₘ-NR⁶⁰-(CH₂)ₚ-, -(CH₂)ₘ-C₆H₄-(CH₂)ₚ-,
-O-(CH₂)ₚ-O-, -NR⁶⁰-(CH₂)ₚ-NR⁶⁰-,
-(CH₂)ₘ-OCO-C₆H₄-COO-(CH₂)ₚ-,
-(CH₂)ₘ-NHCO-C₆H₄-CONH-(CH₂)ₚ-,
-(CH₂)ₘ-NHCONH-C₆H₄-NHCONH-(CH₂)ₚ-,
-(CH₂)ₘ-OCO-(CH)ₜ-COO-(CH₂)ₚ-,
-(CH₂)ₘ-NHCO-(CH₂)ₜ-CONH-(CH₂)ₚ-,
-(CH₂)ₘ-NHCONH-(CH₂)ₜ-NHCONH-(CH₂)ₚ- steht,
R⁶⁰ für Methyl steht,
n für eine ganze Zahl von 1 bis 10 steht,
m und p gleich sind und für eine ganze Zahl von 0 bis 2 stehen und
t für eine ganze Zahl von 1 bis 6 steht und
als Substanz OX₂" mindestens eine Substanz der Formel (CI) enthält, 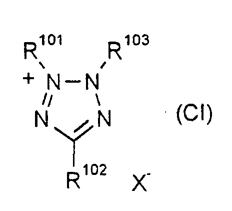 wobei
R¹⁰¹, R¹⁰², R¹⁰³ und X⁻ die in Anspruch 6 angegebene Bedeutung haben,
enthält.

9. Elektrochromes System gemäß den Ansprüchen 1 bis 8, **dadurch gekennzeichnet, daß** als Paar RED₁' / OX₂' mindestens eine Substanz der Formel (Ia) entsprechend einer der Formeln 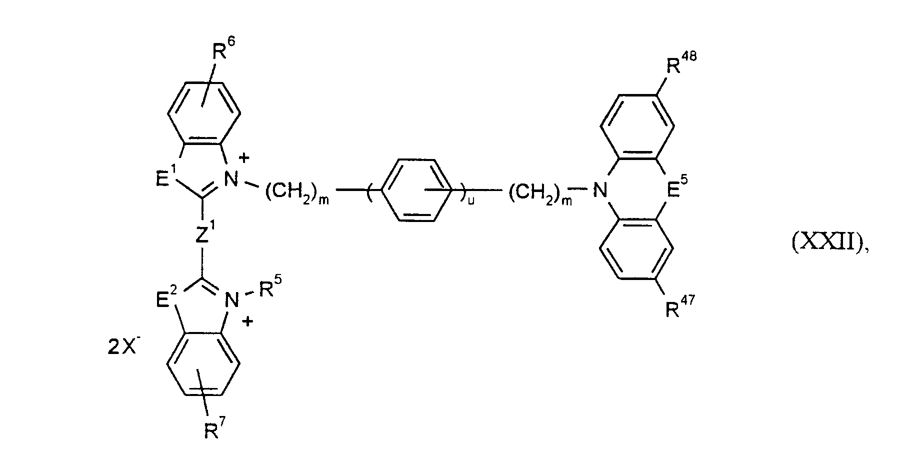 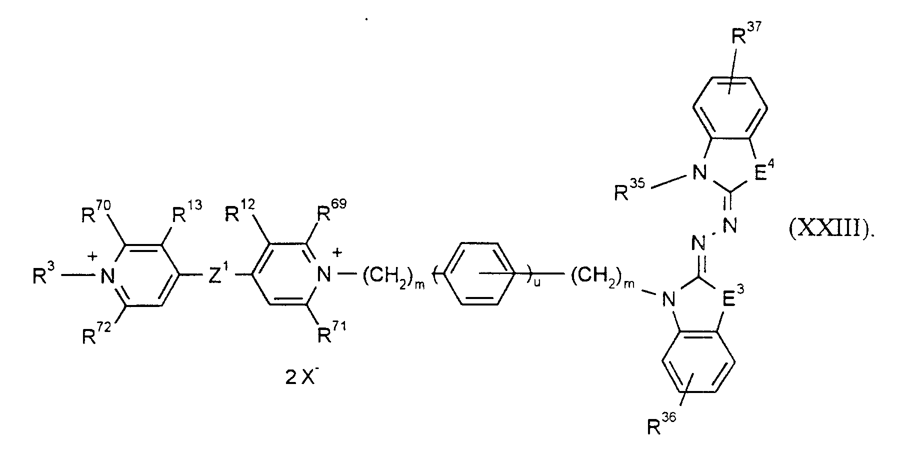 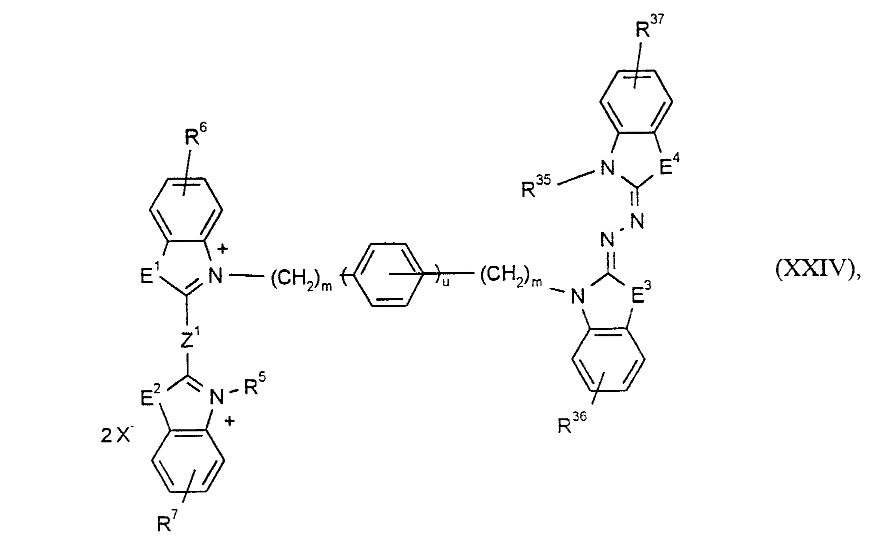 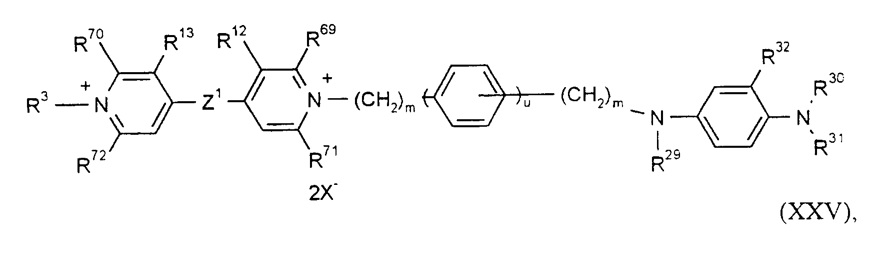 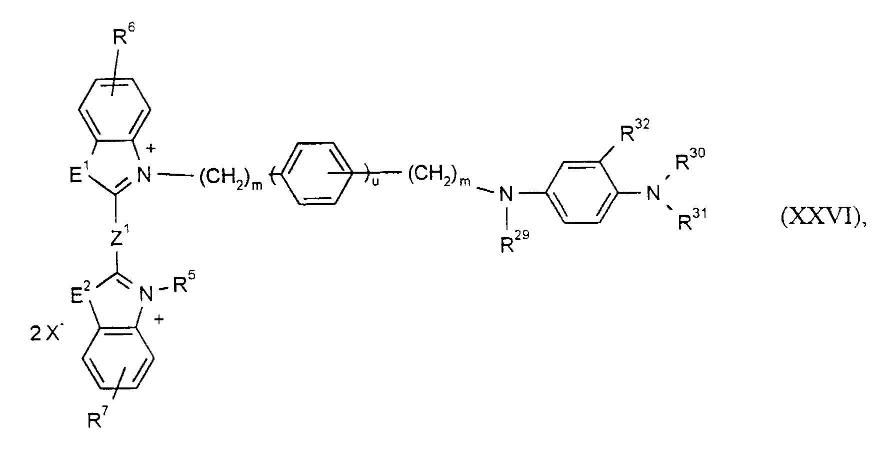 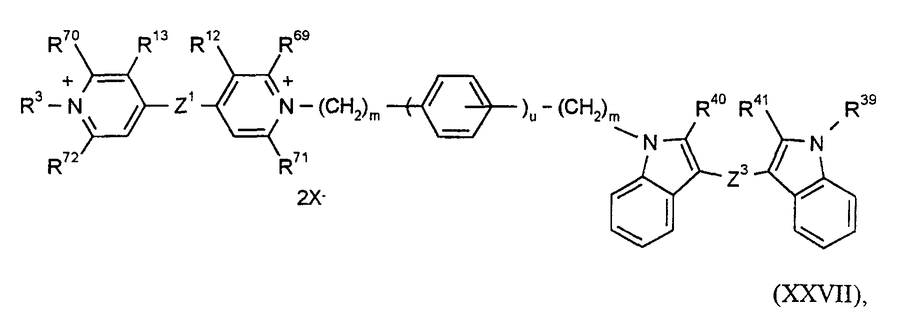 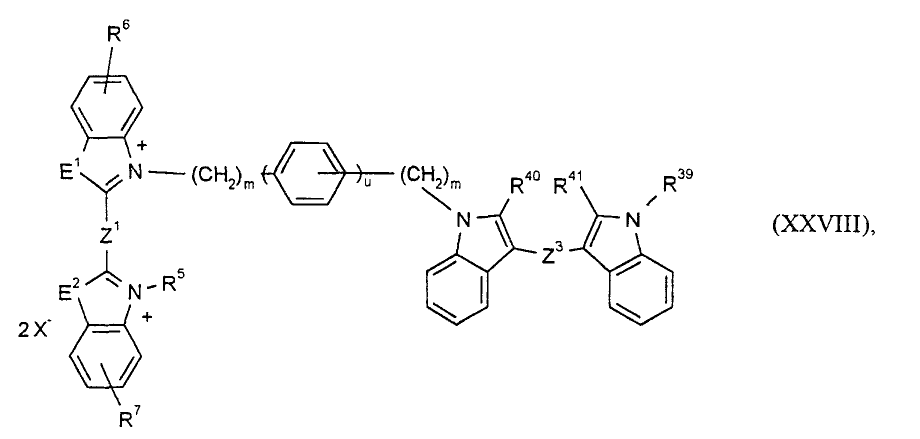 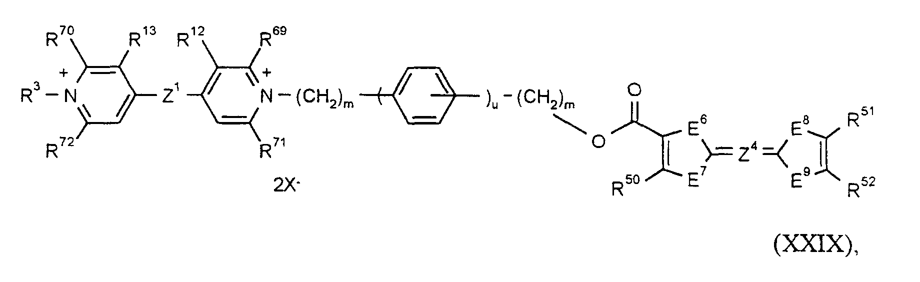 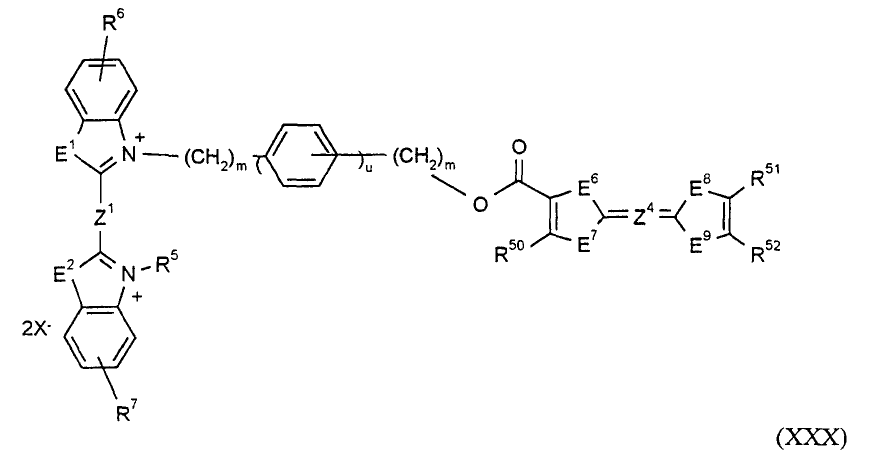 enthält, oder mindestens eine Substanz der Formel (Ib) entsprechend einer der Formeln 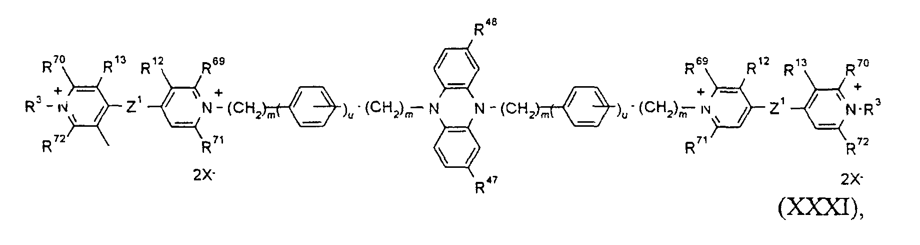 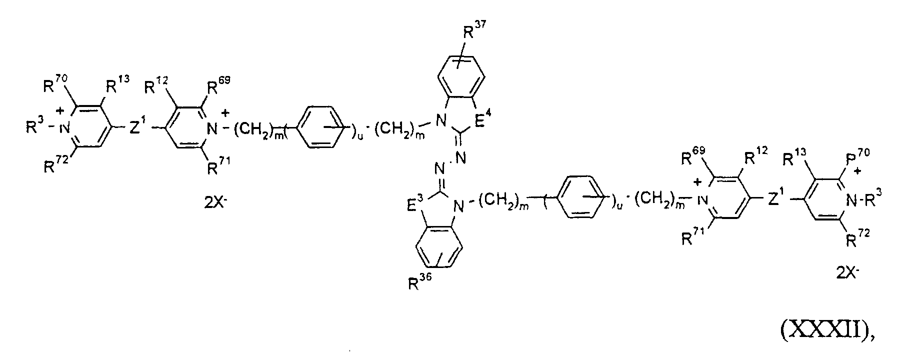 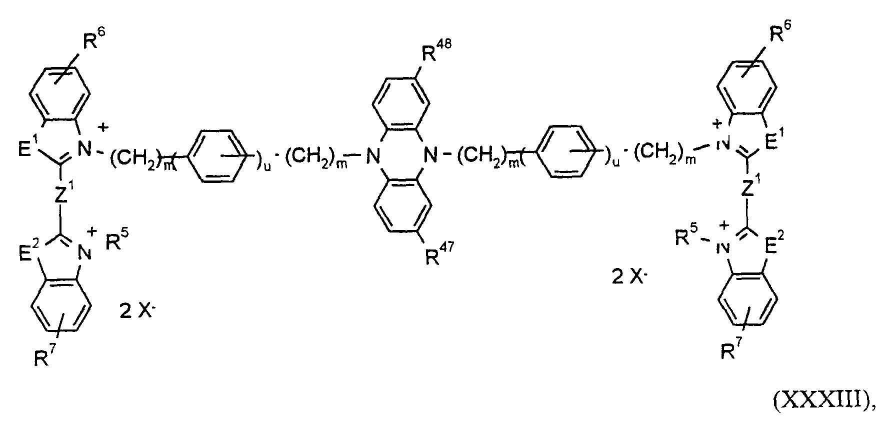 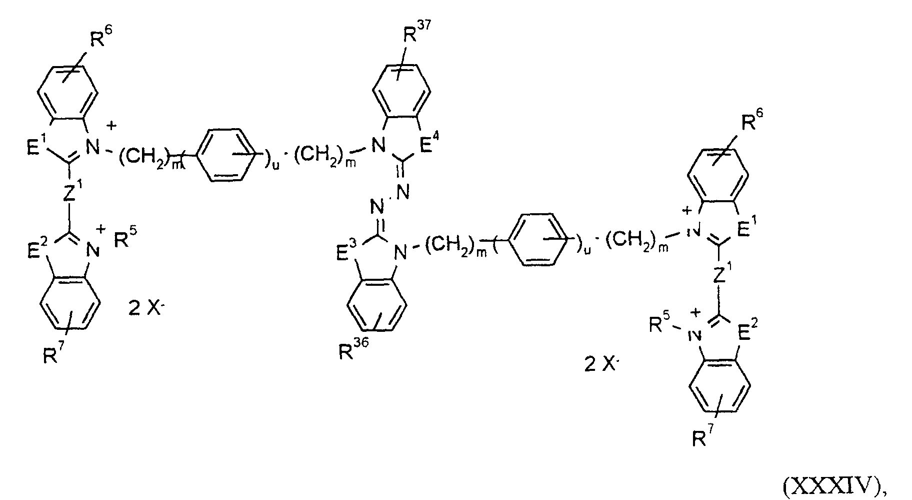 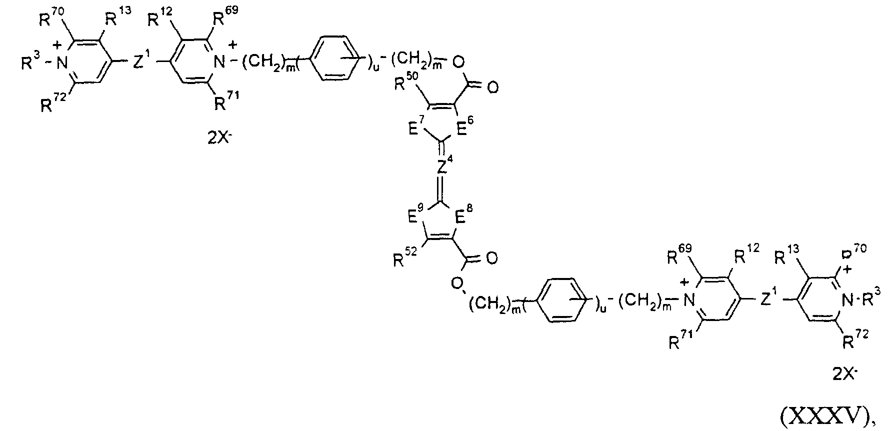 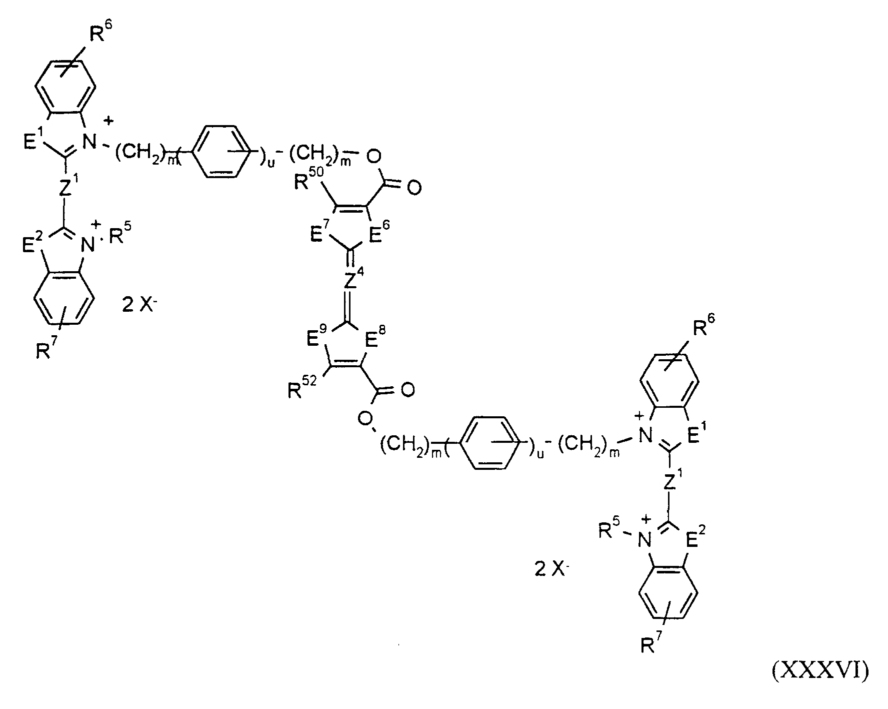 oder mindestens eine Substanz der Formel (Ic) entsprechend einer der Formeln 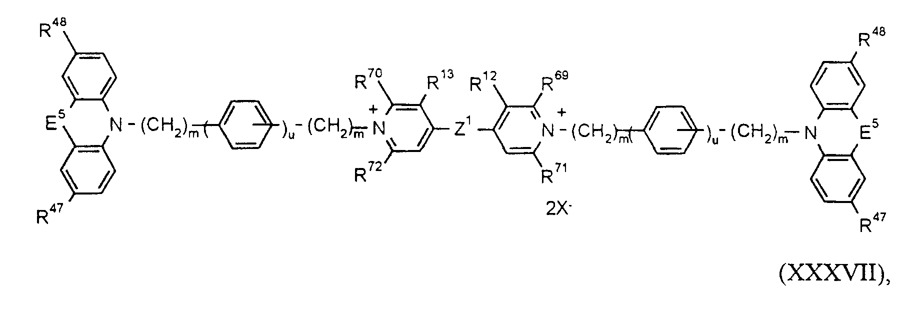 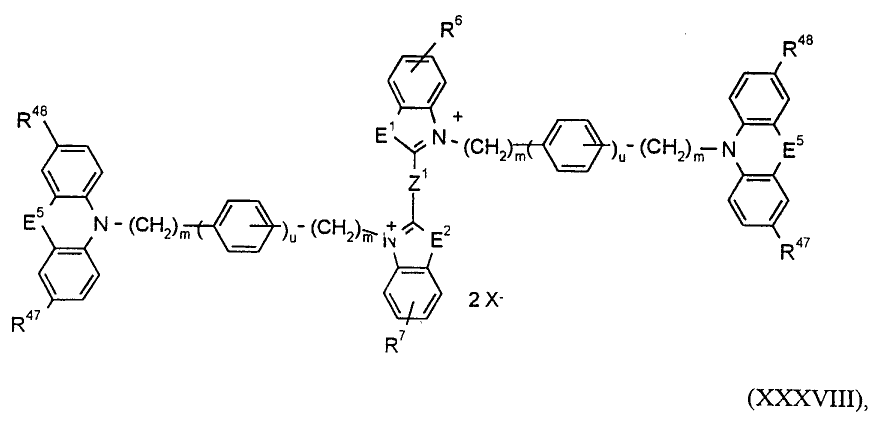 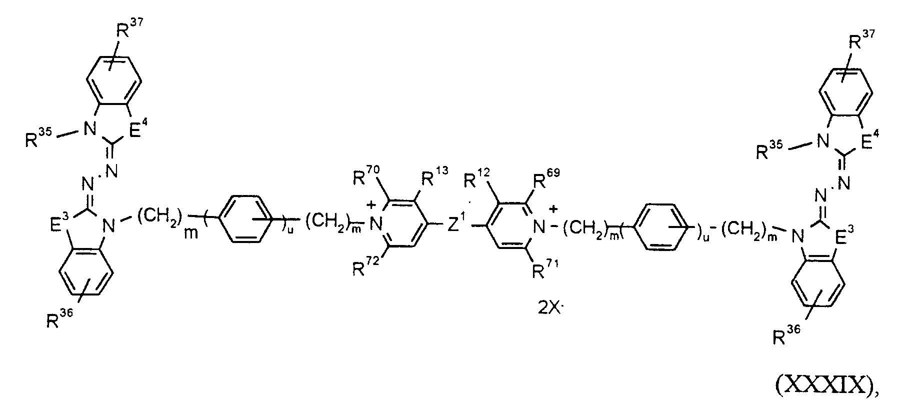 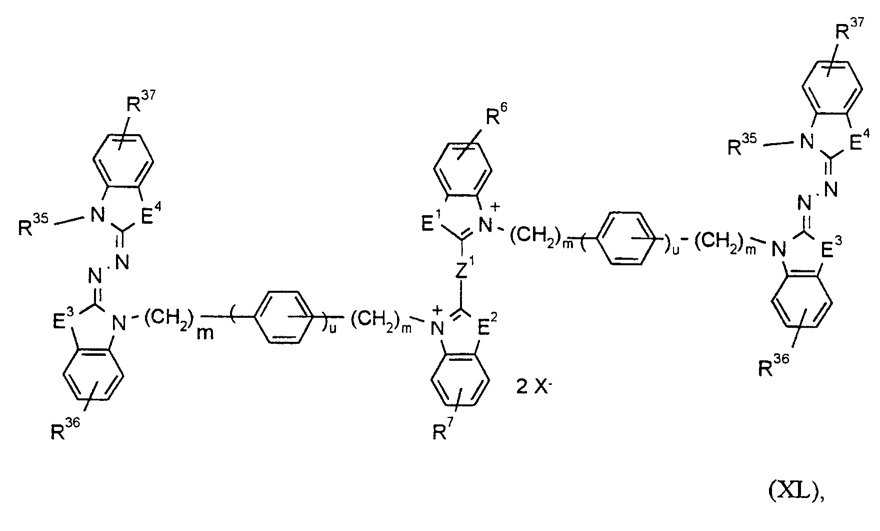 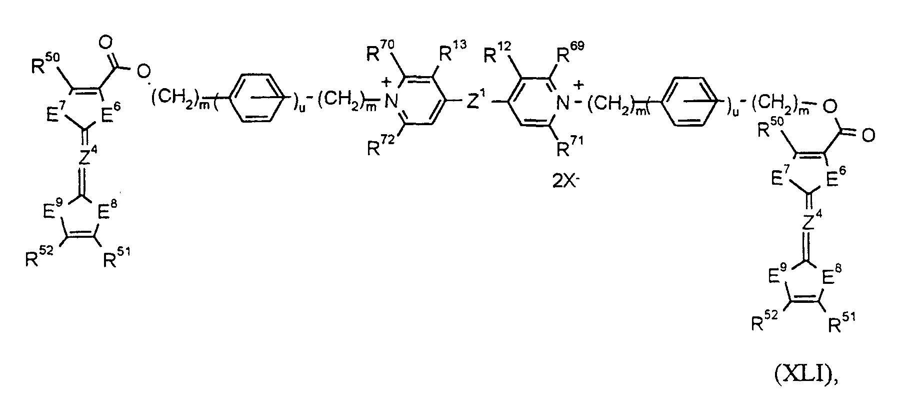 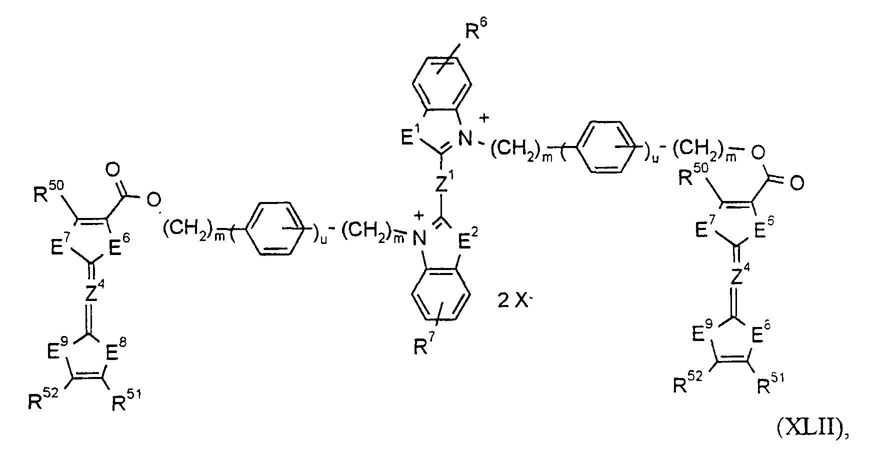 worin
R³, R⁵, R³⁵ und R³⁹ unabhängig voneinander für Methyl, Ethyl, Propyl, Butyl, Pentyl, Hexyl oder Benzyl stehen,
R⁶, R⁷ und R³⁶, R³⁷ paarweise gleich sind und für Wasserstoff, Methyl, Methoxy, Chlor, Cyano oder Methoxycarbonyl stehen,
R¹² und R¹³ für Wasserstoff oder, wenn Z¹ eine direkte Bindung bedeutet, gemeinsam für eine CH=CH-Brücke stehen,
R⁶⁹ bis R⁷² gleich sind und für Wasserstoff oder Methyl stehen,
E¹ und E² gleich sind und für O oder S stehen,
Z¹ für eine direkte Bindung oder -CH=CH- steht,
R³², R⁴⁷ und R⁴⁸ für Wasserstoff stehen,
E³ bis E⁵ unabhängig voneinander für O, S oder NR⁵⁹ stehen, wobei E³ und E⁴ aber gleich sind,
R²⁹ bis R³¹ und R⁵⁹ unabhängig voneinander für Methyl, Ethyl, Propyl, Butyl, Pentyl, Hexyl oder Benzyl stehen, wobei R²⁹ bis R³¹ vorzugsweise gleich sind,
R⁴⁰ und R⁴¹ gleich sind und für Wasserstoff, Methyl, Ethyl, Propyl, Butyl oder Phenyl stehen,
Z³ für eine direkte Bindung, -CH=CH- oder -N=N- steht,
R⁵⁰ bis R⁵² unabhängig voneinander für Wasserstoff, Methyl, Methoxy, Chlor, Cyano, Methoxycarbonyl, Ethoxycarbonyl oder Phenyl stehen, vorzugsweise jedoch gleich sind,
E⁶ bis E⁹ untereinander gleich sind und für S, Se oder NR⁵⁹ stehen,
Z⁴ für eine direkte Doppelbindung, eine =CH-CH= oder =N-N=-Brücke steht,
m für eine ganze Zahl von 1 bis 5 steht,
u für 0 oder 1 steht und
X⁻ für ein unter den Bedingungen redox-inertes, farbloses Anion steht,
wobei die Darstellung 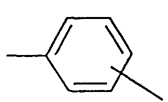 in den oben angegebenen Formeln eine Anknüpfung in o, m- oder p-Stellung bedeutet, und
b) als Substanz OX₂" mindestens eine Substanz der Formel (CI) gemäß Anspruch 6 enthält.

10. Elektrochrome Flüssigkeit enthaltend ein elektrochromes System gemäß wenigstens einem der Ansprüche 1 bis 9 und mindestens ein inertes Lösungsmittel.

11. Elektrochrome Vorrichtung enthaltend eine elektrochrome Flüssigkeit gemäß Anspruch 10.

12. Elektrochrome Vorrichtung gemäß Anspruch 11, **dadurch gekennzeichnet, daß** sie als Solarzelle, als Fensterscheibe, Spiegel, Sonnendach oder Display ausgebildet ist.

13. Elektrochrome Vorrichtung gemäß Ansprüchen 11 und 12, **dadurch gekennzeichnet, daß** sie aus zwei einander zugewandten lichtdurchlässigen Glas- oder Kunststoffscheiben besteht, von denen gegebenenfalls eine verspiegelt ist und deren einander zugewandte Seiten elektrisch leitfähig beschichtet sind, zwischen denen die elektrochrome Flüssigkeit enthalten ist.

## Claims

1. Electrochromic system comprising oxidizable substances RED₁ which, by releasing electrons at an anode, are converted from a weakly coloured or colourless form into a coloured form OX₁, and reducible substances OX₂ which, by accepting electrons at a cathode, are converted from a weakly coloured or colourless form into a coloured form RED₂, the absorbance in the visible region of the spectrum increasing in each of these cases, and the weakly coloured or colourless form being recovered in each case after charge equalization, **characterized in that** the substances RED₁ and OX₂ are a mixture comprising at least one couple RED₁'/OX₂' which is linked covalently to one another via a bridge and at least one substance RED₁" or OX₂" in which the reciprocal conversion of oxidized and reducible form takes place by a σ bond being broken or formed.

2. Electrochromic system according to Claim 1, **characterized in that** it comprises at least one couple RE₁'/OX₂' corresponding to the formula (I) 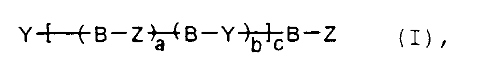 in which
Y and Z independently of one another represent a radical OX₂' or RED₁', but where at least one Y represents OX₂' and at least one Z represents RED₁',
where
OX₂' represents the radical of a reversibly electrochemically reducible redox system, and
RED₁' represents the radical of a reversibly electrochemically oxidizable redox system,
B represents a bridge member,
c represents an integer from 0 to 5, and
a and b independently of one another represent an integer from 0 to 5, and
at least one reducible substance OX₂" which represents a cyclic organic compound which, after accepting 2 electrons, is converted, one of the σ bonds of the ring being broken, into an open-ring compound and which, by releasing 2 electrons, is converted once more into the cyclic starting compound.

3. Electrochromic system according to Claims 1 or 2, **characterized in that** the couple RED₁'/OX₂' is at least one electrochromic substance of the formulae
OX₂' -B-RED₁' (Ia),
OX₂'-B-RED₁'-B-OX₂' (Ib),
RED₁'-B-OX₂'-B-RED₁' (Ic),
or
OX₂'- (B-RED₁'-B-OX₂')_{d}-B-RED₁' (Id),
in which
OX₂', RED₁' and B have the abovementioned meanings, and
d represents an integer from 1 to 5.

4. Electrochromic system according to Claims 1 to 3, **characterized in that** the couple RED₁'/OX₂' is a substance of the formulae (Ia) to (Id),
in which
OX₂' represents the radical of a cathodically reducible substance which in a cyclic voltammogram, recorded in an inert solvent at room temperature, exhibits at least two chemically reversible reduction waves, the first of these reduction waves leading to an increase in the absorbance at at least one wavelength in the visible range of the electromagnetic spectrum,
RED₁' represents the radical of the anodically reversibly oxidizable substance which in a cyclic voltammogram, recorded in an inert solvent at room temperature, exhibits at least two chemically reversible oxidation waves, the first of these oxidation waves leading to an increase in the absorbance at at least one wavelength in the visible range of the electromagnetic spectrum, and
B represents a bridge member.

5. Electrochromic system according to Claims 1 to 4, **characterized in that** the substance OX₂" is a compound selected from the group consisting of the tetrazolium salts, benzo- or naphthotriazolium salts, cyclopropanes and [1.1.0]bicyclobutanes.

6. Electrochromic system according to Claims 1 to 5, **characterized in that** the substance OX₂" is a tetrazolium salt, naphthotriazolium salt, cyclopropane and/or [1.1.0]bicyclobutane of the formulae 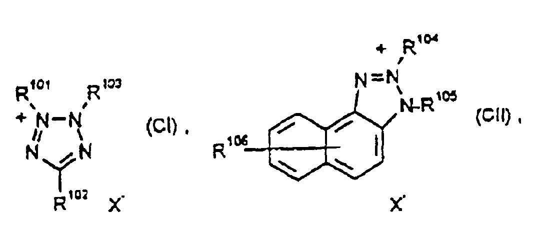 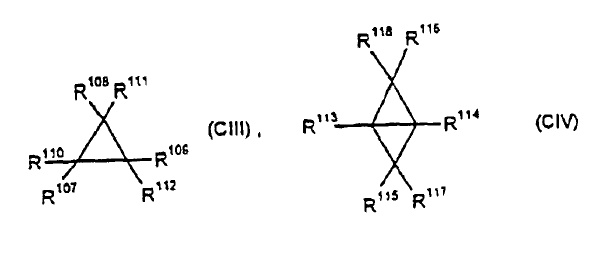 in which
R¹⁰¹ to R¹⁰⁵, independently of one another, represent C₆- to C₁₀-aryl or an aromatic or quasi-aromatic five- or six-membered heterocyclic ring, each of which is optionally benzanellated,
R¹⁰⁷, R¹⁰⁹, R¹¹³ and R¹¹⁴, independently of one another, represent a radical of the formulae (CV) to (CVII) 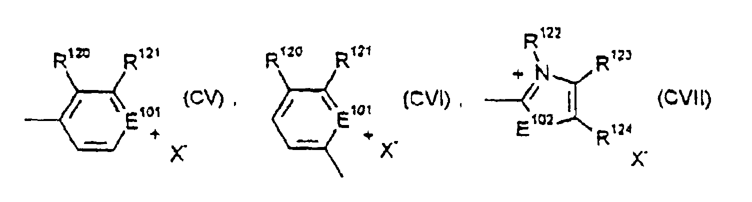
R¹⁰⁸, R¹¹⁵ and R¹¹⁶, independently of one another, represent C₆- to C₁₀-aryl, or a radical of the formulae (CV) to (CVII),
E¹⁰¹ and E¹⁰², independently of one another, represent O, S or N-R¹¹⁹,
R¹¹⁹ and R¹²², independently of one another, represent C₁- to C₁₈-alkyl, C₂- to C₈-alkenyl, C₄- to C₇-cycloalkyl, C₇- to C₁₅-aralkyl or C₆- to C₁₀-aryl,
R¹⁰⁶, R¹²⁰, R¹²¹, R¹²³ and R¹²⁴, independently of one another, represent hydrogen, C₁- to C₄-alkyl, C₁- to C₄-alkoxy, halogeno, cyano, nitro or C₁- to C₄-alkoxycarbonyl, or
R¹²⁰ and R¹²¹, or R¹²³ and R¹²⁴, jointly form a -CH=CH-CH=CH- bridge,
and
X⁻ represents a colourless anion which is redox-inert under the conditions.

7. Electrochromic system according to Claims 1 to 6, **characterized in that** it comprises
as the couple RED₁'/OX₂' at least one substance of the formula (Ia)-(Id),
in which
OX₂' represents a radical of the formulae (II), (III), (IV) or (V), 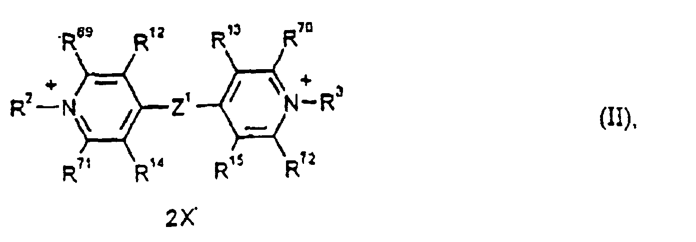 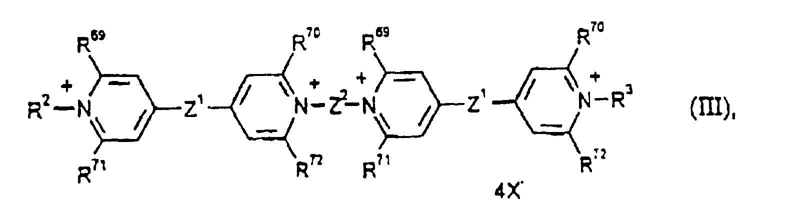 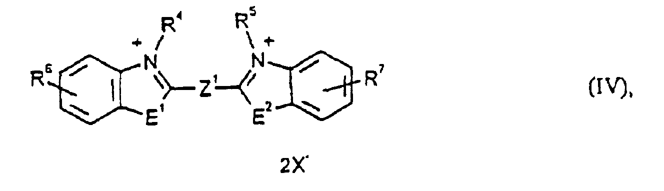 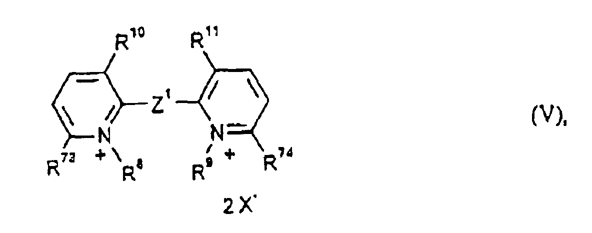 in which
R², R³, R⁴, R⁵, R⁸ and R⁹, independently of one another, represent C₁- to C₁₂-alkyl, C₂- to C₈-alkenyl, C₅- to C₇-cycloalkyl, C₇- to C₁₅-aralkyl or C₆- to C₁₀-aryl,
R⁶ and R⁷, independently of one another, represent hydrogen, methyl, ethyl, methoxy, ethoxy, fluoro, chloro, bromo, cyano, nitro, methoxycarbonyl or ethoxycarbonyl,
R¹⁰, R¹¹; R¹², R¹³ and R¹⁴, R¹⁵, independently of one another, represent hydrogen or, if Z¹ represents a direct bond, in each case jointly represent a - (CH₂)₂-, -(CH₂)₃- or -CH=CH-bridge,
or
R⁴, R⁵ and R⁸, R⁹, independently of one another, pairwise jointly represent a - (CH₂)₂- or - (CH₂)₃-bridge, if Z¹ represents a direct bond,
R⁶⁹ to R⁷⁴, independently of one another, represent hydrogen or C₁- to C₄-alkyl,
E¹ and E² are identical and represent O, S, NR¹ or C(CH₃)₂ or jointly form an -N-(CH₂)₂-N- bridge,
R¹ represents C₁- to C₁₂-alkyl, C₂- to C₄-alkenyl, C₅- to C₇-cycloalkyl, C₇- to C₁₅-aralkyl or C6- to C₁₀-aryl,
Z¹ represents a direct bond, -CH=CH-, -C(CH₃)=CH-, -C(CN)=CH-, -C≡C- or -CH=N-N=CH-,
Z² represents - (CH₂)ᵣ- or -CH₂-C₆H₄-CH₂-,
r represents an integer between 1 and 6,
X⁻ represents a colourless anion which is redox-inert under the conditions,
the bond to the bridge member B being effected via one of the radicals R²-R¹¹ or, in the case where E¹ or E² represents NR¹, being effected via R¹ and the said radicals then representing a direct bond,
RED₁' represents a radical of the formulae (X), (XI), (XII), (XIII), (XVI), (XVII), (XVIII) or (XX), 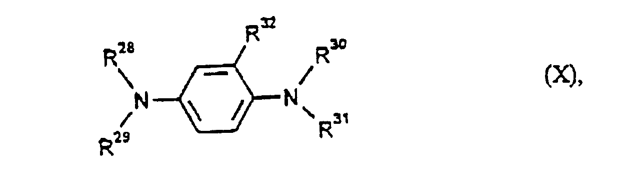 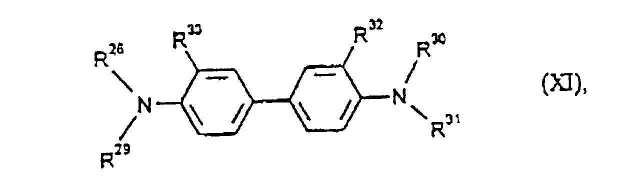 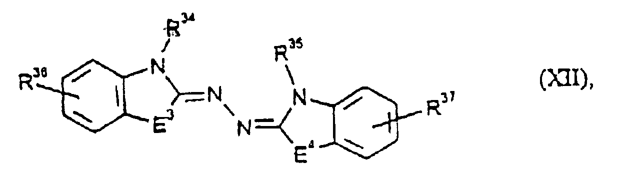 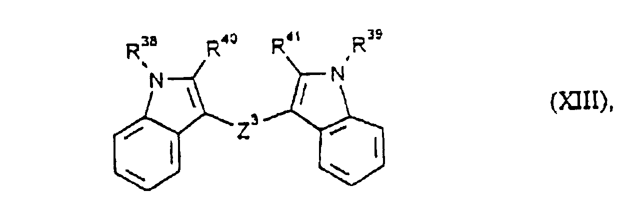 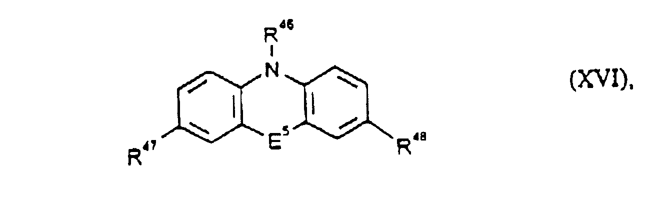 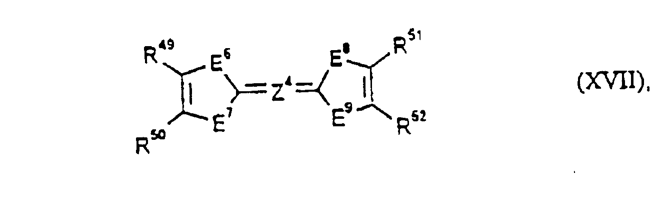 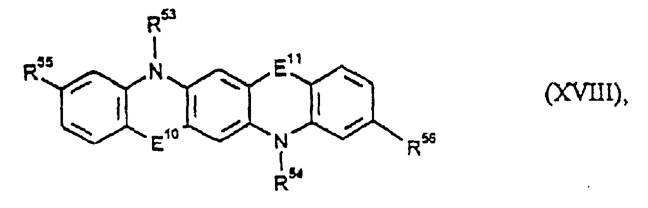 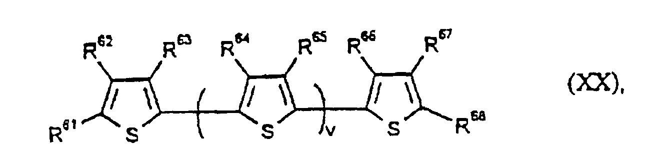
in which
R²⁸, R²⁹ to R³¹, R³⁴, R³⁵, R³⁸, R³⁹, R⁴⁶, R⁵³ and R⁵⁴, independently of one another, represent C₁- to C₁₂-alkyl, C₂- to C₈-alkenyl, C₅- to C₇-cycloalkyl, C₇- to C₁₅-aralkyl or C₆- to C₁₀-aryl,
R³², R³³, R³⁶, R³⁷, R⁴⁰, R⁴¹, R⁴⁷, R⁴⁸, R⁴⁹, R⁵⁰ to R⁵², R⁵⁵ and R⁵⁶, independently of one another, represent hydrogen, methyl, ethyl, methoxy, ethoxy, fluoro, chloro, bromo, cyano, nitro, methoxycarbonyl, ethoxycarbonyl or phenyl,
Z³ represents a direct bond, a -CH=CH- or -N=N-bridge,
=Z⁴= represents a direct double bond, a =CH-CH= or =N-N= bridge,
E³ to E⁵, E¹⁰ and E¹¹, independently of one another, represent O, S, NR⁵⁹ or C(CH₃)₂, but E³ and E⁴ have identical meanings,
E⁶ to E⁹, are identical to each other and represent S, Se or NR⁵⁹ or
E⁶ represents NR⁵⁹, where R⁵⁹ is a direct bond to the bridge B and
E⁷ to E⁹ have the abovementioned meanings, but need not be identical to one another,
R⁵⁹ represents C₁- to C₁₂-alkyl, C₂- to C₈-alkenyl, C₅- to C₇-cycloalkyl, C₇- to C₁₅-aralkyl or C₆- to C₁₀-aryl,
R⁶¹, R⁶² and R⁶⁷, R⁶⁸, independently of one another, represent hydrogen, C₁- to C₄-alkyl, methoxycarbonyl, ethoxycarbonyl or phenyl or, pairwise jointly, represent a - (CH₂)₃- or - (C₂)₄-bridge,
R⁶³ to R⁶⁶ represent hydrogen and
v represents an integer from 1 to 6,
the bond to the bridge member B being effected by one of the radicals R²⁸-R⁴¹, R⁴⁶-R⁵⁶, R⁶¹, R⁶², R⁶⁷, R⁶⁸ or, in the case where one of the radicals E³-E¹¹ represents NR⁵⁹, being effected via R⁵⁹ and the said radicals then representing a direct bond,
B represents a bridge member of the formulae-(CH₂)ₙ-, -(CH₂)ₘ-O-(CH₂)ₚ-, -(CH)ₘ-NR⁶⁰-(CH₂)ₚ-, -(CH₂)ₘ-C₆H₄-(CH₂)ₚ-, -[O-(CH₂)ₚ]ₒ-O-, - [NR⁶⁰- (CH₂)ₚ]ₒ-NR⁶⁰-, - [C₆H₄- (CH₂)ₚ]ₒ-C₆H₄-, - (CH₂)ₘ-OCO-C₆H₄-COO- (CH₂)ₚ-, - (CH₂)ₘ-NHCO-C₆H₄-CONH-(CH₂)ₚ-, - (CH₂)ₘ-NHCONH-C₆H₄-NHCONH- (CH₂)ₚ-, - (CH₂)ₘ-OCO- (CH₂)ₜ-COO-(CH₂)-, - (CH₂)ₘ-NHCO-(CH₂)ₜ-CONH- (CH)ₚ-, - (CH₂)ₘ-NHCONH- (CH₂)ₜ-NHCONH- (CH₂)ₚ-,
R⁶⁰ represents methyl, ethyl, benzyl or phenyl,
n represents an integer from 1 to 10,
m and p, independently of one another, represent an integer from 0 to 4,
o represents an integer from 0 to 2 and
t represents an integer from 1 to 6 and
as the substance OX₂" comprises at least one tetrazolium salt of the formula (CI),
in which
R¹⁰¹ and R¹⁰² correspond to a radical of formula (CXIX),
R¹⁰³ corresponds to a radical of formula (CXX),
R¹⁵⁷, ¹⁵⁹ and R¹⁶⁰, independently of one another, represent hydrogen, methyl, ethyl, methoxy, ethoxy, cyano, nitro, -N⁺(CH₃)₃ or COOH, or
R¹⁵⁷ and R¹⁵⁹ jointly form an -O-CH₂-O- bridge,
R¹⁵⁸ represents hydrogen, methyl, methoxy or chloro,
R¹⁶¹ represents methyl, difluoromethyl, trifluoromethyl, methoxycarbonyl, ethoxycarbonyl or phenyl,
R¹⁶² represents hydrogen, methyl, ethyl, phenyl or chloro, or
R¹⁶¹ and R¹⁶² jointly form a -CH=CH-CH=CH- or -CH=CH-C(OCH₃)=CH- bridge,
E¹¹² represents S,
X⁻ represents a colourless anion which is redox-inert under the conditions.

8. Electrochromic system according to Claims 1 to 7, **characterized in that** it comprises
as the couple RED₁'/OX₂', at least one substance of the formula (Ia) - (Id)
in which
OX₂' represents a radical of the formulae (II), (IV) or (V) according to Claim 7,
in which
R², R⁴ and R⁸ represent a direct bond to the bridge member B,
R³, R⁵ and R⁹, independently of one another, represent methyl, ethyl, propyl, butyl, pentyl, hexyl, heptyl, octyl, benzyl or phenyl or, in the case of the formulae Ic or Id likewise represent a direct bond to the bridge member B,
R⁶ and R⁷ are identical and represent hydrogen, methyl, methoxy, chloro, cyano or methoxycarbonyl,
R¹⁰, R¹¹; R¹², R¹³ and R¹⁴, R¹⁵, independently of one another, represent hydrogen or, if Z¹ represents a direct bond, in each case pairwise jointly represent a -CH=CH- bridge,
R⁶⁹ to R⁷² are identical and represent hydrogen, methyl or ethyl,
R⁷³ and R⁷⁴ represent hydrogen,
E¹ and E² are identical and represent O or S,
Z¹ represents a direct bond or -CH=CH-,
X⁻ represents a colourless anion which is redox-inert under the conditions,
RED₁' represents a radical of the formulae (X), (XII), (XIII), (XVI) or (XVII) according to Claim 7,
in which
R²⁸, R³⁴, R³⁸, R⁴⁶ and R⁴⁹ represent a direct bond to the bridge member B,
R²⁹ to R³¹, R³⁵ and R³⁹, independently of one another, represent methyl, ethyl, propyl, butyl, pentyl, hexyl, heptyl, octyl, benzyl or phenyl or, in the case of the formulae Ib or Id, R³⁰, R³⁵ and R³⁹ likewise represent the direct bond to the bridge member B,
R³², R⁴⁷ and R⁴⁸ represent hydrogen,
R³⁶, R³⁷, R⁴⁰, R⁴¹ and R⁵⁰ to R⁵², independently of one another, represent hydrogen, methyl, methoxy, chloro, cyano, methoxycarbonyl or phenyl or, in the case of the formula Ib or Id, R⁵¹ likewise represents a direct bond to the bridge member B,
Z³ represents a direct bond, a -CH=CH- or -N=N-bridge,
=Z⁴= represents a direct double bond, a =CH-CH= or =N-N= bridge,
E³ to E⁵ independently of one another, represent O, S or NR⁵⁹, but E³ and E⁴ have identical meanings,
E⁶ to E⁹ are identical to one another and represent S, Se or NR⁵⁹,
R⁵⁹ represents methyl, ethyl, propyl, butyl, pentyl, hexyl, heptyl, octyl, benzyl or phenyl or, in the case of the formula XVI in Ib or Id likewise represents a direct bond to the bridge member B,
B represents a bridge member of the formulae-(CH₂)ₙ-, -(CH₂)ₘ-O-(CH₂)ₚ-, -(CH₂)ₘ-NR⁶⁰-(CH₂)ₚ-,-(CH₂)ₘ-C₆H₄-(CH₂)ₚ-, -O-(CH₂)ₚ-O-, -NR⁶⁰- (CH₂)ₚ-NR⁶⁰-, -(CH₂)ₘ-OCO-C₆H₄-COO-(CH₂)ₚ-, -(CH₂)ₘ-NHCO-C₆H₄-CONH-(CH₂)ₚ-, - (CH₂)ₘ-NHCONH-C₆H₄-NHCONH-(CH₂)ₚ-, - (CH₂)ₘ-OCO- (CH₂)ₜ-COO- (CH₂)ₚ-, - (CH₂)ₘ-NHCO- (CH₂)ₜ-CONH- (CH₂)ₚ-, - (CH₂)ₘ-NHCONH- (CH₂)ₜ-NHCONH- (CH₂)ₚ-,
R⁶⁰ represents methyl,
n represents an integer from 1 to 10,
m and p are identical and represent an integer from 0 to 2 and
t represents an integer from 1 to 6 and,
as the substance OX₂" comprises at least one substance of the formula (CI), 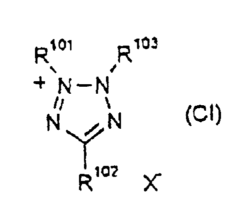 in which
R¹⁰¹, R¹⁰², R¹⁰³ and X⁻ have the meanings specified in claim 6.

9. Electrochromic system according to Claims 1 to 8, **characterized in that** it comprises, as the couple RED₁'/OX₂', at least one substance of the formula (Ia) corresponding to one of the formulae 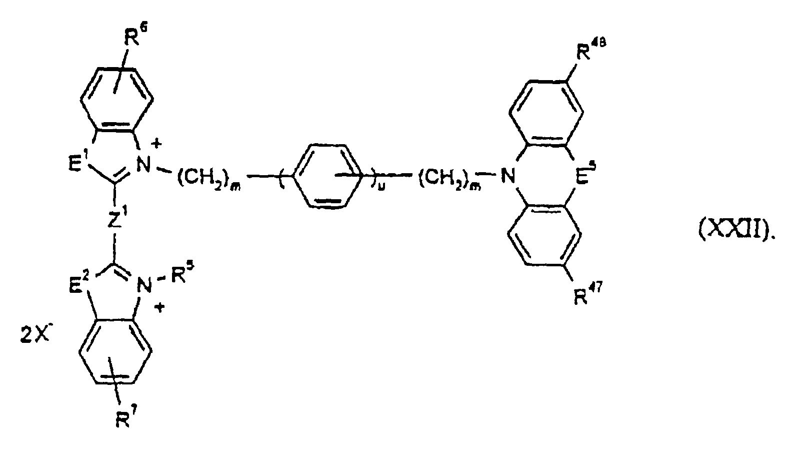 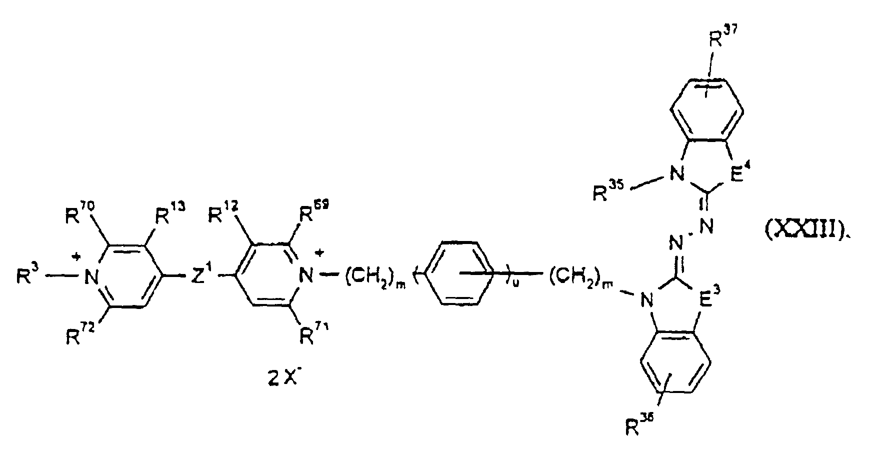 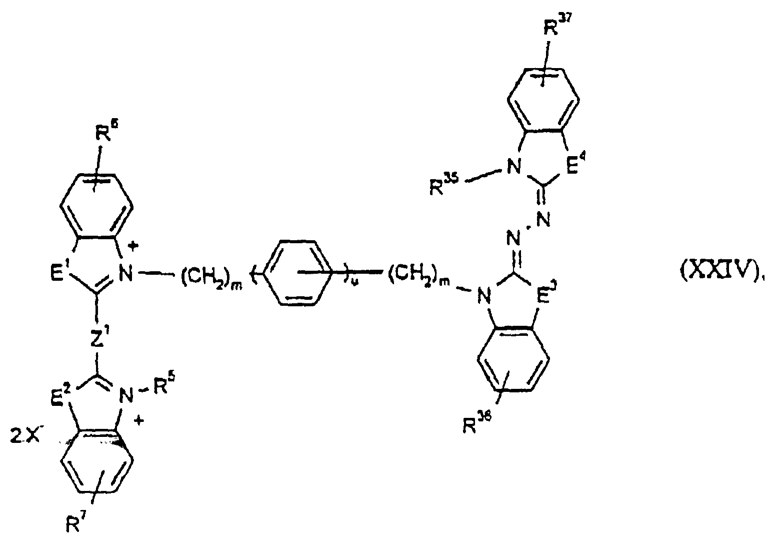 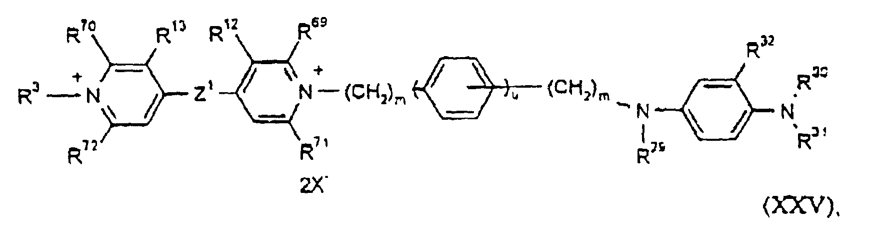 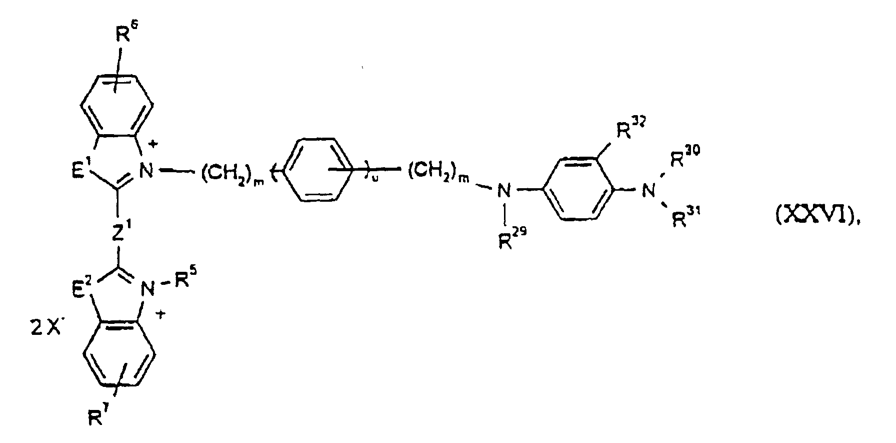 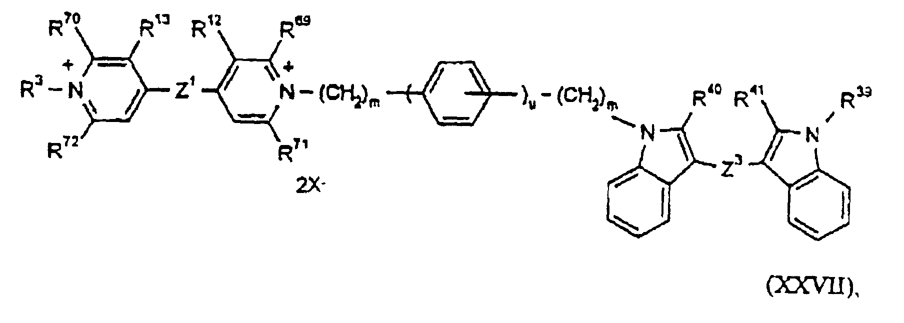 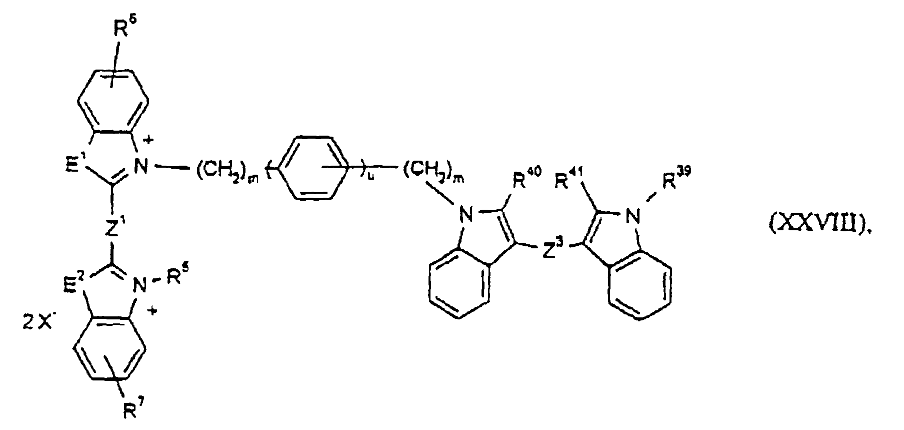 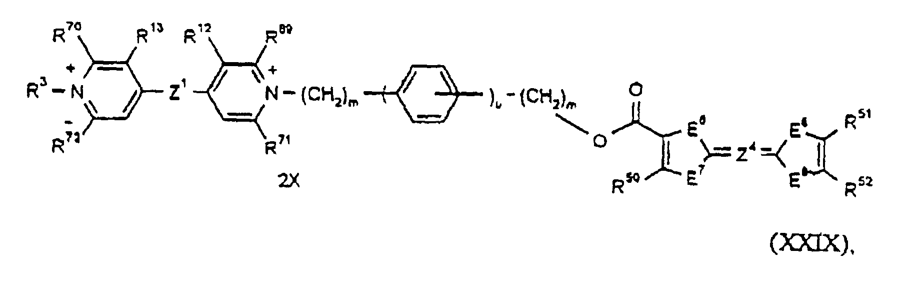 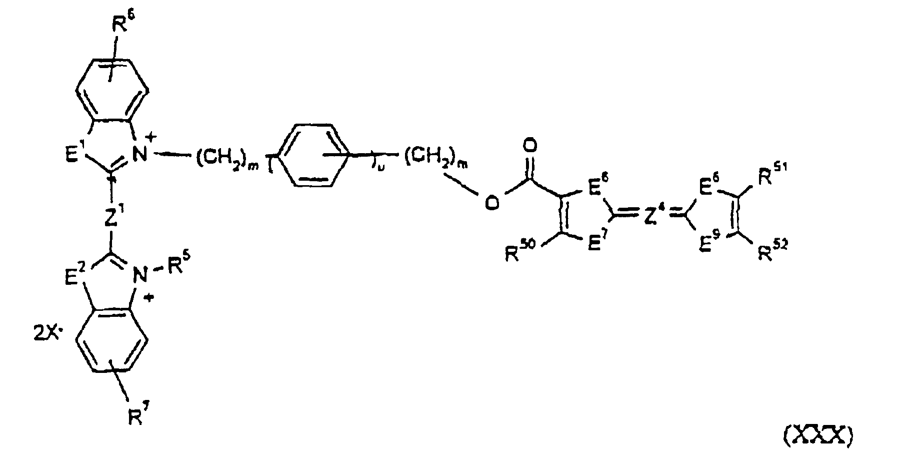 or at least one substance of the formula (Ib) corresponding to one of the formulae 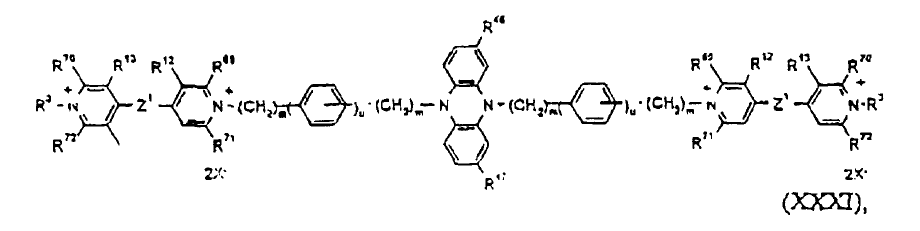 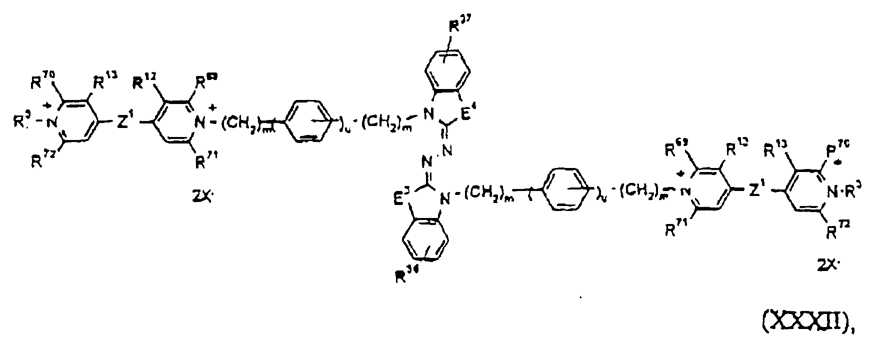 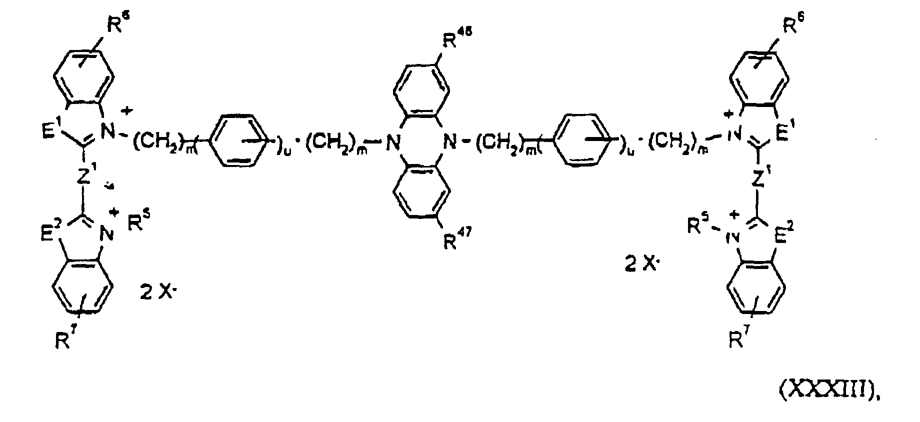 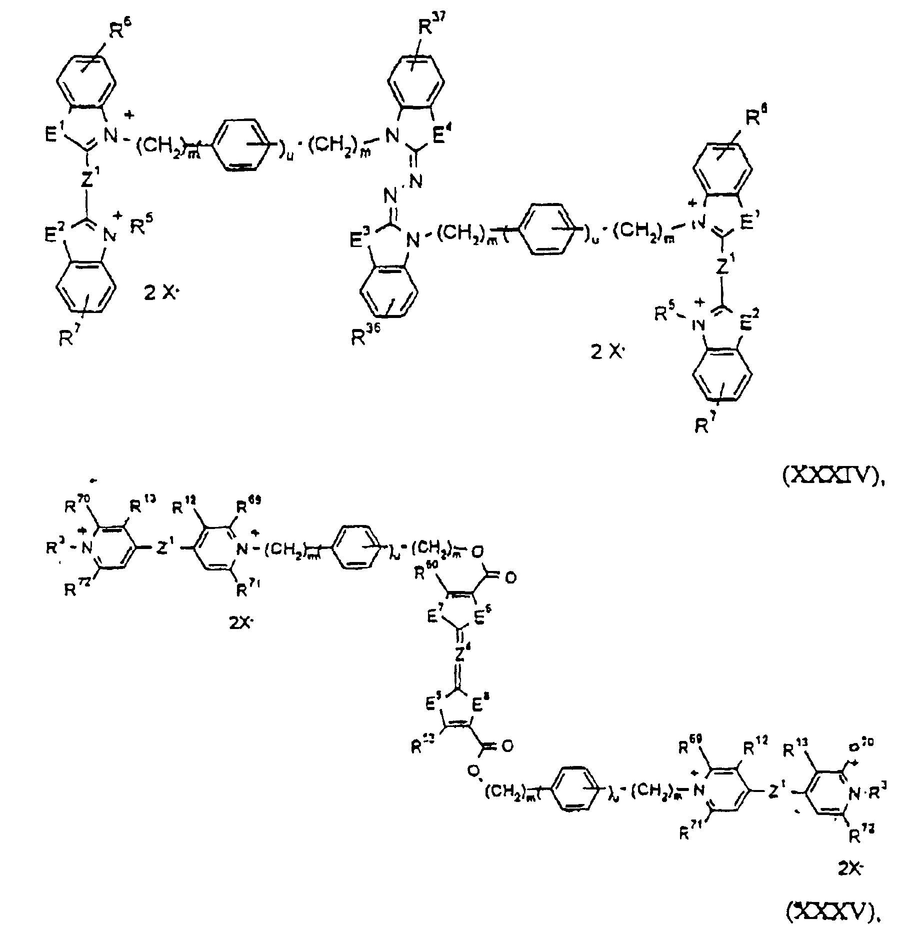 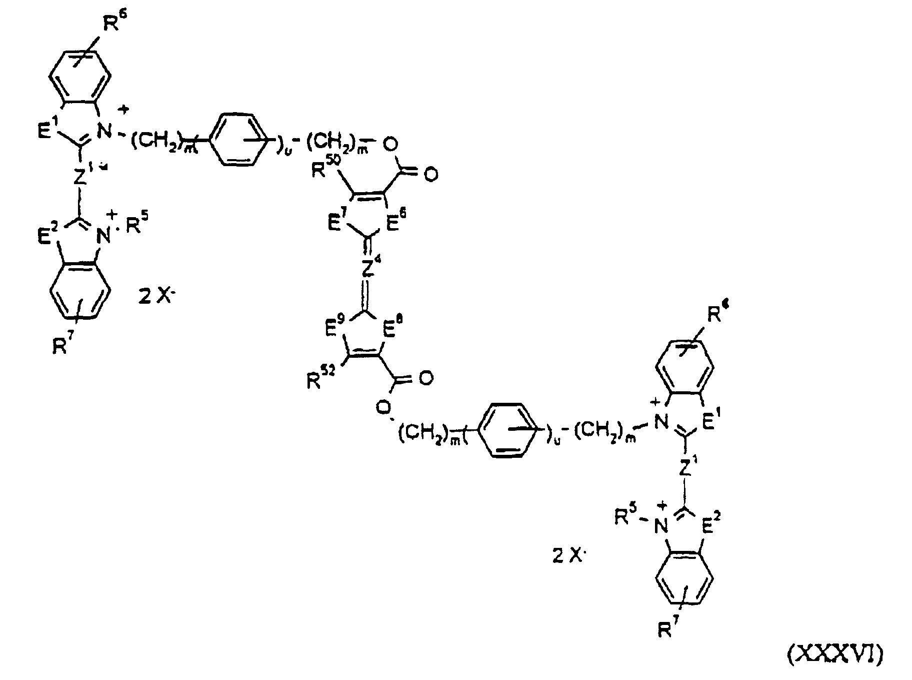 or at least one substance of the formula (Ic) corresponding to one of the formulae 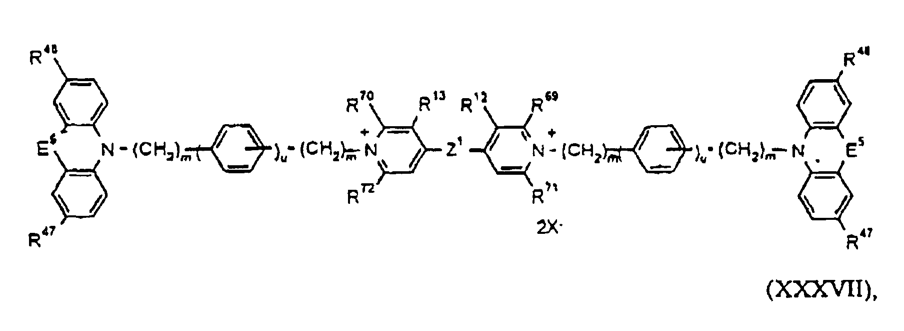 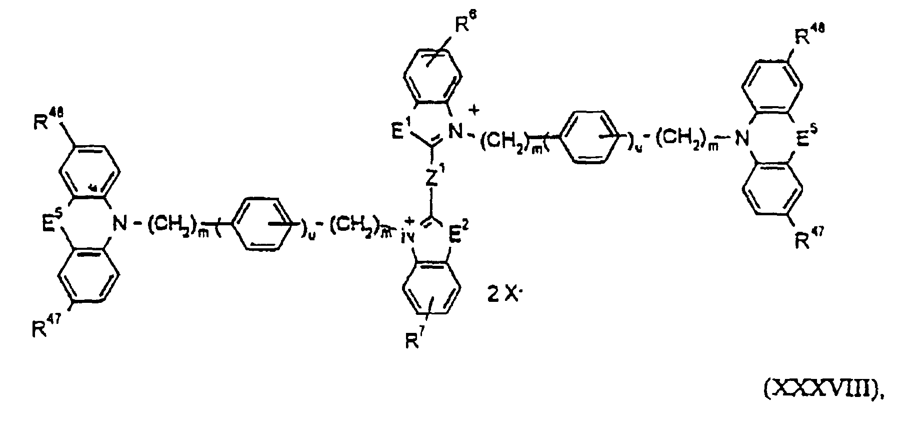 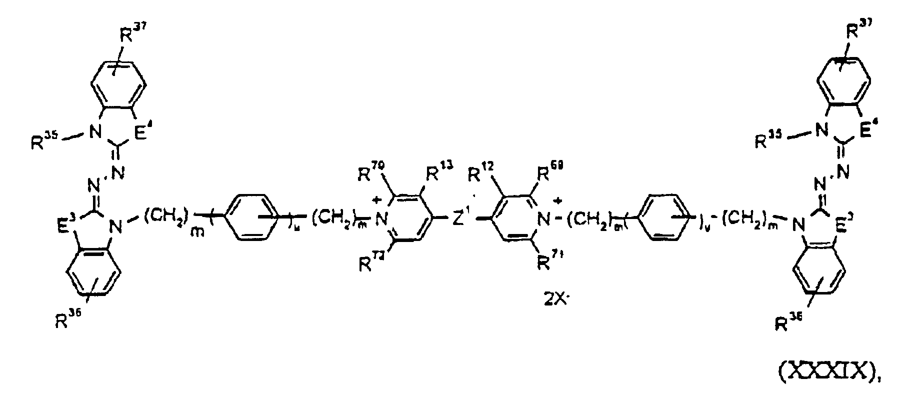 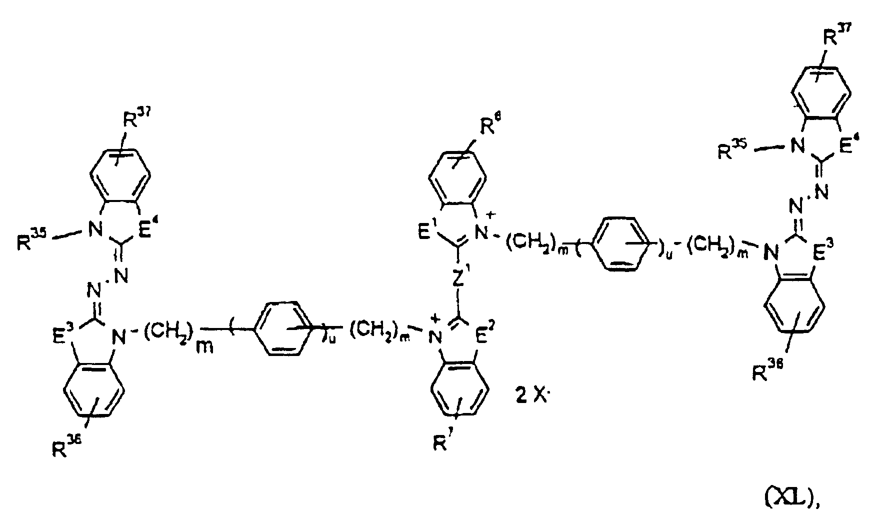 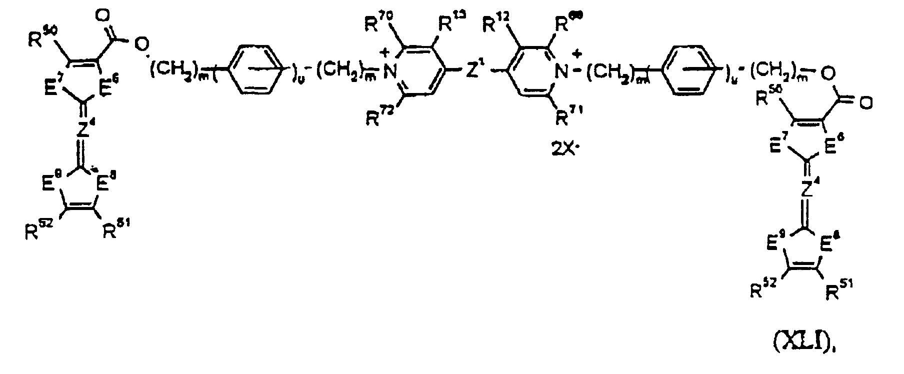 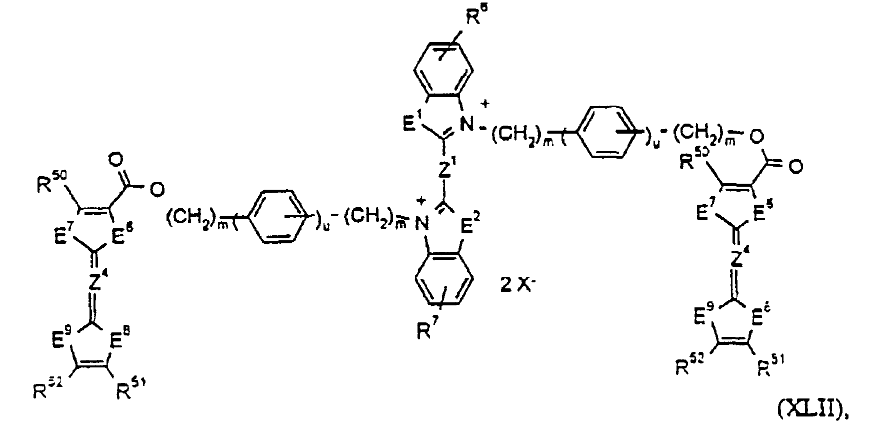 in which
R³, R⁵, R³⁵ and R³⁹, independently of one another, represent methyl, ethyl, propyl, butyl, pentyl, hexyl or benzyl,
R⁶, R⁷ and R³⁶, R³⁷ are pairwise identical and represent hydrogen, methyl, methoxy, chloro, cyano or methoxycarbonyl,
R¹² and R¹³ represent hydrogen or, if Z¹ represents a direct bond, jointly represent a CH=CH bridge,
R⁶⁹ to R⁷² are identical and represent hydrogen or methyl,
E¹ and E² are identical and represent O or S,
Z¹ represents a direct bond or -CH=CH-,
R³², R⁴⁷ and R⁴⁸ represent hydrogen,
E³ to E⁵, independently of one another, represent O, S, or NR⁵⁹, E³ and E⁴ being identical, however,
R²⁹ to R³¹ and R⁵⁹, independently of one another, represent methyl, ethyl, propyl, butyl, pentyl, hexyl or benzyl, R²⁹ to R³¹ preferably being identical,
R⁴⁰ and R⁴¹ are identical and represent hydrogen, methyl, ethyl, propyl, butyl or phenyl,
Z³ represents a direct bond, -CH=CH- or -N=N-,
R⁵⁰ to R⁵², independently of one another, represent hydrogen, methyl, methoxy, chloro, cyano, methoxycarbonyl, ethoxycarbonyl or phenyl, but are preferably identical,
E⁶ to E⁹ are identical to one another and represent S, Se or NR⁵⁹,
Z⁴ represents a direct double bond, a =CH-CH= or =N-N= bridge,
m represents an integer from 1 to 5,
u represents 0 or 1 and
X⁻ represents a colourless anion which is redox-inert under the conditions,
where the representation 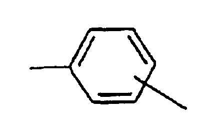 in the above-specified formulae represents a link in the o-, m- or p-position, and
b) comprises, as the substance OX₂", at least one substance of the formula (CI) according to Claim 6.

10. Electrochromic fluid comprising an electrochromic system according to at least one of Claims 1 to 9 and at least one inert solvent.

11. Electrochromic device containing an electrochromic fluid according to Claim 10.

12. Electrochromic device according to Claim 11, **characterized in that** it is designed as a solar cell, as a window pane, mirror, canopy or display.

13. Electrochromic device according to Claims 11 and 12, **characterized in that** it comprises two transparent glass or plastic panes which face one another, one of them optionally being mirrored and whose sides which face one another are coated electroconductively, between which the electrochromic fluid is contained.

## Revendications

1. Système électrochrome contenant des substances oxydables RED₁ qui, en cédant des électrons à une anode et des substances réductibles OX₂ qui, en captant des électrons à une cathode, passent, avec augmentation de l'extinction dans le domaine visible du spectre d'une forme légèrement colorée ou incolore à une forme colorée OX₁ et RED₂ respectivement, l'équilibre des charges ramenant dans chaque cas à la forme légèrement colorée ou incolore, ce système se caractérisant en ce que les substances RD₁ et OX₂ consistent en un mélange contenant au moins une paire RED₁'/OX₂', reliés entre eux par un pont covalent et au moins une substance RED₁" ou OX₂" pour laquelle la conversion réciproque de l'état oxydé à l'état réduit est produite par rupture ou formation d'une liaison σ.

2. Système électrochrome selon la revendication 1, **caractérisé en ce qu'**il contient au moins une paire RED₁'/OX₂' répondant à la formule (I) 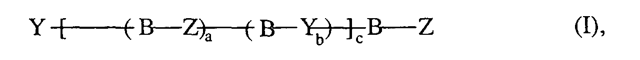 dans laquelle
Y et Z représentent chacun, indépendamment l'un de l'autre, un radical OX₂' ou RED₁', l'un au moins des symboles Y représentant OX₂' et l'un au moins des symboles Z RED₁',
OX₂' représentant le radical d'un système rédox apte à réduction électrochimique réversible et
RED₁' représentant le radical d'un système rédox apte à oxydation électrochimique réversible,
B représente un pont,
c est un nombre entier allant de 0 à 5 et
a et b sont égaux chacun, indépendamment l'un de l'autre, à un nombre entier allant de 0 à 5, et
au moins une substance réductible OX₂" consistant en un composé organique cyclique qui, après capture de deux électrons passe, par rupture de l'une des liaisons σ du cycle, à l'état de composé acyclique et qui, par cession de deux électrons, reprend à nouveau la forme du composé de départ cyclique.

3. Système électrochrome selon les revendications 1 et 2, **caractérisé en ce que** la paire RED₁'/OX₂' consiste en au moins une substance électrochrome répondant à l'une des formules
OX₂'-B-RED₁' (Ia),
OX₂'-B-RED₁'-B-OX₂' (Ib),
RED₁'-B-OX₂'-B-RED₁' (Ic),
ou
OX₂'-(B-RED₁'-B-OX₂')_{d}-B-RED₁' (Id),
dans lesquelles
OX₂', RED₁' et B ont les significations indiquées ci-dessus et
d est un nombre entier allant de 1 à 5.

4. Système électrochrome selon les revendications 1 à 3, **caractérisé en ce que** la paire RED₁'/OX₂' consiste en une substance de formule (Ia) à (Id), dans lesquelles
OX₂' représente le radical d'une substance apte à la réduction cathodique qui, dans le voltamogramme cyclique, enregistré dans un solvant inerte à température ambiante, présente au moins deux ondes de réduction chimique réversible, la première de ces ondes de réduction conduisant à une augmentation de l'extinction à au moins une longueur d'onde dans le domaine visible du spectre électromagnétique,
RED₁' représente le radical de la substance apte à oxydation anodique réversible qui, dans le voltamogramme cyclique, enregistré dans un solvant inerte à température ambiante, présente au moins deux ondes d'oxydation chimique réversible, la première de ces ondes d'oxydation conduisant à une augmentation de l'extinction à au moins une longueur d'onde dans le domaine visible du spectre électromagnétique, et
B représente un pont.

5. Système électrochrome selon les revendications 1 à 4, **caractérisé en ce que** la substance OX₂" est un composé de la classe des sels de tétrazolium, des sels de benzo- ou de naphto-triazolium, des cyclopropanes et des [1.1.0]bicyclobutanes.

6. Système électrochrome selon les revendications 1 à 5, **caractérisé en ce que** la substance OX₂" est un sel de tétrazolium, un sel de naphtotriazolium, un cyclopropane et/ou un [1.1.0]bicyclobutane répondant aux formules 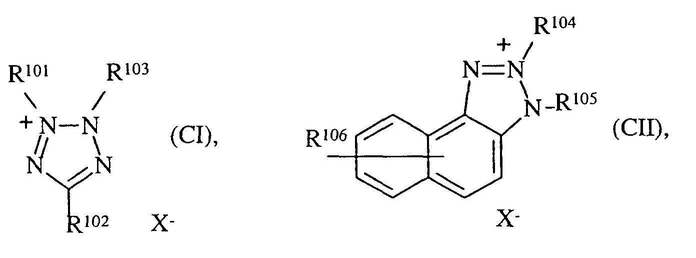 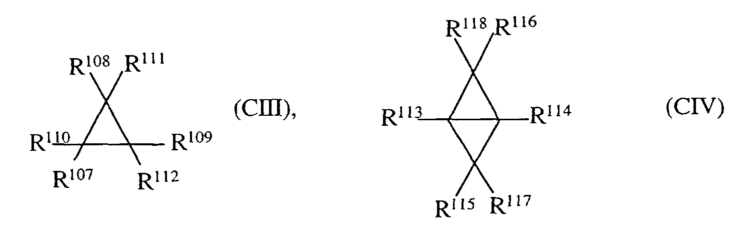 dans lesquelles
R¹⁰¹ à R¹⁰⁵ représentent chacun, indépendamment les uns des autres, un groupe aryle en C₆-C₁₀ ou un hétérocycle aromatique ou quasi-aromatique à 5 ou 6 chaînons éventuellement condensé,
R¹⁰⁷, R¹⁰⁹, R¹¹³ et R¹¹⁴ représentent chacun, indépendamment les uns des autres, un radical répondant à l'une des formules (CV) à (CVII), 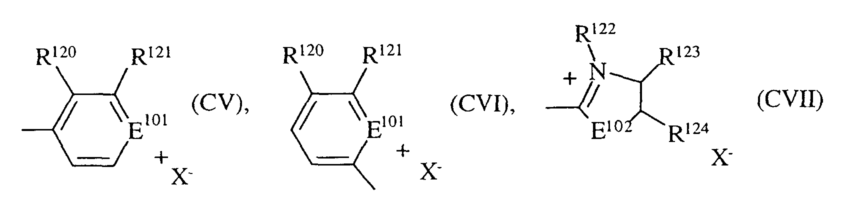
R¹⁰⁸, R¹¹⁵ et R¹¹⁶ représentent chacun, indépendamment les uns des autres, un groupe aryle en C₆-C₁₀ ou un radical de formules (CV) à (CVII),
R¹¹⁰ à R¹¹², R¹¹⁷ et R¹¹⁸ représentent chacun, indépendamment les uns des autres, l'hydrogène, un groupe alkyle en C₁-C₄, un halogène ou un groupe cyano,
E¹⁰¹ et E¹⁰² représentent chacun, indépendamment l'un de l'autre O, S ou N-R¹¹⁹,
R¹¹⁹ et R¹²² représentent chacun, indépendamment l'un de l'autre, un groupe alkyle en C₁-C₁₈, alcényle en C₂-C₈, cycloalkyle en C₄-C₇, aralkyle en C₇-C₁₅ ou aryle en C₆-C₁₀,
R¹⁰⁶, R¹²⁰, R¹²¹, R¹²³ et R¹²⁴ représentent chacun, indépendamment les uns des autres, l'hydrogène, un groupe alkyle en C₁-C₄, alcoxy en C₁-C₄, un halogène, un groupe cyano, nitro ou (alcoxy en C₁-C₄)carbonyle ou bien
R¹²⁰ et R¹²¹ et respectivement R¹²³ et R¹²⁴, forment ensemble un pont -CH=CH-CH=CH-,
et
X⁻ représente un anion incolore, inerte en oxydoréduction dans les conditions observées.

7. Système électrochrome selon les revendications 1 à 6, **caractérisé en ce qu'**il contient
en tant que paire RED₁'/OX₂' au moins une substance répondant à l'une des formules (la) à (Id)
dans lesquelles
OX₂' représente un radical de formules (II), (III), (IV) ou (V), 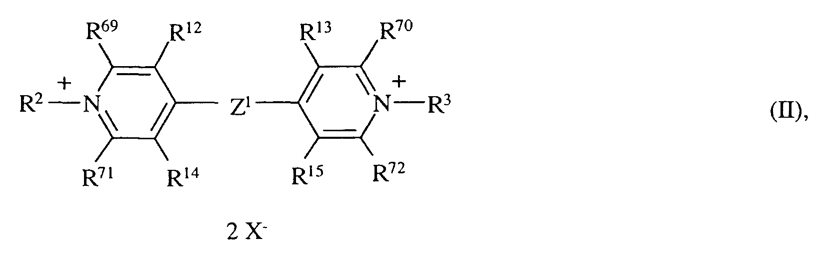 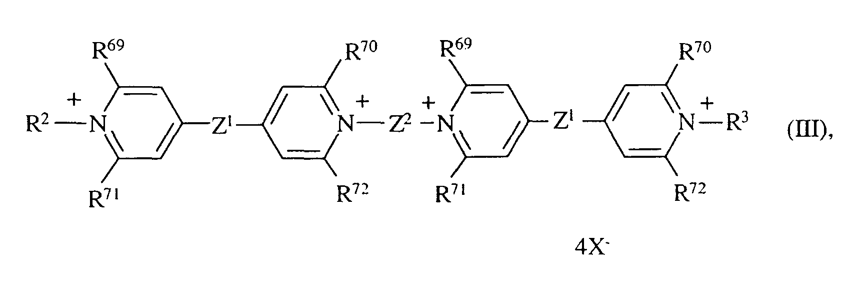 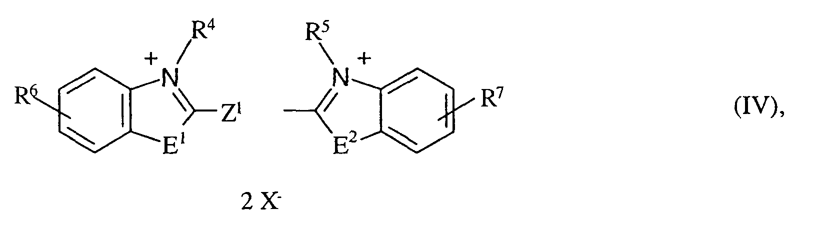 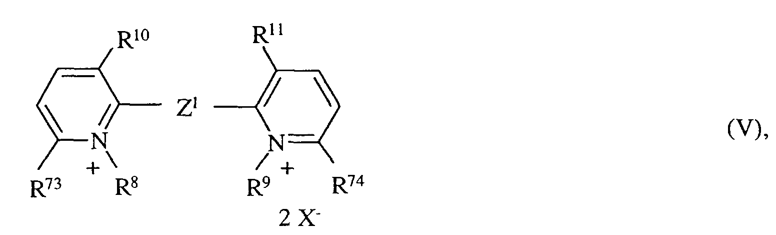 dans lesquelles
R², R³, R⁴, R⁵, R⁸ et R⁹ représentent chacun indépendamment les uns des autres, un groupe alkyle en C₁-C₁₂, alcényle en C₂-C₈, cycloalkyle en C₅-C₇, aralkyle en C₇-C₁₅ ou aryle en C₆-C₁₀,
R⁶ et R⁷ représentent chacun, indépendamment l'un de l'autre, l'hydrogène, un groupe méthyle, éthyle, méthoxy, éthoxy, le fluor, le chlore, le brome, un groupe cyano, nitro, méthoxycarbonyle ou éthoxycarbonyle,
R¹⁰, R¹¹ ; R¹² et R¹³ et R¹⁴, R¹⁵ représentent chacun, indépendamment les uns des autres, l'hydrogène ou bien, lorsque Z¹ représente une liaison directe, ils forment ensemble un pont -(CH₂)₂-, -(CH₂)₃- ou -CH=CH-,
ou bien
R⁴, R⁵ et R⁸, R⁹, indépendamment les uns des autres, forment ensemble, par paires, un pont -(CH₂)₂- ou -(CH₃)₃- lorsque Z¹ représente une liaison directe,
R⁶⁹ à R⁷⁴ représentent chacun, indépendamment les uns des autres l'hydrogène ou un groupe alkyle en C₁-C₄,
E¹ et E² sont identiques et représentent O, S, NR¹ ou C(CH₃)₂ ou forment ensemble un pont -N-(CH₂)₂-N-,
R¹ représente un groupe alkyle en C₁-C₁₂, alcényle en C₂-C₄, cycloalkyle en C₅-C₇, aralkyle en C₇-C₁₅ ou aryle en C₆-C₁₀,
Z¹ représente une harson directe, -CH=CH-, -C(CH₃)=CH-, -C(CN)=CH-, -C=C-, ou -CH=N-N-CH-,
Z² représente -(CH)ᵣ- ou -CH₂-C₆H₄-CH₂-,
r est un nombre entier allant de 1 à 6,
X⁻ représente un anion incolore, inerte en oxydoréduction dans les conditions observées,
la liaison au pont B se faisant par l'intermédiaire des groupes R² à R¹¹ ou bien, dans les cas où E¹ ou E² représentent NR¹, par l'intermédiaire de R¹, et les symboles mentionnés représentent alors une liaison directe,
RED₁' représente un radical de formules (X), (XI), (XII), (XIII), (XVI), (XVII), (XVIII) ou (XX) 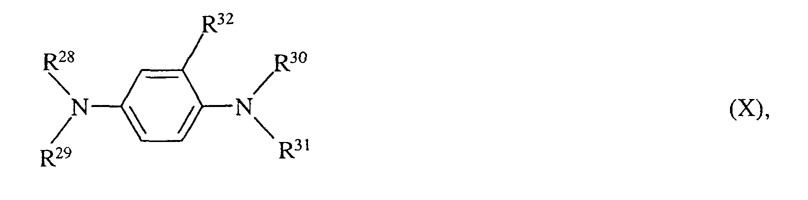 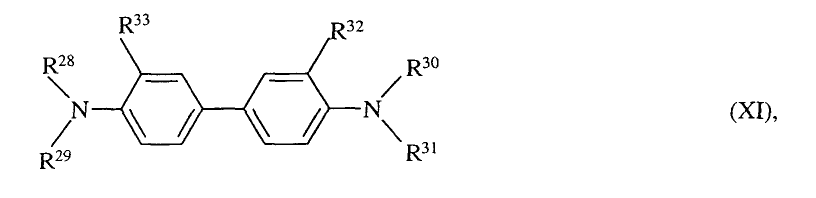 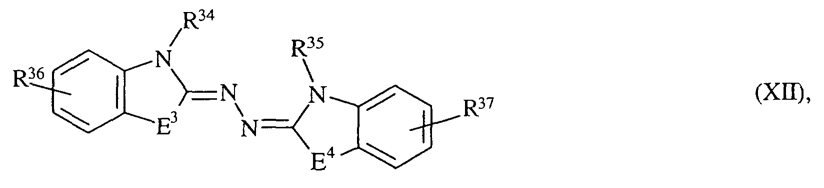 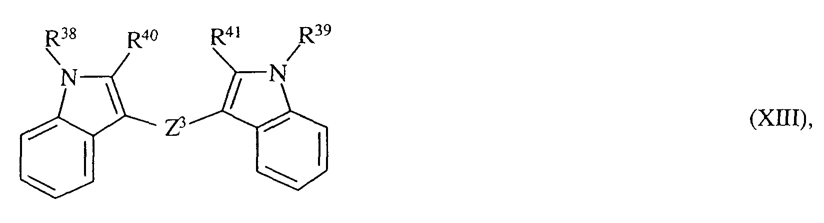 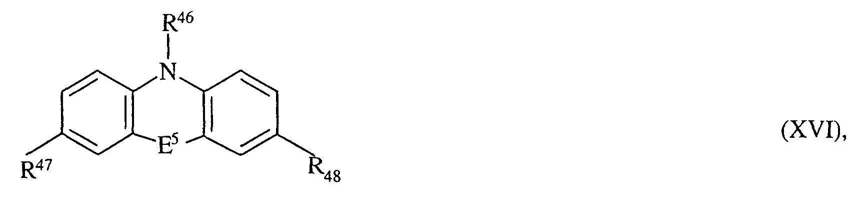 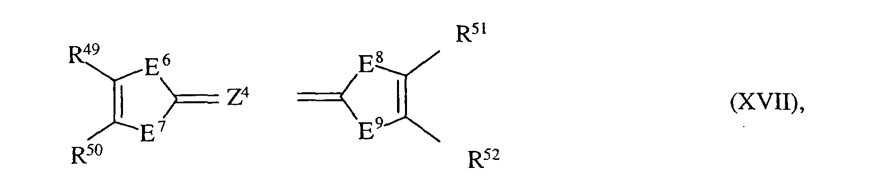 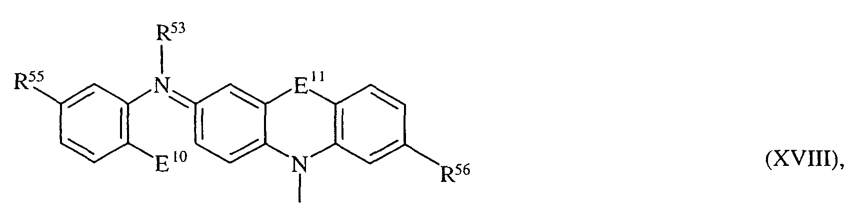 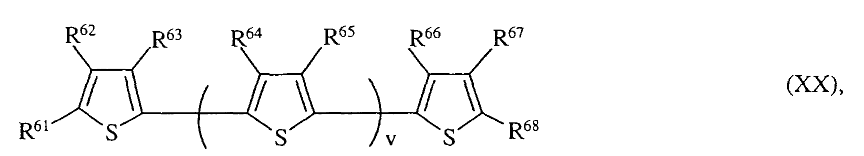 dans lesquels
R²⁸, R²⁹ à R³¹, R³⁴, R³⁵, R³⁸, R³⁹, R⁴⁶, R⁵³ et R⁵⁴ représentent chacun, indépendamment les uns des autres, un groupe alkyle en C₁-C₁₂, alcényle en C₂-C₈, cycloalkyle en C₅-C₇, aralkyle en C₇-C₁₅ ou aryle en C₆-C₁₀,
R³², R³³, R³⁶, R³⁷, R⁴⁰, R⁴¹, R⁴⁷, R⁴⁸, R⁴⁹, R⁵⁰ à R⁵², R⁵⁵ et R⁵⁶ représentent chacun, indépendamment les uns des autres, l'hydrogène, un groupe méthyle, éthyle, méthoxy, éthoxy, le fluor, le chlore, le brome, un groupe cyano, nitro, méthoxycarbonyle, éthoxycarbonyle ou phényle,
Z³ représente une liaison directe, un pont -CH=CH- ou -N=N-,
=Z⁴= représente une double liaison directe, un pont =CH-CH= ou =N-N=,
E³ à E⁵, E¹⁰ et E¹¹ représentent chacun, indépendamment les uns des autres, O, S, NR⁵⁹ ou C(CH₃)₂, mais E³ et E⁴ sont identiques,
E⁶ à E⁹, identiques, représentent S, Se ou NR⁵⁹, ou bien
E⁶ représente NR⁵⁹, R⁵⁹ représentant une liaison directe au pont B et
E⁷ à E⁹ ont les significations indiquées ci-dessus, mais ne sont pas obligatoirement identiques
R⁵⁹ représente un groupe alkyle en C₁-C₁₂, alcényle en C₂-C₈, cycloalkyle en C₅-C₇, aralkyle en C₇-C₁₅ ou aryle en C₆-C₁₀,
R⁶¹, R⁶² et R⁶⁷, R⁶⁸, indépendamment les uns des autres, représentent chacun l'hydrogène, un groupe alkyle en C₁-C₄, méthoxycarbonyle, éthoxycarbonyle ou phényle ou forment ensemble, par paires un pont -(CH₂)₃- ou -(CH₂)₄-,
R⁶³ à R⁶⁶ représentent l'hydrogène et
v est un nombre entier allant de 1 à 6,
la liaison au pont B se faisant par l'intermédiaire de l'un des groupes R²⁸ à R⁴¹, R⁴⁶, R⁵⁶, R⁶¹, R⁶², R⁶⁷, R⁶⁸ ou bien, lorsque l'un des symboles E³ à E¹¹ représente NR⁵⁹, par l'intermédiaire de R⁵⁹, et les symboles mentionnés représentent alors une liaison directe,
B représente un pont de formule -(CH₂)ₙ-, -(CH₂)ₘ-O-(CH₂)ₚ-, -(CH)ₘ-NR⁶⁰-(CH₂)ₚ-, -(CH₂)ₘ-C₆H₄-(CH₂)ₚ-, -[O-(CH₂)ₚ]ₒ-O-, -[NR⁶⁰-(CH₂)ₚ]ₒ-NR⁶⁰-,-[C₆H₄-(CH₂)ₚ]ₒ-C₆H₄-, -(CH₂)ₘ-OCO-C₆-H₄-COO-(CH₂)ₚ-, -(CH2)ₘ-NHCO-C₆H₄-CONH-(CH₂)ₚ-, -(CH₂)ₘ-NHCONH-C₆H₄-NHCONH-(CH₂)ₚ-, -(CH₂)ₘ-OCO-(CH₂)ₜ-COO-(CH₂)-, -(CH₂)ₘ-NHCO-(CH₂)ₜ-CONH-(CH)ₚ-, -(CH₂)ₘ-NHCONH-(CH₂)ₜ-NHCONH-(CH₂)ₚ-,
R⁶⁰ représente un groupe méthyle, éthyle benzyle ou phényle,
n est un nombre entier allant de 1 à 10,
m et p représentent chacun, indépendamment l'un de l'autre, un nombre entier allant de 0 à 4,
o est un nombre entier allant de 0 à 2 et
t est un nombre entier allant de 1 à 6 et,
en tant que substance OX₂" au moins un sel de tétrasolium de formule (CI)
dans laquelle
R¹⁰¹ et R¹⁰² représentent un radical de formule (CXIX),
R¹⁰³ représente un groupe de formule (CXX),
R¹⁵⁷, R¹⁵⁹ et R¹⁶⁰ représentent chacun, indépendamment les uns des autres, l'hydrogène, un groupe méthyle, éthyle, méthoxy, éthoxy, cyano, nitro, -N⁺(CH₃)₃ ou COOH, ou bien
R¹⁵⁷ et R¹⁵⁹ forment ensemble un pont -O-CH₂-O-,
R¹⁵⁸ représente l'hydrogène, un groupe méthyle, méthoxy ou le chlore,
R¹⁶¹ représente un groupe méthyle, difluorométhyle, trifluorométhyle, méthoxycarbonyle, éthoxycarbonyle ou phényle,
R¹⁶² représente l'hydrogène, un groupe méthyle, éthyle, phényle ou le chlore, ou bien
R¹⁶¹ et R¹⁶² forment ensemble un pont -CH=CH-CH=CH- ou -CH=CH-C(OCH₃)=CH-,
E¹¹² représente S,
X⁻ représente un anion incolore, inerte en oxydoréduction dans les conditions observées.

8. Système électrochrome selon les revendications 1 à 7, **caractérisé en ce qu'**il contient
en tant que paire RED₁'/OX₂', au moins une substance de formule (la) à (Id)
dans lesquelles
OX₂' représente un radical de formule (II), (IV) ou (V) selon la revendication 7, dans lesquelles
R², R⁴ et R⁸ représentent une liaison direction au pont B,
R³, R⁵ et R⁹ représentent chacun, indépendamment les uns des autres, un groupe méthyle, éthyle, propyle, butyle, pentyle, hexyle, heptyle, octyle, benzyle ou phényle, ou bien encore, dans le cas des formules (Ic) ou (Id), une liaison directe au pont B,
R⁶ et R⁷ sont identiques et représentent l'hydrogène, des groupes méthyle, méthoxy, le chlore, des groupes cyano ou méthoxycarbonyle,
R¹⁰, R¹¹ ; R¹², R¹³ et R¹⁴, R¹⁵ représentent chacun, indépendamment les uns des autres, l'hydrogène ou bien, lorsque Z¹ représente une liaison directe, ils forment par paire un pont -CH=CH-,
R⁶⁹ à R⁷² sont identiques et représentent l'hydrogène, des groupes méthyle ou éthyle,
R⁷³ et R⁷⁴ représentent l'hydrogène,
E¹ et E² sont identiques et représentent O ou S,
Z¹ représente une liaison directe ou -CH=CH-,
X⁻ représente un anion incolore inerte en oxydoréduction dans les conditions observées,
RED₁' représente un radical de formules (X), (XII), (XIII), (XVI) ou (XVII) selon la revendication 7,
dans lesquelles
R²⁸, R³⁴, R³⁸, R⁴⁶ et R⁴⁹ représentent une liaison directe au pont B,
R²⁹ à R³¹, R³⁵ et R³⁹ représentent chacun, indépendamment les uns des autres, un groupe méthyle, éthyle, propyle, butyle, pentyle, hexyle, heptyle, octyle, benzyle ou phényle, mais dans le cas des formules Ib ou Id, R³⁰, R³⁵ et R³⁹ peuvent également représenter une liaison directe au pont B,
R³², R⁴⁷ et R⁴⁸ représentent l'hydrogène,
R³⁶, R³⁷, R⁴⁰, R⁴¹ et R⁵⁰ à R⁵² représentent chacun indépendamment les uns des autres, l'hydrogène, un groupe méthyle, méthoxy, le chlore, un groupe cyano, méthoxycarbonyle ou phényle, mais dans le cas des formules Ib ou Id, R⁵¹ peut également représenter une liaison directe au pont B,
Z³ représente une liaison directe, un pont -CH=CH- ou -N=N-,
=Z⁴= représente une double liaison directe, un pont =CH-CH= ou =N-N=,
R³ à E⁵ représentent chacun, indépendamment les uns des autres, O, S ou NR⁵⁹, mais E³ et E⁴ ont des significations identiques,
E⁶ à E⁹, tous identiques, représentent S, Se ou NR⁵⁹,
R⁵⁹ représente un groupe méthyle, éthyle, propyle, butyle, pentyle, hexyle, heptyle, octyle, benzyle ou phényle mais, dans le cas de la formule XVI, dans Ib ou Id, il peut également représenter une liaison directe au pont B,
B représente un pont de formule -(CH₂)ₙ-, -(CH₂)ₘ-O-(CH₂)ₚ-, -(CH)ₘ-NR⁶⁰-(CH₂)ₚ-, -(CH₂)ₘ-C₆H₄-(CH₂)ₚ-, -O-(CH₂)ₚ-O-, -NR⁶⁰-(CH₂)ₚ-NR⁶⁰-, -(CH₂)ₘ-OCO-C₆H₄-COO-(CH₂)ₚ-, -(CH₂)ₘ-NHCO-C₆H₄-CONH-(CH₂)ₚ-, -(CH₂)ₘ-NHCONH-C₆H₄-NHCONH-(CH₂)ₚ-, -(CH₂)ₘ-OCO-(CH₂)ₜ-COO-(CH₂)ₚ-, -(CH₂)ₘ-NHCO-(CH₂)ₜ-CONH-(CH₂)ₚ-, -(CH₂)ₘ-NHCONH-(CH₂)ₜ-NHCONH-(CH₂)ₚ-,
R⁶⁰ représente un groupe méthyle,
n est un nombre entier allant de 1 à 10,
m et p sont identiques et représentent un nombre entier allant de 0 à 2, et
t represente un nombre entier allant de 1 à 6, et
en tant que substance OX₂", au moins une substance de formule (Cl) 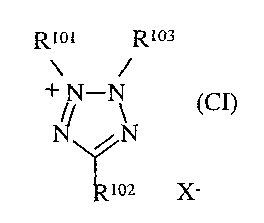 dans laquelle
R¹⁰¹, R¹⁰², R¹⁰³ et X⁻ ont les significations indiquées dans la revendication 6.

9. Système électrochrome selon les revendications 1 à 8, **caractérisé en ce qu'**il contient en tant que paire RED₁'/OX₂' au moins une substance de formule (Ia) répondant à l'une des formules particulières 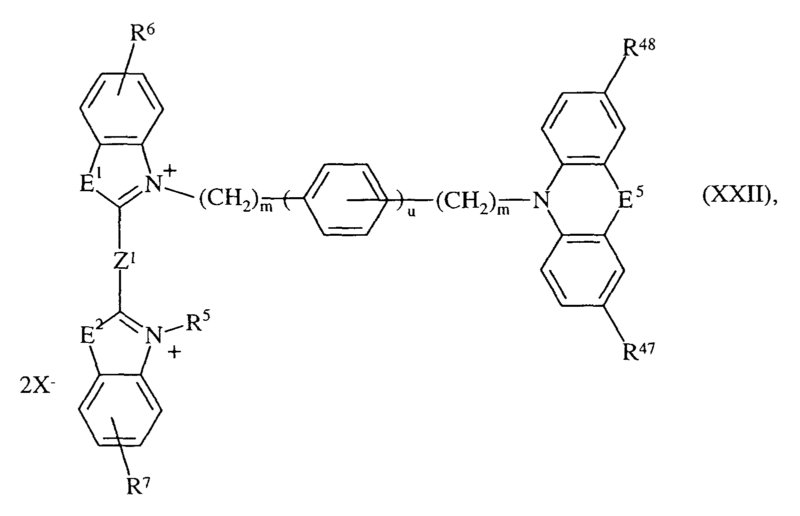 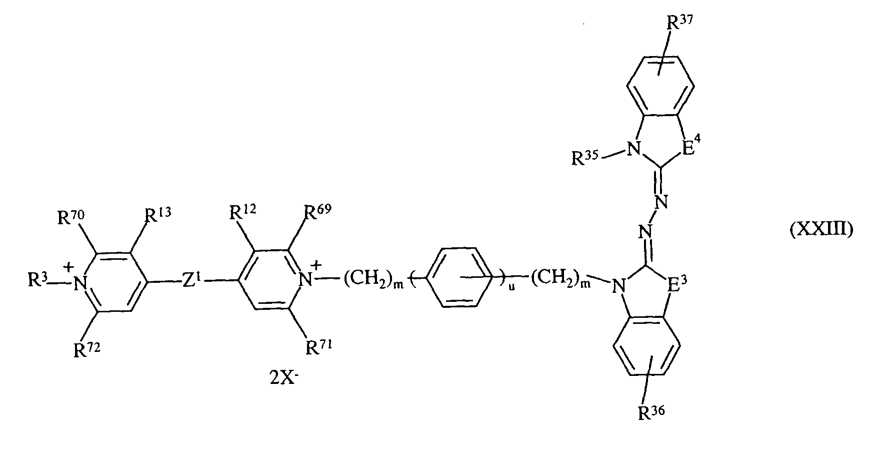 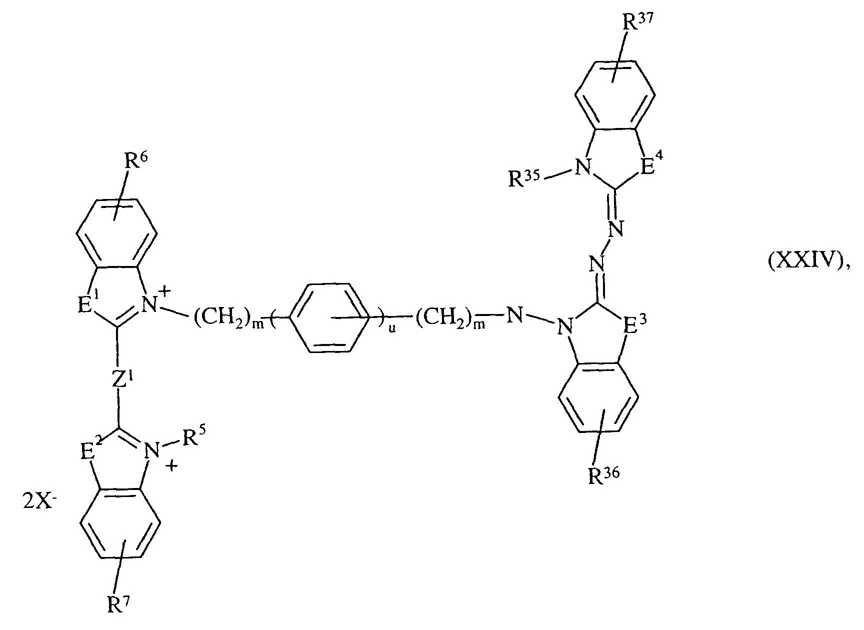 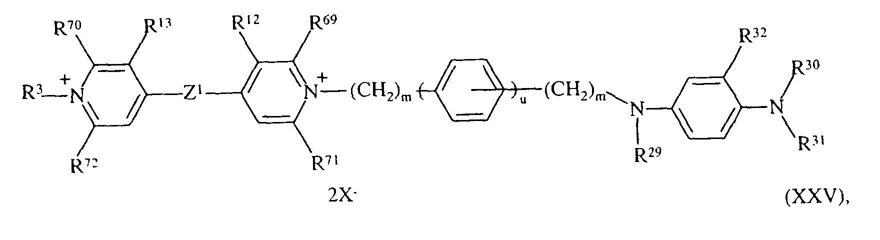 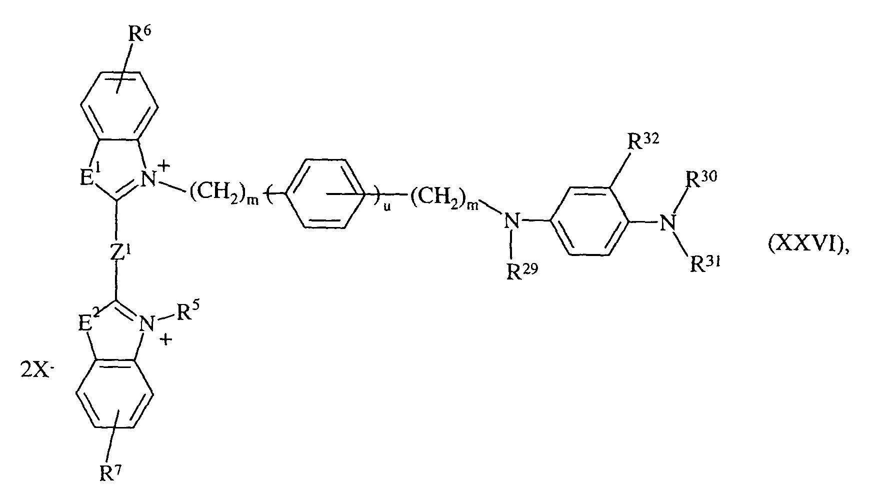 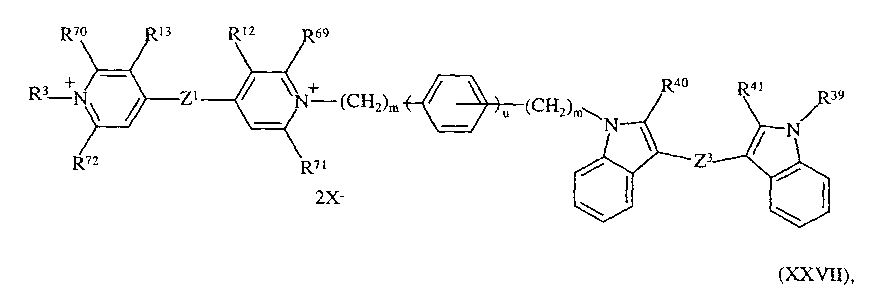 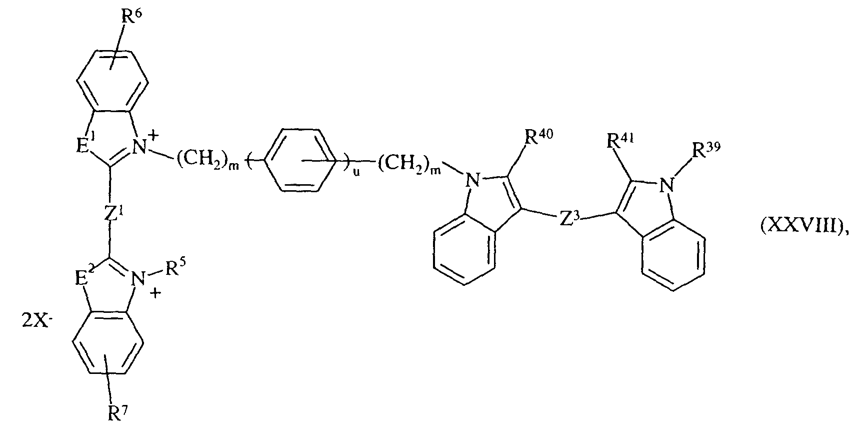 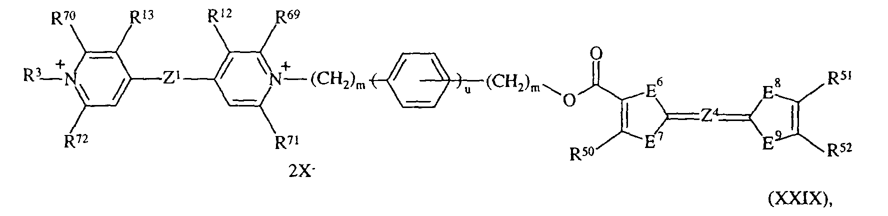 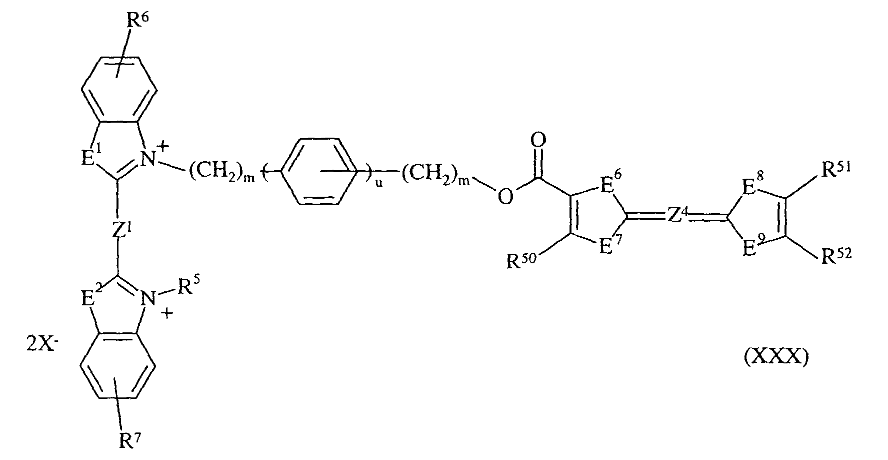 ou au moins une substance de formule (Ib) répondant à l'une des formules particulières 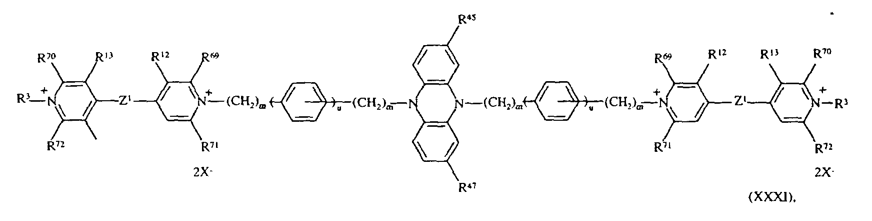 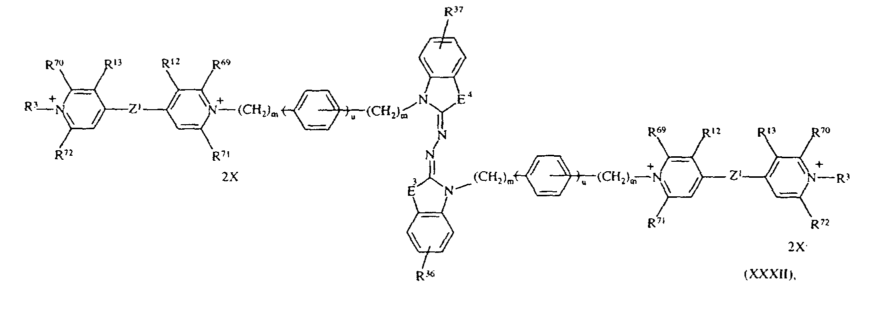 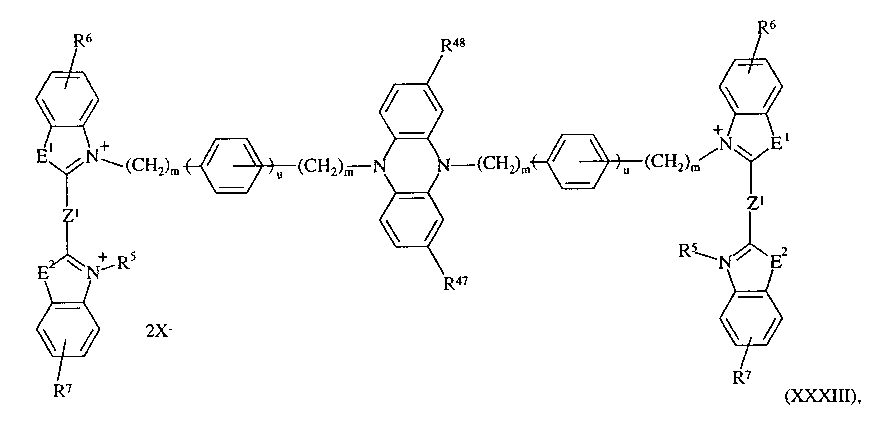 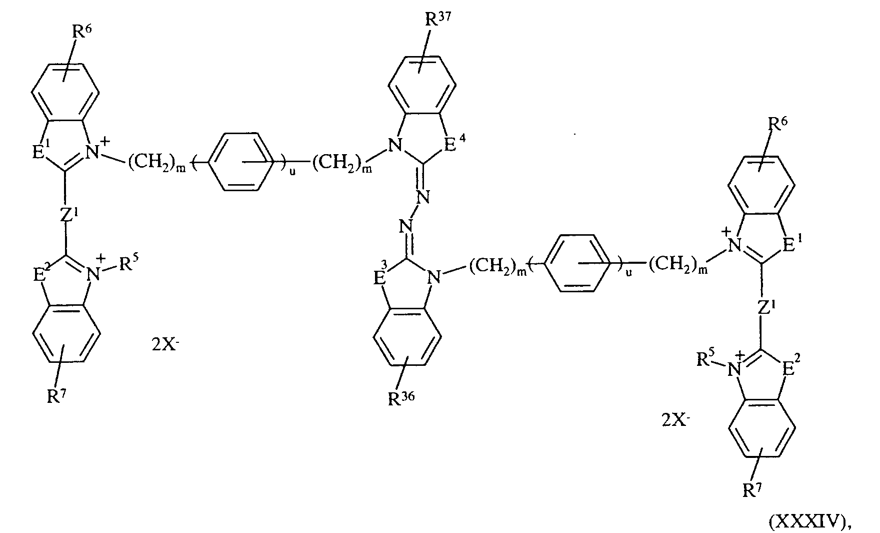 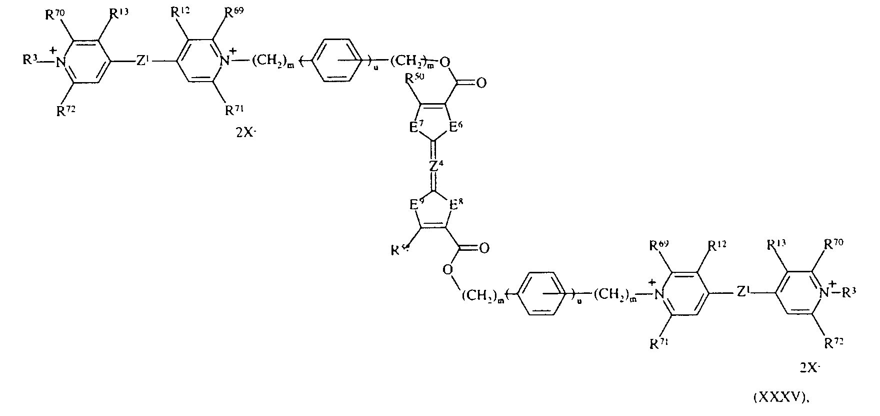 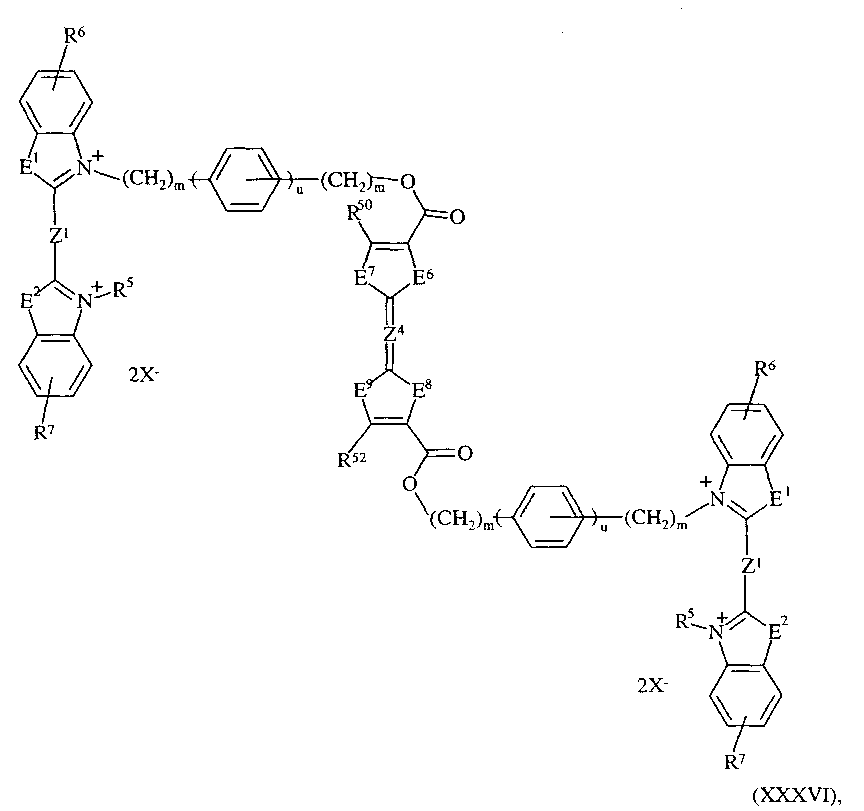 ou au moins une substance de formule (Ic) répondant à l'une des formules particulières 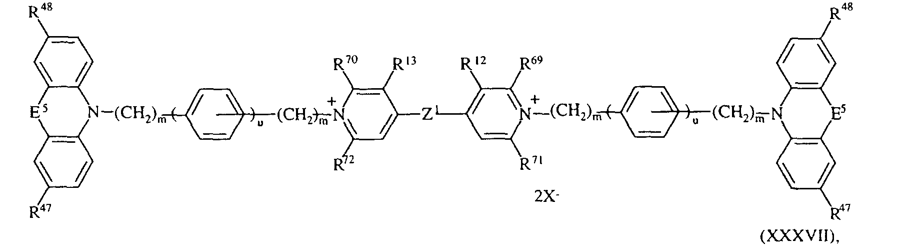 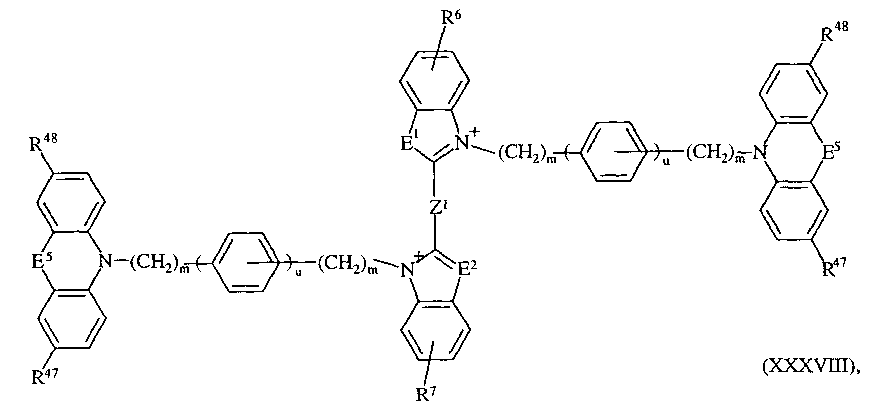 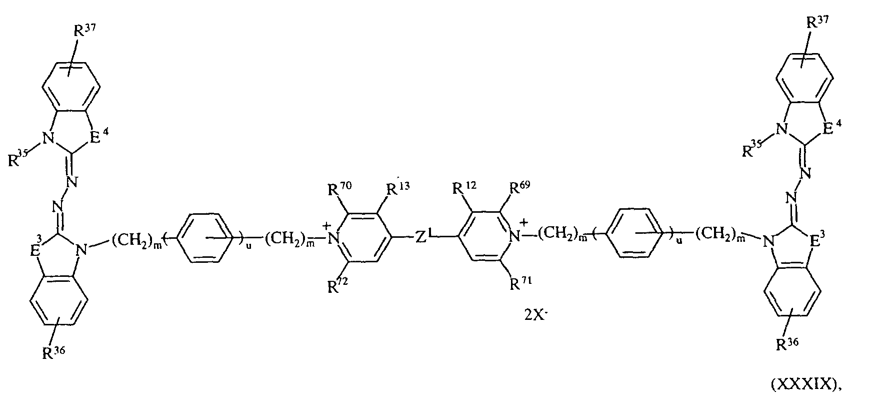 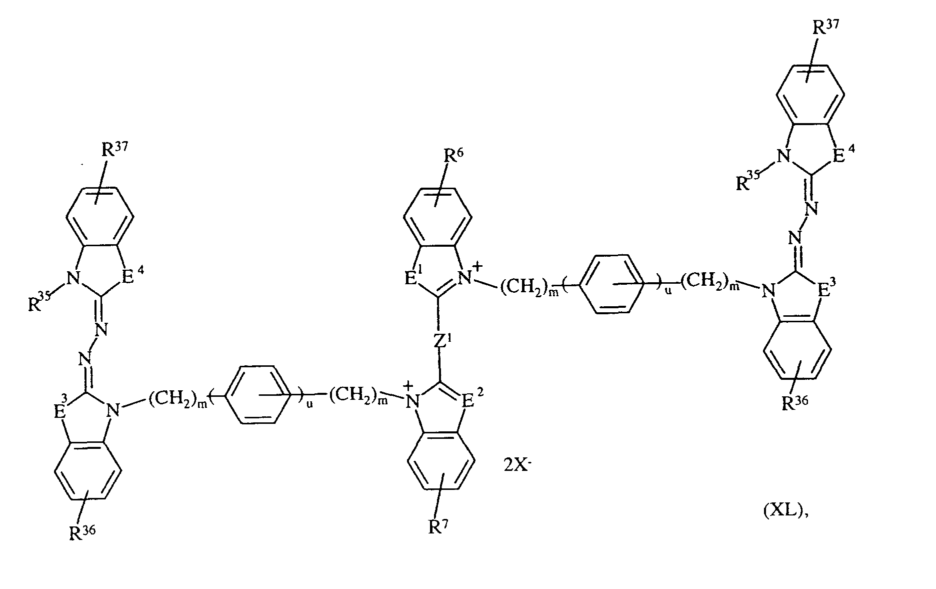 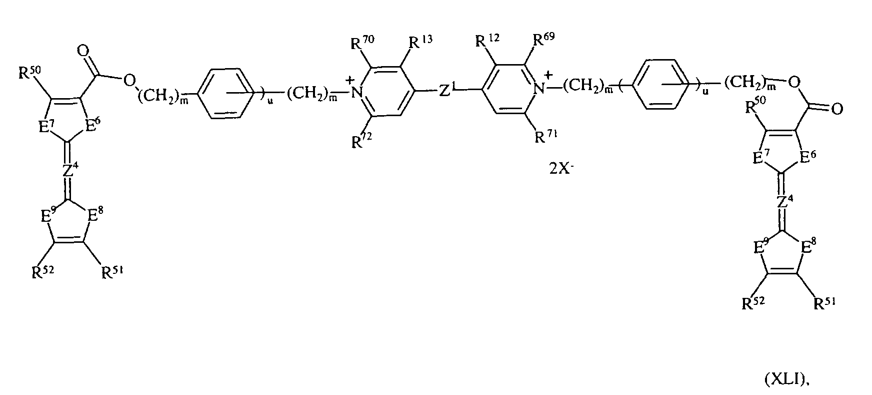 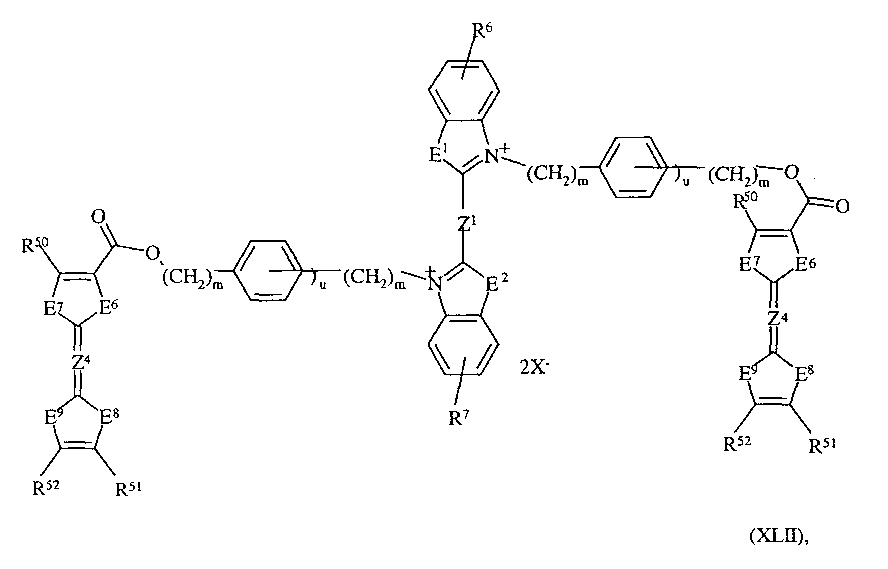 dans lesquelles
R³, R⁵, R³⁵ et R³⁹ représentent chacun, indépendamment les uns des autres, un groupe méthyle, éthyle, propyle, butyle, pentyle, hexyle ou benzyle,
R⁶, R⁷ et R³⁶, R³⁷ sont identiques par paires et représentent l'hydrogène, des groupes méthyle, méthoxy, le chlore, des groupes cyano ou méthoxycarbonyle,
R¹² et R¹³ représentent l'hydrogène ou bien, lorsque Z¹ représente une liaison directe, ils forment ensemble un pont -CH=CH-,
R⁶⁹ à R⁷² sont identiques et représentent l'hydrogène ou des groupes méthyle,
E¹ et E² sont identiques et représentent O ou S,
Z¹ représente une liaison directe ou -CH=CH-,
R³², R⁴⁷ et R⁴⁸ représentent l'hydrogène,
E³ à E⁵ représentent chacun, indépendamment les uns des autres, O, S ou NR⁵⁹, mais E³ et E⁴ sont identiques,
R²⁹ à R³¹ et R⁵⁹ représentent chacun, indépendamment les uns des autres, un groupe méthyle, éthyle, propyle, butyle, pentyle, hexyle ou benzyle, mais de préférence R²⁹ à R³¹ sont identiques,
R⁴⁰ et R⁴¹ sont identiques et représentent l'hydrogène, des groupes méthyle, éthyle. propyle, butyle ou phényle,
Z³ représente une liaison directe, -CH=CH- ou -N=N-,
R⁵⁰ à R⁵² représentent chacun, indépendamment les uns des autres, l'hydrogène, un groupe méthyle, méthoxy, le chlore, un groupe cyano, méthoxycarbonyle, éthoxycarbonyle ou phényle mais sont de préférence identiques,
E⁶ à E⁹, ayant des significations identiques, représentent S, Se ou NR⁵⁹,
Z⁴ représente une double liaison directe, un pont =CH-CH= ou =N-N=,
m est un nombre entier allant de 1 à 5,
u est égal à 0 ou 1 et
X⁻ représente un anion incolore inerte en oxydoréduction dans les conditions observées le graphisme 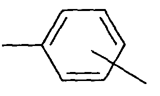 des formules ci-dessus indiquant une liaison en position o, m ou p, et
b) en tant que substance OX₂" au moins une substance de formule (CI) selon la revendication 6.

10. Liquide électrochrome contenant un système électrochrome selon au moins une des revendications 1 à 9 et au moins un solvant inerte.

11. Dispositif électrochrome contenant un liquide électrochrome selon la revendication 10.

12. Dispositif électrochrome selon la revendication 11, **caractérisé en ce qu'**il a la forme d'une cellule solaire, d'une vitre, d'un miroir, d'un toit transparent ou d'un affichage.

13. Dispositif électrochrome selon les revendications 11 et 12, **caractérisé en ce qu'**il consiste en deux plaques transparentes de verre ou de résine synthétique qui se font face, dont l'une, le cas échéant, est réfléchissante et le côté de l'autre faisant face à celles-ci, porte un revêtement conducteur de l'électricité, entre lesquelles le liquide électrochrome est contenu.
